(19) Europäisches Patentamt
European Patent Office
Office européen des brevets

(11) EP 1 541 700 B1

(12) EUROPEAN PATENT SPECIFICATION

(45) Date of publication and mention of the grant of the patent:
**29.02.2012 Bulletin 2012/09**

(21) Application number: **03792759.7**

(22) Date of filing: **21.08.2003**

(51) Int Cl.:
*C22B 1/16 (2006.01)* *C22B 1/243 (2006.01)*
*C22B 1/244 (2006.01)* *B01J 2/28 (2006.01)*

(86) International application number:
**PCT/JP2003/010549**

(87) International publication number:
**WO 2004/018716 (04.03.2004 Gazette 2004/10)**

# (54) METHOD OF GRANULATING SINTERING MATERIAL FOR IRON MANUFACTURING

VERFAHREN ZUR GRANULIERUNG VON SINTERMATERIAL FÜR DIE EISENHERSTELLUNG

PROCEDE DE GRANULATION DE MATERIAU DE FRITTAGE POUR LA FABRICATION DE FER

(84) Designated Contracting States:
**AT BE BG CH CY CZ DE DK EE ES FI FR GB GR HU IE IT LI LU MC NL PT RO SE SI SK TR**

(30) Priority:
**21.08.2002 JP 2002240979**
**21.08.2002 JP 2002240983**
**21.08.2002 JP 2002240984**
**21.08.2002 JP 2002241229**
**21.08.2002 JP 2002241234**

(43) Date of publication of application:
**15.06.2005 Bulletin 2005/24**

(73) Proprietors:
- **Nippon Steel Corporation**
  **Tokyo 100-8071 (JP)**
- **NIPPON SHOKUBAI CO., LTD.**
  **Osaka-shi, Osaka 541-0043 (JP)**

(72) Inventors:
- **OKADA, Tsutomu**
  **c/o NIPPON STEEL CORP. Tech. Devlp.**
  **Futtsu-shi, Chiba 293-8511 (JP)**
- **SATO, Takehiko**
  **c/o HOKKAI IRON & COKE**
  **Muroran-shi, Hokkaido 050-8550 (JP)**
- **SHINAGAWA, Kazuyuki**
  **c/o NIPPON STEEL CORP. YAWATA**
  **Kitakyushu-shi, Fukuoka 804-8501 (JP)**
- **HOSOTANI, Yohzoh**
  **c/o The Iron and Steel Inst.**
  **Chiyoda-ku, Tokyo 101-0048 (JP)**
- **KONO, Katsuyuki**
  **Shiga-gun, Shiga 520-0532 (JP)**
- **NAKAMOTO, Keiichi**
  **Takatsuki-shi, Osaka 569-0854 (JP)**
- **MIURA, Satoru**
  **Settsu-shi, Osaka 566-0001 (JP)**

(74) Representative: **Hart-Davis, Jason**
**Cabinet Beau de Loménie**
**158, rue de l'Université**
**75340 Paris Cedex 07 (FR)**

(56) References cited:
**JP-A- 6 271 949** **JP-A- 10 219 361**
**JP-A- 10 219 361** **JP-A- 10 280 058**
**JP-A- 10 317 069** **JP-A- 10 317 069**
**JP-A- 2000 178 662** **JP-A- 2002 088 418**
**US-A- 5 112 391** **US-B1- 6 384 126**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**Description**

TECHNICAL FIELD

The present invention relates to a method of granulation of a raw material for sinter for iron manufacturing. More specifically, the present invention relates to a method for granulating a raw material for sinter such as iron ore fines in a manufacturing process of sintered ore as raw materials for a blast furnace charge in a pig iron making process.

BACKGROUND ART

In general, a pig iron making process is carried out by charging sintered ore composed of iron ore, lump ore and pellets into a blast furnace together with cokes. This sintered ore is produced through processes in which raw material for sinter containing iron ore, flux and fuel and the like are subjected to pretreatments, and charged into a sintering machine up to a specific level so that a sintering bed is formed; and the surface layer thereof is then ignited and sintered. With respect to the sintering machine, normally, a Dwight-Lloyd type sintering machine is used. By drawing air from below the raw material for sinter to allow the air necessary for sintering to circulate as well as burning the fuel from the upper portion of the raw material for sinter downward, the raw material for sinter is sintered. Therefore, when the raw material for sinter contains much fine powders, clogging or the like occurs to cause degradation in the permeability and the subsequent delay in the burning rate in cokes that form the fuel, with the result that the production efficiency of the sintered ore is lowered.

Therefore, in order to improve the permeability in the sintering machine and, also, to increase the productivity, pretreatments, such as granulating the raw material for sinter to form pseudo-particles and the like are carried out. For example, iron ore flux, fuel and the like, which form rawmaterial for sinter, are mixed, and a small amount of water is added thereto, and this mixture is subjected to granulation processes such as stirring and mixing processes in a granulator. The pseudo-particles generally refer to particles consisting of core particles having a size of about not less than 1 mm to which fine particles having a size of not more than 0.5 mm are allowed to adhere. With respect to operations required upon such granulating processes, there are an operation for improving the pseudo-particle forming property to allow the fine particles to adhere to the core particle and an operation for making the pseudo-particles less susceptible to decay during transporting and sintering processes.

Moreover, in recent years, along with shortage of superior lump ore and deterioration of quality of ore fines, the granulation property of raw material for sinter has deteriorated further than before, therefore, there have been strong demands for higher techniques that effectively improve pseudo-particle forming property of the raw material for sinter.

Normally, the rawmaterial for sinter includes fine powders that have adhered thereto and have been mixed therein originally. For example, fine powders of iron ore and clay such as kaolin clay are adhere to iron ore that are blended as the raw material for sinter. Moreover, in the limestone, fine powders of the limestone (calcium carbonate) and the like are included. Furthermore, upon granulation of the raw material for sinter, dust which are generated in steel works, such as dust generated in a blast furnace, a sintering furnace and a converter and the like are used as mixture raw materials in some cases.

However, these fine powders normally have a low self-dispersing property to water and, when these are left as they are, it is not possible to greatly improve the pseudo-particle forming property. Since these fine powders tend to adhere to iron ore and the like or since fine powders tend to form an agglomerate, the amount of fine powders that can be dispersed in water is small among fine powders originally contained in the raw material for sinter, and because of capture of part of water by the agglomerate and the like, the amount of the fine powder dispersion solution consequently becomes smaller, with the result that the pseudo-particle forming process is not carried out sufficiently by the granulating process using water only. Moreover, in the case of a pseudo-granulated product (pseudo-particles) is obtained through the granulating process using water only, the adhering force of fine powders adhering to the circumference of the core particle is small to fail to provide sufficient effects for reducing the amount of fine powder contained in the raw material for sinter, consequently failing to provide sufficient effects for shortening the sintering time by improving the permeability in the sintering bed. Furthermore, the pseudo-particles wherein fine powder adhering to the circumference of the core particle has a small adhering force cause weakened strength in the sintered ore obtained by sintering the pseudo-granulatedproduct, and tend to generate fine powders, for example, upon crushing after the sintering process, with the result that return fine increase, the product yield decreases and the manufacturing efficiency decreases.

As described above, upon pretreatment of the raw material for sinter, the granulating process using only water fails to sufficiently improve the pseudo-particle forming property, and consequently fails to effectively reduce the fine powder contained in the raw material for sinter. For this reason, in order to improve the pseudo-particle forming property, there has been proposed a method of adding a granulation agent (binder) serving as a binding agent to the raw material for sinter. With respect to the granulation agent, for example, as shown in Seitetsu Kenkyu No.288 (1976), page 9, the burnt lime has been widely used. Presumably, the burnt lime is capable of accelerating the pseudo-particle forming in

the granulator and preventing decay of pseudo-particles during drying and heating treatments in the sintering process, thereby making it possible to maintain a flow of uniform breeze in the sintering layers.

Here, in general, the granulation agent such as burnt lime is comparatively expensive, and the burnt lime easily absorbs moisture with heat generation, therefore, the material which can be easily handled has been required. Moreover, since the burnt lime, currently utilized, fails to provide sufficient effects unless comparatively large amount is used, this also causes an increase in costs. At present, in the case of using the burnt lime, the operation is carried out with as small amount of use as possible. Furthermore, even when not less than 2 % by mass of the burnt lime is applied, the pseudo-particle forming property is no longer improved.

With respect to the conventional treatment technique for rawmaterial for sinter, Japanese Kokoku Publication Sho 63-20288, which relates to a method of manufacturing a raw material for sinter for a blast furnace by mixing with water coarse iron ore particles and fine iron ore particles, discloses amethodwherein iron ore fines is partly classified based upon a classifying point that is set in accordance with each of the species of materials, and a fine particle flux is preliminarily added and mixed in the classified fine iron ore particles, and formed pseudo-particle lumps. In this method, limestone having grain sizes of not more than 3 mm is added so as to carry out a granulating process. However, by the addition of such limestone, it is difficult to sufficiently add the fine particle portion that is effective to prevent decay. Thus, in order to provide sufficiently effective productivity in this method, it is necessary to use a comparatively large amount (normally 1 to 2%) of the granulation agent such as burnt lime. Moreover, this method also fails to sufficiently improve the productivity. In this point, there is a room of contrivance for improving the productivity of sintered ore.

Japanese Patent Publication No. 3058015 discloses a method of granulation of a raw material for sinter in which, after raw material for sinter except for powder fuel have been mixed and granulated by using a mixer having built-in high-speed rotary blades, the powder fuel is added to the mixture, and a granulating process is carried out by using a granulator having a rolling function. In this method, a comparatively large amount (normally, 1 to 2%) of the granulation agent such as burnt lime needs to be used for exhibiting the efficient productivity. Moreover, this method also fails to sufficiently improve the productivity. In this point, there is a room of contrivance for improving the productivity of sintered ore.

Here, with respect to another conventional method of granulation of the raw material for sinter, a treatment method that uses a polymer such as polyacrylic acid as the granulation agent for iron ore containing iron ore fines has been known, and this method has been described in Japanese Kokai Publication Sho 59-50129, Japanese Kokai Publication Sho 61-61630, Japanese Kohyo Publication Hei 10-502417 and WO02/066688. Although these methods have effects of improving the granulation property of the rawmaterial for sinter, there is still roomof contrivance. In other words, it is necessary to devise a method of further improving the productivity by suppressing the resulting granulated product (pseudo-particles) from decaying in moisture condensed layer or the like in the sintering bed (therefore, these methods have failed to provide sufficient improving effects for the productivity, and require a comparatively large amount of addition). Moreover, WO02/066688 discloses a combination system of sodium polyacrylate or the like and calcium carbonate or the like. Fine particles such as calcium carbonate have effects of suppressing the above-mentioned decay of the pseudo-particles upon sintering. However, these methods have failed to provide a devise for adding the above-mentioned fine particles in an appropriate method, for sufficiently exerting decay-suppressing effects and for improving the productivity (therefore, these methods have failed to provide sufficient improving effects for the productivity, and require a comparatively large amount of addition).

In other words, in the method like this in which a polymer such as polyacrylic acid and fine particles such as calcium carbonate are combined to carry out a granulation on iron ore containing iron ore fines, there is still a room of contrivance. Normally, each of the materials is supplied onto a conveyer belt from each of the hoppers. At this time, the respective materials are charged into a granulator without being sufficiently mixed, and subjected to a granulation with water. However, in the case where the fine particles are added through the above-mentioned method, the particle size of the fine particles is so fine that a strong aggregating force is exerted, with the result that a uniform dispersing to the whole of mixing materials (raw materials for sinter for iron manufacturing) is not sufficiently carried out, failing to provide sufficient effects of addition of the fine particles. Moreover, in the case of a method in which, after the fine particles have been added to most of the mixingmaterials and preliminarily mixed, water is added thereto and a granulation is carried out, the amount of residual mixing materials are too great in comparison with the fine particles, with the result that it becomes difficult to uniformly disperse the mixture and it is not possible to obtain sufficient effects of addition of the fine particles. In other words, in the case, among others, where fine particles having a function as a granulation agent are granulated with water together with other mixing materials, there is a room of contrivance for allowing the function of the fine particles as a granulation agent to be effectively exerted and for improving the productivity of sintered ore.

Moreover, WO02/066688 also discloses a treatment method in which fine particles such as calcium carbonate alone is used. However, in general, in the case where these fine particles are used as a decay preventive agent for preventing decay of the pseudo-particles obtained by granulating the raw material for sinter, during transporting processes as well as in the sintering bed, the fine particles have a comparatively high aggregating force, with the result that it becomes difficult to uniformly disperse the fine particles in the entire rawmaterial for sinter upon granulation, consequently,

the decay preventive effect of the pseudo-particles is exerted on only one portion of the material, and it is not possible to sufficiently granulate the entire material. Therefore, it is not possible to sufficiently improve the productivity effectively and, in this point, there is a room of contrivance for improvements. Further, it has been known that by carrying out the granulating processes with using a large amount of water, the granular index can be improved, however, since the use of a large amount of water gives adverse effects to the operation of the sintering machine due to an increase in permeation resistance in the moisture condensing band within the sintering bed, the moisture in the raw material for sinter after the granulating process is set to 6 to 8% normally.

Moreover, Japanese Kokai Publication Sho 52-117820 discloses a sintering method of a blast furnace material, wherein limestone fine powders, such as limestone, slaked lime, burnt lime and gypsum, serving as a binder, and water are added to fine-powder raw material for sinter to prepare raw pellets, and the raw pellets and the raw material for sinter are blended and sintered. However, in the case where the pellets are formed, the fine powders are contained in the pellets in a biased manner and they are not uniformly dispersed in the raw material for sinter, resulting in a failure in exerting the decay preventive effects on the pseudo-particles and the subsequent failure in sufficiently improving the productivity.

Japanese Kokai Publication Hei 3-183729, which relates to a manufacturing method of iron ore pellets using a cold bond method, discloses a manufacturing method of iron ore pellets in which iron ore fine powder and an agglomeration for fine ores made from an inorganic material containing calcium carbonate and the like are mixed and granulated. However, this method also has problems in that it fails to uniformly disperse the fine powder to sufficiently exert the effects thereof, and even when this method is applied to a manufacturing method of sintered ore, it is not possible to sufficiently improve the productivity.

Japanese Kokai Publication Hei 5-25556 discloses a method which adds processes, wherein lime powder and scale are mixed in a portion of raw material for sinter and a material formed by adding pulp mill waste water to slurryed dust is used as a binding agent so that granulating processes are preliminarily carried out. However, in the case where the dust are used as the decay preventive agent, since portions of the dust that have large grain sizes of, for example, not less than 250 mm remarkably inhibit the decay suppressing effect for fine portions of the dust, the productivity cannot be improved even when normal dust are added thereto. Moreover, even when dust are subjected to a fracturing process or the like so as to eliminate portions having great grain sizes of not less than 250 mm, since the dust dispersing property is not sufficient, it is not possible to obtain sufficient effects. Even when the pulp mill waste water (active component: lignin sulfonic acid) discloses in the patent document is added, since the effect for improving the dust dispersing property is low, it is not possible to sufficiently improve the productivity.

Incidentally, Japanese Kokai Publication Sho 57-25622 discloses a sintering operation method using pretreatments for materials to be granulated, in which, in sintering processes for various iron ore fines by the use of a sintering machine, after one or more species of limonite stone-based ore that contains crystal water in the material, iron ore fines mainly having a specific range of grain sizes, limestone, solvents and the like have been finely fractured to grain sizes of not more than 0.2 mm as a pretreatment for the materials, the mixing materials are mixed and granulated. However, even in this sintering operation method, upon granulating iron ore fines and the like in the manufacturing processes of sintered ore, there is a room of contrivance for improving the pseudo-particle forming property and for improving the productivity of sintered ore.

Moreover, with respect to the iron ore that are the main raw material for the raw material for sinter, there are various brands of iron ore having various components and characteristics in the world, and in general, iron ore of multiple brands are mixed in raw material for sinter as iron-containing material, and utilized. Among these iron ore, high quality hematite ore, which have been widely used as a raw material for sinter, is becoming to be exhausted in iron ore resources in the world, and it has been estimated that, when the present production continues, these ores will be completely dug from the main mines in the near future, and the use of iron ore of other substitution brands are demanded.

Under these circumstances, recently, public attention has been focused on Mara mamba ore as a main raw material for sinter in the future, which are inexpensive and abundant as resources in comparison with high quality hematite ore. The Mara mamba ore is a generic name of iron ore that are produced from Mara mamba iron ore deposit in Australia, and composed of Goethite ($Fe_2O_3$-$H_2O$) and Martite ($Fe_2O_3$ having a magnetite structure) as main iron minerals, and West Angelas ore shown in locality brand name (popular name) of Table 1, is its typical iron ore. Here, Table 1 shows the chemical components and the grain size of typical iron ore that have been used in Japan.

Table 1

| Country | Classification | Brand name | Chemical components (% by mass) | | | | Particle size distribution (% by mass) | |
|---|---|---|---|---|---|---|---|---|
| | | | T. Fe | $SiO_2$ | $Al_2O_3$ | CW | +2mm | -0.25mm |
| | Brockman | Hamersley | 63 | 4. 5 | 2. 6 | 2. 5 | 30 | 25 |

(continued)

| Country | Classification | Brand name | Chemical components (% by mass) | | | | Particle size distribution (% by mass) | |
|---|---|---|---|---|---|---|---|---|
| | | | T. Fe | $SiO_2$ | $Al_2O_3$ | CW | +2mm | -0.25mm |
| Australia | Brockman | Mt. Newman | .62 | 5. 6 | 2. 7 | 1. 9 | 25 | 24 |
| | Pisolite | Robe River | 57 | 5. 8 | 2. 6 | 8.0 | 40 | 13 |
| | Pisolite | Yandy | 59 | 4. 6 | 1. 2 | 7. 8 | 42 | 16 |
| | Mara mamba | West Angelas | 62 | 2. 8 | 2. 0 | 5. 5 | 32 | 36 |
| Brazil | Itapira | Riodose | 64 | 5.0 | 1. 1 | 1. 2 | 22 | 42 |
| | Itapira | Carajas | 67 | 0.6 | 0. 9 | 1. 2 | 37 | 18 |
| | PF | MBR. PF | 68 | 1.1 | 0.5 | 0.4 | 0 | 100 |
| India | Goa | Sesa goa | 63 | 3. 0 | 1. 9 | 3. 1 | 28 | 39 |
| | PF | Kudremukh PF | 67 | 4. 5 | 0.3 | 1. 0 | 0 | 100 |

As shown in Table 1, the chemical composition of Mara mamba ore has the following features: it has a crystal water content of about 5%, which is higher level in comparison with, for example, good-quality hematite main ore that are main ore produced from Brockman iron ore deposit in Australia, and a gangue component such as $SiO_2$ of about 3%, which is lower level in comparison with Pisolite ore that are known as ore having a high content of crystal water same as Mara mamba ore, and since it contains much iron ore fine powder having grain sizes of not more than 0.25 mm, it is inferior in the pseudo-particle forming property.

At present, a portion of Mara mamba iron ore deposit in Australia has been developed, and these ores are partially used as rawmaterial for sinter, however, conventionally, since these might cause degradation in the product yield in the sintering process as well as in the productivity because of inferior properties thereof, in particular, a poor granulation property, the amount of mixture is set to about not more than 10%, and these ores are mixed with good-quality hematite main ore produced from Brockman iron ore deposit as other ores, and utilized. However, along with exhaustion of good quality hematite main ore in Brockman ore deposit, Australia, which is one of main exporting countries of iron ore to Japan, has also come to shift its production not only to Pisolite ore deposit, but also to Mara mamba ore deposit, therefore, it is anticipated that Mara mamba ore become a major product of future Australia-made iron ore, and there have been strong demands for improvements of the granulation property of raw material for sinter that contain a large amount of Mara mamba ore.

In order to solve these problems, for example, Japanese Kokai Publication Sho 52-49905 discloses a pretreatment method of raw materials for sinter wherein in the case where minute ore with the smooth surface, such as porous iron ore or specular iron ore, are used as a part of raw material for sinter, prior to mixing and granulating by the use of a mixer in a normal granulating line, the minute ore with the smooth surface, such as porous iron ore or specular iron ore, are subjected to repective granulating processes suitable for the respective physical properties individually in different lines, and then mixed and granulated with other ores of general brands by a mixer, and Japanese Kokai Publication Sho 52-49906 discloses a pretreatment method of raw material for sinter wherein in the case where porous iron ore (for example, Australia-made Mara mamba ore) is used as a part of raw material for sinter, prior to mixing and granulating by the use of a mixer in a normal granulating line, the porous iron ore is subjected to a water-content treatment in a different line, and then mixed and granulated with other ores of general brands by a mixer. However, since the high crystal-water, low-gangue iron ore has a porous structure, and are inferior in granulation property to other general iron ore, it is effective to carry out granulating processes that are suitable for the respective physical properties individually in different lines as disclosed by Japanese Kokai Publication Sho 52-49905, however, these methods cause an increase in production costs, and also fail to greatly improve the strength of the entire granulated product. Moreover, although it is effective to carry out the water-content treatment as disclosed by JP Kokai Sho 52-49906, it is difficult to greatly improve the entire strength of the granulated product, with the result that it is not possible to suppress adverse effects caused by fine powder having a grain size of not more than 0.25 mm.

In addition, Japanese Kokai Publication Hei 5-9601 discloses a pretreatment method of raw material for sinter wherein the granulating line for mixing and granulating the raw material for sinter so as to carry out the pretreatment is divided into two systems of granulating lines, that is, one granulating line that has a low CaO component, and processes a group of main materials such as iron ore and cokes, and the other granulating line that has a high CaO component, and processes a group of the other materials such as other ore, fine ore powders with high crystal water, such as Mara

mamba ore, are used as the ore in the group of the other materials in the other granulating line, and the group of main materials and the group of the other materials are granulated by using burnt lime as a binder, with burnt lime being added to the two granulating lines in a separate manner. Inthismethod, however, since a flux vessel, a limestone vessel and a binder vessel are newly installed in addition to a plurality of ore vessels so as to carry out the pretreatment processes, very high facility investments, which correspond to investments for a new granulation facility, are required, failing to provide an effective method for greatly improving the pseudo-particle forming property.

Furthermore, Japanese Kohyo Publication Hei 10-502417 discloses a method of suppressing the absorption of water to the soft/porous iron ore by adding an additive, such as sugar or molasses and the like when using soft/porous iron ore as one portion of raw material for sinter. In this method, however, additives such as sugar or molasses to be added as the additives are used, it causes a great increase in production costs because such additives are generally expensive, as well as failing to improve the strength of the granulated product.

With respect to conventional examples of use of Mara mamba ore, a large amount of Mara mamba ore have been used by applying an HPS method (see Tetsu-to-Hagane, 73 (1987), p.62) in Fukuyama steel works in NKK; however, the HPS method, which has been disclosed in Japanese Kokai Publication Sho 63-14933, Japanese Kokai Publication Sho 63-149334, Japanese Kokai Publication Sho 63-149336 and the like, is a technique wherein a pan-pelletizer is used in the granulating process so that a large amount of fine ore powder having small grain sizes can be processed by adding a larger amount of burnt lime than before, and in this method, the granulation centered on the established drum mixer is not taken into consideration. Moreover, the introduction of the pan-pelletizer to the established sintering machine requires enormous plant investments and running costs, and these conventional methods of granulation of raw material for sinter are difficult to be applied to raw material for sinter which contain a large quantity of Mara mamba ore having a poor granulation property as compared with other ores, and have low practicecability, therefore, there is a room of contrivance for revising these methods to methods of granulation capable of improving the productivity of sintered ore.

Japanese Kokai Publication 2000-178662 discloses a method of granulation wherein material powders for iron manufacturing containing mill scales and blast furnace dust are processed by carboxymethyl cellulose salt and polyacrylate and the like having an number-average molecular weight of not less than 200,000. In this technique, however, there is a room of contrivance for improving the pseudo-particle forming property when the materials for iron manufacturing are processesd granulation together with dust and return fine. In other words, in the case where raw material for sinter containing dust and return fine are used in the sintering process, since the dust are mainly composed of, for example, fine particles, and also contain components, such as burnt lime, that give adverse effects to the dispersant, these cause degradation in the permeability in the sintering machine, and the subsequent reduction in the productivity in the sintering process. Therefore, in these cases, there is a room of contrivance for sufficiently reducing the adverse effects from the dust and for allowing the materials for iron manufacturing to be sufficiently pseudo-particle formed property with the dust, so as to improve the productivity of sintered ore.

US 6 384 126 discloses a binder formulation comprising colloidal silica and a polymeric binder, in particular polyvinyl alcohol. In certain embodiments, the measured viscosity of the aqueous solution of polymeric binder and silica had a viscosity of 0.013 to 0.016 Pa·s. The binder solutions iron ore pellets containing at least 96% dry weight of mineral concentrate or mineral fines, and 2% dry weight or less of polymer and silica.

JP-10-317069 discloses a granulation process with successive steps including a preliminary granulation of fines with a portion of a sintering material. The pregranulate thus obtained is blended or blended/granulated with remaining sintering material.

SUMMARY OF THE INVENTION

Having been developed in the above state of the art, the present invention has for its object to provide a method of granulation of raw materials for sinter for iron manufacturing, which is effectively used for granulating raw material for sinter for iron manufacturing, such as iron ore fines, in manufacturing sintered ore that form raw materials for a blast furnace charge in a pig iron making process, and makes it possible to sufficiently improve the productivity of a sintering machine.

The present inventors have made various researches on the method of granulating raw materials for sinter for iron manufacturing, and found that, when granulation is carried out by using fine particles having an average particle size of not more than 200 μm, it becomes possible to effectively improve the granulating property and also to prevent decay of pseudo-particles, and based upon this fact, have devised a method in which: after preliminarily diluting fine particles having an average particle size of not more than 200 μm in one portion of a solvent or raw materials for sinter, the resulting materials are added to the rest of the raw materials for sinter to carry out granulation so that the functions and effects of the fine particles are effectively exerted. Thus, they found that it becomes possible to sufficiently improve the productivity of the sintered ores.

In such granulation,

(1) by after diluting the fine particles with water to form a slurry having a viscosity of 0.005 to 10 Pa·s upon addition thereof, the resulting fine particles are added to raw materials for sinter to carry out granulation, the fine particles are dispersed in water that exists at the time of granulation, for example, added water to be used in the granulating process and moisture brought therein together with the materials, so that the water in which the fine particles are dispersed is allowed to have a higher aggregating force, and the fine particles having an average particle size of not more than 200 μm, which are allowed to serve as a binder for binding iron ores with iron-ore fine powder, are maintained with a sufficient amount thereof. Moreover, since the addition of such slurry makes it possible to add and mix the fine particles in the raw materials for sinter uniformly with high efficiency so that the fine particles, which serve as a granulation agent for pseudo-particle formation, the pseudo-particle forming property exerted by the granulation agent may be improved. With this arrangement, the strength of the pseudo-particles after the granulating process increases, the amount of fine particles after the granulating process may be drastically reduced. Moreover, it has been found that since the decay of the pseudo-particles in the sintering bed during the sintering process is reduced, the permeability of the sintering bed is improved and consequently the productivity of the sintering machine is improved. It has also been found that the strength of the sintered ores after the sintering process, the product yield and the like are improved. By forming the fine particles into a slurry, it has been found that the transporting efficiency of the fine particles serving as the granulation agent is improved and the addition line of the fine particles is simplified so that it becomes possible to carry out granulation at lower costs, and since the fine particles are handled as a liquid, it becomes possible to improve the workability and also to reduce adverse effects imposed on the environment.

(2) It has been found that the following functions and effects are obtained in accordance with the arrangement of the present invention in which: the fine particles are preliminarily granulated so as to have a target amount of moisture, that is, 13 to 60 % by mass with respect to % by mass in the dried state of the raw materials for sinter that comprise iron ores, and the resulting granulated product is then added to the rest of the raw materials for sinter to carry out granulation; thus, in the preliminary granulation, since the granulation can be carried out at a higher level of moisture content as compared with the moisture content after the granulating process of the entire raw materials for sinter for iron manufacturing (the moisture content at the time of sintering can be adjusted to a normal range by reducing the content of moisture to be added when mixed and granulated with the rest of the raw materials for sinter), it is possible to improve the granulating property, and also to reduce the amount of addition of the granulation agent as compared with that required upon granulating the entire raw materials for sinter for iron manufacturing in processes in which the resulting granulated product from the pre-granulation is added to the rest of the raw materials for sinter to carry out the granulation , and even when the granulation agent such as burnt lime is not used or the amount of addition of the granulation agent is reduced, it becomes possible to achieve sufficient productivity of the sintered ores.

(3) It has been found that the following functions and effects are obtained in accordance with the arrangement of the present invention in which: the fine particles are preliminary mixed with 0.3 to 10 % by mass of the raw materials for sinter such as flux for iron manufacturing and fuel, with respect to % by mass in the dried state, and the resulting mixture is then added to the rest of the raw materials for sinter to carry out granulation; thus, the dispersing ability of the fine particles that serve as a granulation-agent in the rawmaterials for sinter for iron manufacturing is improved, and by allowing the fine particles to effectively function, it becomes possible to greatly improve the productivity of the sintered ores. As the reasons why the conventional methods fail to provide sufficient functions and effects of the fine particles, it has been found that when the fine particles are granulated with water together with the raw materials for sinter, since, in a normal state, water is applied thereto before all the fine particles have been sufficiently dispersed in the raw materials for sinter, granulation is carried out before lumps of the fine particles have not been loosened or the fine particles mutually aggregate with one another, with the result that the fine particles are not sufficiently dispersed, failing to allow the fine particles to effectively function as the granulation agent. Then, they found that by preliminarily mixing the fine particles with one portion of the raw materials for sinter, one portion of the raw materials for sinter exerts functions as a diluting agent, thereby, for example, fine particles such as calcium carbonate become less susceptible to mutual aggregation, and when these are mixed with the rest of the raw materials for sinter for iron manufacturing to be granulated, the dispersing ability of the fine particles is improved so that the functions and effects of the fine particles as a granulation agent are effectively exerted.

Furthermore, the present inventors found that by carrying out the granulation process of the above-mentioned (1), (2) or (3), or by using these processes in combination, the productivity of the sintered ores is sufficiently improved and the above-mentioned problems are successfully solved. Thus, the present invention has been achieved.

As the process in which the fine particles having an average particle size of not more than 200 μm are preliminarily diluted in one portion of the solvent or the raw materials for sinter, and the resultant is then added to the rest of the raw materials for sinter to carry out granulation, the process of this type itself forms a technical feature of the present invention that is superior to conventional techniques. But in addition to this feature, the present invention comprises at least one

process selected from the group consisting of the above-mentioned processes of (1) to (3) as a technical feature, and is further improved in its functions and effects.

That is, the present invention relates to a method of granulation of a sintering material for iron manufacturing containing powder iron ore comprising a process for carrying out granulation by preliminary diluting fine particles having an average particle size of not more than 200 μm to one portion of a solvent or a sintering material and adding the resulting material to the rest of the sintering material,
wherein said method of granulation further comprises the addition of a polymer having a weight average molecular weight of 1, 000 to 100, 000 and having at least one species of group selected from the group consisting of a carboxyl group, a sulfonic acid group and salts thereof,
wherein said granulation is at least one process selected from the group consisting of the following (1), (2) and (3) ;

(1) a process for carrying out granulation which comprises mixing said fine particles and water so as to form a slurry having a viscosity of 0.005 to 10 Pa·s, and then adding the slurry to the sintering material,
(2) a process for carrying out granulation which comprises preliminarily granulating said fine particles with 13 to 60 % by mass amount of a sintering material comprising iron ore as an essential component as measured in the dried state, and then adding said granulated product to the rest of the sintering material, and
(3) a process for carrying out granulation which comprises preliminary mixing said fine particles with 0.3 to 10 % by mass amount of the sintering material as measured in the dried state.

DISCLOSURE OF THE INVENTION

The present invention is now described in detail.

In the method of granulation of raw material for sinter for iron manufacturing of the present invention, the process in which the fine particles are added to the rest of the raw material for sinter, after having been diluted, so that a granulating process is carried out, may comprise at least one granulating process selected from the group consisting of the above-mentioned (1), (2) and (3), and may comprise only one process, or may comprise all the processes. In the case where a plurality of processes are contained, with respect to the sequence in which the respective processes are carried out, another process maybe carried out after completion of one process, or a plurality of processes may be carried out in parallel with one another. In the case where the processes are carried out in parallel with one another, part of the respective processes may be carried out in an overlapping manner, or the processes may be carried out completely at the same time.

With respect to the fine particles having an average particle size of not more than 200 μm, any particles having such an average particle size may be used, and specific examples thereof comprise; calcium carbonate, kaolinclay, silica, silica sand, talc, bentonite, dolomite powder, dolomite plaster, magnesium carbonate, silica fume, anhydrous gypsum, sericite, montmorillonite, pumice, shirasu balloon, diatomaceous earth, firing diatomaceous earth, silicon carbide, yellow iron oxide, strontium carbonate, barium carbonate, graphite, wallastonite, crecasfere, carbon black, red iron oxide, grinding serpentine, activated clay, portland cement, grinding silica sand, magnesium oxide, firing vermiculite, dust generated from processes except for those in steel works, which specifically comprise dust such as fly ash and heavy oil ash, generated from the thermal power plant, iron concentrate from copper converter slag and copper slag generated from the copper smelting process, and red mud discharged by alumina production processes, in addition to flue-gas desulfurization gypsum and asbestos dust; and one or two or more species of these may be used. Preferably, at least one species selected from the group consisting of calcium carbonate, fly ash, kaolinclay, silica, talc, bentonite, silica fume and anhydrous gypsum is used. More preferably, at least one species selected from the group consisting of calcium carbonate, fly ash, kaolin clay, silica, talc, and silica fume is used. Still more preferably, calcium carbonate, fly ash and silica fume are used. The average particle size of these fine particles is preferably set in a range from not less than 0.01μ m and not more than 100 μm. More preferably, it is set in a range from not less than 0.02 μm and not more than 50 μm. Most preferably, it is set in a range from not less than 0.1 μm and not more than 20 μm. The average particle size exceeding 200 μm makes the aggregating force in the fine particles smaller, with the result that, in relation to the ratio of the fine particles that exert decay preventive effects on pseudo-p'articles in the sintering bed and the like, the ratio of particles having large particle sizes to which the fine particles adhere increases, thereby making it difficult to provide the effects of addition. In contrast, the average particle size of less than 0.01 μm makes the aggregating force among the fine particles greater, and the fine particles become difficult to disperse in the materials for iron manufacturing, thereby making it difficult to provide the effects of addition. Here, with respect to fine iron ore fines such as dust, blast-furnace slag, converter slag and pellet feeds, generated from steel works as well as iron ore that has been grain-adjusted by fracturing or classifying iron ore fines and waste toner, these materials tend to fail to provide the improving effects of the productivity. Although the reasons for this have not sufficiently clarified, it is presumed this is because of low dispersing property of these fine powders. However, as long as the average particle size is in the above-mentioned range, even these fine particles may be used as the fine particles that are essential components of the present invention, by using

a polymer having at least one species of group selected from the group consisting of the following carboxyl groups, sulfonic acid groups and salts thereof, in combination.

The above-mentioned raw material for sinter refer to iron ore (iron ore fines), flux for iron manufacturing, fuel and the like, and the flux for iron manufacturing refer to raw material for sinter for iron manufacturing to be sintered together with the iron ore, fuel and the like, and preferable examples thereof comprise; limestone, dolomite, serpentine, silica sand, dust, slag and return fine. With respect to the fuel, cokes (cokes breeze), anthracite and the like are suitablyused. With respect to the iron ore and the like, Mara mamba iron ore fines, Mt. Newman iron ores, Robe River iron ores, Carajas iron ores, Hamersley iron ores, Kudremukh PF (pellet feed), Riodose iron ores, Yandy iron ores, Goa iron ore fines and the like are listed.

In the present invention, pellet materials, such as iron ore (pellet feed), dust and carbon material, may also be used. With respect to the manufacturing process of pellets, after iron ore, dust and carbon material, which form materials, have been mixed, the resulting mixture is granulated while adjusting moisture by using a granulator such as a Pan Pelletizer, and those functions required for the granulating process are that the strength is high in the state of raw pellets prior to drying, and that the material is less susceptible to destruction to be powder during drying and transporting processes. In general, the pellets refer to spherical particles having sizes in a range from 6.0 to 50 mm, which are formed by aggregated particles, each having a size of not more than 1.0 mm, and the pellets are allowed to form blast furnace material, raw material for sinter, converter material and the like. Moreover, with respect to the materials and the like of the present invention, one or two or more species of these may be used.

The above-mentioned one portion of the raw material for sinter refers to one portion with respect to all the raw material for sinter to be used in the present invention, and the rest of the raw material for sinter refer to at least raw material for sinter except for the rawmaterial for sinter used for diluting the fine particles, and may be all the raw material for sinter except for the raw material for sinter used for diluting the fine particles, or may be one portion thereof. With respect to the raw material for sinter of the present invention, dried or moisturized material can be used, and normally, moisturized material is used. Moreover, with respect to the solvent, any solvent may be appropriately used as long as it does not cause problems such as degradation in the granulation property in the granulation of the raw material for sinter and degradation in the productivity of sintered ore, and specific examples thereof comprise water, methanol, ethanol, ethylene glycol, heavy oil, toluene and other organic solvents and the like. Among these, water is preferably used.

In the case where, after preliminarily diluting fine particles having an average particle size of not more than 200 μm in one portion of a solvent or raw material for sinter, the resulting material is added to the rest of the raw material for sinter, the addition may be carried out at one time, or may be carried out several times in a divided manner. Moreover, the adding processes may be carried out continuously.

In the above-mentioned granulation, the granulation is preferably carried out by using a device such as a pan pelletizer, a centrifugal rolling type pelletizer, a drum mixer, a mixer with high speed agitator, and among these, a drum mixer, a mixer with high speed agitator are more preferably used.

In the method of granulation of raw material for sinter for iron manufacturing of the present invention, a polymer having at least one species of group selected from the group consisting of a carboxyl group, a sulfonic acid group and salts thereof is used, and the addition of such a polymer having at least one species of group selected from the group consisting of a carboxyl group, a sulfonic acid group and salts thereof forms the embodiment of the present invention. When a granulating operation is carried out by using such a polymer as the granulation agent, the Productivity is remarkably improved by the synergistic effects of the improvement of the granulation property and suppression of decay of pseudo-particles during the sintering process, caused by fine particles having an average particle size of not more than 200 μm. Moreover, since the polymer also exerts an effect for dispersing the fine particles, the fine particles are effectively dispersed in the raw material for sinter. Thus, the polymer also synergistically improve the above- mentioned effect for suppressing decay of the pseudo-particles, exerted by the fine particles. One or two or more species of the polymer compounds may be used.

With respect to the amount of use of the above-mentioned polymer, it is appropriately set in accordance with the granulation property of the raw material for sinter, the species of the polymer and the species of a device to be used, and the amount of the polymer used is preferably not less than 0.001 % by mass and not more than 2 % by mass with respect to 100 % by mass of the entire rawmaterial for sinter for ironmanufacturing. In other words, in the present invention, 0.001 to 2 % by mass of the polymer is preferably added to the rawmaterial for sinter. The added amount of less than 0.001 % by mass tends to fail to sufficiently improve the granulation property. While the amount exceeding 2 % by mass may make the added amount of the polymer to the raw material for sinter for iron manufacturing so large that the problems such as the generation of large lump of the raw material for sinter for iron manufacturing may be caused, resulting in difficulty in sintering. More preferably, the amount of the polymer compound used is not less than 0.003 % by mass and not more than 1 % by mass.

In the present invention, another granulation agent may be used, and examples thereof comprise burnt lime, bentonite, ligninsulfites (pulpmillwastewater), starch, sugar, molasses, water glass, cement, gelatin, corn starch and the like and one or two or more species of these may be used.

The application modes of the polymer and other granulation agents are appropriately set based upon the above-mentioned processes (1) to (3), and the fine particles may be added upon diluting the fine particles in one portion of the solvent or the raw material for sinter, or may be added upon carrying out a granulation by adding the diluted fine particles to the rest of the raw material for sinter. Moreover, with respect to the addition modes of the polymer and other granulation agents, the addition may be carried out at one time, or may be carried out several times in a divided manner.

In the present invention, it is only required to comprise processes for carrying out at least one species of granulation selected from the group consisting of the above-mentioned (1), (2) and (3). Therefore, in both cases using a single process and a plurality of processes, the total amount of the fine particles having an average particle size of not more than 200 μm is preferably not less than 0.05 % by mass and not more than 10 % by mass with respect to the entire raw material for sinter. When the total addition amount of the fine particles having an average particle size of not more than 200 μm is less than 0.05 % by mass, the improvement of the pseudo-particle forming property and the effect for suppressing decay of the pseudo-particles become insufficient. Moreover, when the total addition amount of the fine particles having an average particle size of not more than 200 μm exceeds 10 % by mass with respect to the entire rawmaterial for sinter, all the fine particles do not effectively function, with the result that the pseudo-particle forming property deteriorates. Consequently, the fine particles which are not responsible for the granulation inhibit air permeability, and the productivity of the sintering machine becomes poor.

Meanwhile, when a polymer containing at least one species of group selected from the group consisting of a carboxyl group, a sulfonic acid group and salts thereof is added, iron ore fines, flux such as fine dust and slag, having an average particle size of not more than 200 μm may be used as the fine particles having an average particle size of not more than 200 μm. Therefore, the total addition amount of the fine particles having an average particle size of not more than 200 μm is preferably not less than 0.05 % by mass and not more than 80 % by mass. When the total addition amount of the fine particles having an average particle size of not more than 200 μm is less than 0.05 % by mass, the improvement of the pseudo-particle forming property and the effect for the suppressing decay of the pseudo-particles become insufficient. Moreover, when the total addition amount of the fine particles having an average particle size of not more than 200 μm exceeds 80 % by mass, a large amount of polymer is required to be added. Thus, the cost drastically rises and it is economically undesirable.

When said polymer is added, the addition maybe carried out at a desired timing. However, in the processes of the above-mentioned (1) and (2), the fine particles are preferably diluted in the presence of the polymer. In that case, any one of the following methods may be preferably used: a method comprising adding said polymer in diluting the fine particles, a method which comprises preliminarily adding said polymer to the fine particles to be diluted, and a method which comprises preliminarily adding the polymer to one portion of the solvent and/or the raw material for sinter to dilute said fine particles. On the other hand, in the case of the process (3), it is preferable to carry out the addition after diluting the fine particles. For example, the polymer is preferably added in granulating the mixture in which the fine particles have been diluted and the rest of the material for iron manufacturing.

When the polymer is not added, a preferable mode of the present invention comprises adding 0.05 to 10 % by mass, more preferably not less than 0.1% by mass, and still more preferably not less than 0.2 % by massof fine particles having an average particle size of not more than 200 μm with respect to the raw material for sinter. When the polymer is added, 0.05 to 80 % by mass of fine particles having an average particle size of not more than 200 μm is preferably added, more preferably not less than 0.1% by mass, and still more preferably not less than 0.2 % by mass with respect to the raw material for sinter.

As regarding the addition amount of water to the raw material for sinter, the total amount of water to be added upon granulating and water contained in the materials to be brought together therewith is preferably less than 4 % by mass and not more than 15 % by mass with respect to 100 % by mass of the raw material for sinter. More preferably, it is not less than 5 % by mass and not more than 12 % by mass.

In the above-mentioned process (1), the fine particles and water are mixed so as to form a slurry having a viscosity of 0.005 to 10 Pa·s. Then, this slurry is added to the rawmaterial for sinter so as to carry out granulation.

In the above expression that the viscosity of a slurry is 0.005 to 10 Pa·s upon addition of the slurry, the viscosity refers to a viscosity value immediately before the addition of the slurry to the raw material for sinter.

The viscosity of the slurry is 0.005 to 10 Pa·s, and the viscosity of less than 0.005 Pa·s causes an increased amount of water to be added together upon addition of a suitable amount of fine particles for the granulation. Thereby, the amount of water may not be sufficiently adjusted, or the fine particles tend to be easily precipitated to result in deterioration of the slurry stability. The viscosity exceeding 10 Pa·s causes a failure in sufficiently mixing the slurry with the raw material for sinter upon granulation, resulting in a biased state in the granular index and generation of lumps in the fine particles and the raw material for sinter. Moreover, this also causes limitations to the addition method, because of difficulty in atomizing process using an atomizer and the like, and requires a large-scale facility for storing and adding the high-viscosity aqueous solution. As the result, workability may be adversely affected, or the improvement effect of the production efficiency may not be sufficiently exerted. Preferably, the viscosity is not less than 0.01 Pa·s and not more than 5 Pa·s. More preferably, it is not less than 0.05 Pa·s and not more than 3 Pa·s. It is more advantageous to adjust

the slurry at a high concentration within a range that the viscosity does not become too high, nor the stability is not impaired, because the capacity of the slurry tank can be made small.

The content of the fine particles in the slurry is preferably not less than 0.01 % by mass and not more than 90 % by mass, and more preferably not more than 85 % by mass with respect to 100 % by mass of the slurry. It is preferably not less than 0.01 % by mass, and more preferably not less than 0.03 % by mass. An increased amount of the fine particles in the slurry tends to make the fine particles susceptible to aggregation to result in an increase of the viscosity. Thus, when only the fine particles are dispersed in water to prepare a slurry, it is not possible to prepare a slurry with so much high concentration. But, by allowing the slurry to contain a polymer having at least one species of group selected from the group consisting of a carboxyl group, a sulfonic acid group and salts thereof, it becomes possible to prepare a highly-concentrated slurry. By adding such slurry containing the polymer to the raw material for sinter, the polymer disentangles the aggregate of fine powder contained in the rawmaterial for sinter to release water captured in the aggregate. Thereby, water is effectively used, and the fine powder that has been aggregated is dispersed in water so that larger particles are allowed to adhere with one another more firmly. As the result, the granulationproperty is improved. The fine particles contained in the slurry and desirably dispersed therein, also devote to this function. Moreover, since the fine particles contained in the slurry are added to the rawmaterial for sinter in a desirably dispersed state, easily mixed in the raw material for sinter uniformly. Therefore, the suppressing effects for decay of the resulting pseudo-particles in the sintering bed and the like becomes easily exerted. These effects remarkably improve the productivity of the sintering machine.

The content of the polymer in the above-mentioned slurry may be appropriately selected in accordance with the pseudo-particle forming property of the raw material for sinter, the addition amount of water, the species of the fine particles and the polymer to be used and the species of a granulator to be used. The content is preferably not less than 0.01 % by mass and not more than 30 % by mass with respect to 100 % by mass of the slurry. If it is less than 0.01 % by mass, sufficient effects of the addition of the polymer may not be exerted to result in a failure in providing the slurry with a sufficiently high concentration. If it exceeds 30 % by mass, the slurry viscosity is increased, the slurry is not sufficiently mixed with the raw material for sinter upon granulating, resulted in a biased state in the granular index, and consequently, lumps may be generated in the fine particles and the raw material for sinter. More preferably, the content is not less than 0.1 % by mass and not more than 20 % by mass.

The amount to be used of the polymer for the above-mentioned fine particles may be appropriately selected in accordance with the species of the polymer to be used, fine particles and the like. It is preferably not less than 0.003 % by mass and not more than 1000 % by mass with respect to the 100 % by mass of the fine particles. More preferably, it is not less than 0.1 % by mass and not more than 100 % by mass.

In the above-mentioned preparation method, the slurry can be prepared if the fine particles and water may be mixed so as to form a slurry in a range between 0.005 Pa·s and 10 Pa·s. Preferred is a method which comprises mixing water and the fine particles, prior to the addition to the raw material for sinter, and optionally adding a polymer and other granulation agents. When the slurry contains water, fine particles and a polymer, it is preferable to add and mix the fine particles and the polymer in water simultaneously or to add and mix either of these components in water earlier than the other, and after the fine particles and the polymer have been mixed with each other, the resulting mixture may be mixed with water. As the mixing method, mixers such as a homomixer or mills such as a ball mill are preferably used.

As an addition method of the above-mentioned slurry to the raw material for sinter, the slurry may be mixed in the raw material for sinter, before the start of granulation, or it may be sprayed (atomized) over the raw material for sinter upon granulating. Moreover, upon adding to the raw material for sinter, the slurry and the rest of water to be added may be added in a separate manner, or the slurry and the rest of water may be preliminarily mixed with each other, and then added to the raw material for sinter. For convenience of operations, the concentration of the fine particles in the slurry is adjusted to a low level, and the slurry and the fine particles may be then combined with each other and used so as to set the added amount of the fine particles to a desired amount.

The addition amount of the slurry is preferably not less than 0.01 % by mass and not more than 30 % by mass with respect to 100 % by mass of the raw material for sinter. The amount of less than 0.01 % by mass tends to fail to sufficiently provide the effect for preventing decay of the pseudo-particles in the sinteringbed, and also to fail to sufficiently provide the effect for accelerating the pseudo-particle forming property, as well as fail to reduce the quantity of fine particles in the granulated product. The amount exceeding 30 % by mass causes an increase of wastes such as slag, and also causes an increase in the amount of fine particles in the granulated product. Consequently, it is not possible to sufficiently improve air permeability in the sintering bed, resulting in a reduction in the productivity of the sintering machine. Preferably, the addition amount is not less than 0.1 % by mass and not more than 20 % by mass.

In the above-mentioned process (2), after carrying out selective granulation process in which the fine particles are preliminarily subjected to a granulation process with 13 to 60 % by mass of the raw material for sinter composed of iron ore as an essential component in terms of % by mass when dried, the granulated product is added to the rest of the raw material for sinter to granulate.

The term "selective" in the selective granulation process refers to appropriately select one portion of the raw

material for sinter so that the material is effectively granulated, for example, in themethodof granulating the rawmaterial for sinter. When a plurality of materials is used as the raw material for sinter, materials to be preliminarily granulated are selected from the materials to subject them to selective granulation process.

As the raw material for sinter to be granulated in the above-mentioned selectivegranulation process,itis preferable to select the following materials: (1) those materials that are difficult to become pseudo-particles, (2) those materials capable of causing decay of pseudo-particles, and (3) those materials containing a component capable of causing a reduction in the burning rate upon sintering. The above-mentioned raw material for sinter, for example, comprise those materials containing a great amount of fine powder having a particle size of not more than 1 mm, those materials having a porous structure, those materials having a component having a great amount of crystal water and those materials having a great amount of aluminum component. Here, when raw material for sinter are selectively extracted based upon particle sizes, a classifying method using a sieve or the like is desirably used.

The raw material for sinter to be granulated in the above-mentioned selective granulation process are 13 to 60 % by mass of the entire raw material for sinter. The amount of less than 13 % by mass and the amount exceeding 60 % by mass fail to sufficiently improve the granular index upon granulating the entire raw material for sinter. More preferably, the amount is not less than 20 % by mass and not more than 40 % by mass.

As modes using the above-mentioned fine particles, the particles may be added to the raw material for sinter at one time in the selective granulation process, or may be added in a divided manner. Moreover, in the selective granulation process, the above-mentioned other granulation process agents may be used in combination. The amount to be used of the fine particles is preferably not less than 0.05 part by weight and not more than 10 parts by weight, with respect to 100 parts by weight of the rawmaterial for sinter in the selective granulation process. More preferably, it is not less than 0.2 part by weight and not more than 5 parts by weight.

In the above-mentioned selective granulation process, when the granulation is carried out by using a polymer having at least one species of group selected from the group consisting of a carboxyl group, a sulfonic acid group and salts thereof, as the fine particles having an average particle size of not more than 200 μm, it is possible to use flux such as fine iron ore fines having particle sizes of not more than 200 μm, dust and slag generated in steel works, and the like. In this case, the amount to be used of the fine particles is preferably not less than 0.05 part by weight and not more than 80 parts by weight, in 100 parts by weight of the raw material for sinter in the selective granulation process. More preferably, it is not less than 0.2 part by weight and not more than 70 parts by weight. Moreover, the amount to be used of the polymer is preferably set within a range that does not exceed the above-mentioned amount of addition with respect to 100 parts by weight of the entire raw material for sinter for iron manufacturing.

As GI index of the granulated product obtained through the above-mentioned selective granulation process, the GI index of the granulated product having a particle size of not more than 0.25 mm is preferably not less than 50, and more preferably not less than 80. In other words, it is preferable that after the GI index of the granulatedproduct obtained from the selective granulation process has been set within the above-mentioned range, the granulated product is granulated together with the rest of the raw material for sinter.

The above-mentioned GI index is one of evaluation methods disclosed in Seitetsu Kenkyu No.288 (1976), page 9, and indicates the rate of fine particles adhering to the circumference of a core particle. The greater this rate, the more superior the effect for allowing the fine powder particles to adhere to the circumference of the core particle, and the production ef ficiency of the sintering machine can be improved. The measurements of the GI index are as follows: pseudo-particles obtained through a granulating operation are dried for one hour at 80°C, and classified by using a sieve so that the grain size (pseudo-grain size) and the average particle size are found, and in accordance with a method described in Seitetsu Kenkyu No.288 (1976), page 9, calculations are carried out based upon the following equation to find the corresponding value.

GI index = {(ratio of materials of not more than 0.25 mm prior to the granulation - ratio of materials of not more than 0.25 mm after the granulation) / (ratio of materials of not more than 0.25 mm prior to the granulation)} x 100

The above-mentioned process (2) comprises, after the selective granulation process, a process which comprises granulating the granulated product (selected granulated product) obtained through the process together with the rest of the raw material for sinter. Therefore, granulation may be completed after the selective granulation process has been finished, or the pseudo-particle formation may be carried out in the process which comprises granulating the granulatedproduct together with the rest of the raw material for sinter. In the process in which the selected granulated product is further granulated together with the rest of the rawmaterial for sinter, the entire portion of the rest of the raw material for sinter for ironmanufacturingmaybe added and granulated, or one portion of the rest of the raw material for sinter for iron manufacturing may be added and granulated, and this process may be repeated several times.

When the selected granulated product and the rest of the raw material for sinter is granulated, the granulation may be carried out by the same method of granulation as the selective granulation process, or may be carried out by a method different from the selective granulation process, or a mixing process may be carried out in an attempt only to make the materials uniform. Preferably the granulation is carried out by a method different from the selective granulation process, for example, a granulation using a granulator different from that used in the selective granulation process.

Upon carrying out granulation in the process which comprises granulating the above-mentioned selected granulated product and the rest of the raw material for sinter, the granulation may be carried out by using a granulation agent, ormaybe carried out without using a granulation agent. However, it is more preferable to use a granulation agent, and the aforementioned other granulation agents may be preferably used. The granulation agent, which is used in the process which comprises granulating the selected granulated product and the rest of the raw material for sinter, may comprises a polymer having at least one member selected from the group consisting of a carboxyl group, a sulfonic acid group and salts thereof in the present invention and fine particles having an average particle size of not more than 200 μm.

The amount to be used of the granulation agent used in the process which comprises granulating the selected granulated product and the rest of the raw material for sinter is preferably not less than 0.1 part by weight and not more than 5.0 parts by weight with respect to 100 parts by weight of the raw material for sinter for iron manufacturing in the process which comprises granulating the selected granulated product and the rest of the raw material for sinter, in the case of the granulation agent of an inorganic compound such as burnt lime, bentonite and cement. More preferably, it is not less than 0.3 part by weight and not more than 2.5 parts by weight. When the granulation agent is an organic compound such as a polymer having at least one species of group selected from the group consisting of a carboxyl group, a sulfonic acid group and salts thereof, the used amount thereof is preferably not less than 0.005 part by weight and not more than 1.0 parts by weight with respect to 100 parts by weight of the raw material for sinter for iron manufacturing in the process which comprises granulating the selected granulated product and the rest of the raw material for sinter. More preferably, it is not less than 0.01 part by weight and not more than 0.5 part by weight.

In the present invention, when the above-mentionedprocess (2) is contained, (i) since the moisture content that is higher than a moisture content after the granulation of the entire raw material for sinter can be used to carry out the granulation (the moisture content at the time of sintering can be adjusted to a normal range by lowering the moisture content of the rest of the raw material for sinter), the granulation property is improved, and (ii) in the process which comprises adding the granulated product obtained through the selective granulation process to the rest of the raw material for sinter so as to carry out a granulation, it is possible to provide the functions and effects that sufficiently achieve the productivity of the sintering machine even when a granulation agent such as burnt lime is not used or even when the addition amount of the granulation agent is reduced. Moreover, in the case of the application of a polymer having at least one member selected from the group consisting of a carboxyl group, a sulfonic acid group and salts thereof, it is possible to reduce the amount of addition to a level smaller than that of the polymer required for granulating the entire raw material for sinter, and it is also possible to provide remarkable effects for improving the granulation property in comparison with the entire granulation (method in which all the rawmaterial for sinter are granulated).

As the above-mentioned (i), the above-mentioned operational effects are sufficiently achieved when the amount of moisture contained in 100 % by mass of the raw material for sinter for iron manufacturing in the selective granulation process is not less than 8.0 % by mass and not more than 13.0 % by mass, and this mode also forms one of preferred embodiments. More preferably, it is not less than 8.5 % by mass and not more than 12.0 % by mass. Most preferably, it is not less than 9.0 % by mass and not more than 11.0 % by mass. In processes in which, after the selective granulation process, the granulated product obtained from the process is granulated together with the rest of the raw material for sinter, the amount of moisture contained in 100 % by mass of the final raw material for sinter in the granulationes is preferably not less than 6.0 % by mass and not more than 8.0 % by mass. More preferably, it is not less than 6.5 % by mass and not more than 7.5 % by mass.

As regarding the above-mentioned (ii), in the case where burnt lime is used as a granulation agent in either of the selective granulation process and the process which comprises granulating the granulated product obtained from the process together with the rest of the raw material for sinter for iron manufacturing in the present invention, the following systems may be mentioned. (1) A system in which no burnt lime is used in the selective granulation process and burnt lime is used in the process which comprises granulating the selected granulated product together with the rest of the rawmaterial for sinter for ironmanufacturing. (2) A system in which burnt lime is used in the selective granulation process and no burnt lime is used in the process which comprises granulating the selected granulated product together with the rest of the raw material for sinter for iron manufacturing. And (3) a system in which burnt lime is used in the selective granulation process and burnt lime is also used in the process which comprises granulating the selected granulated product together with the rest of the raw material for sinter for iron manufacturing. The systems (2) and (3) are also respectively classified into one case in which burnt lime is used as fine particles having an average particle size of not more than 200 μm and the other case in which such burnt lime is not used. In the present invention, any one of these systems makes it possible to reduce the addition amount of burnt lime to the entire raw material for sinter for iron manufacturing in comparison with conventional techniques. Moreover, in the present invention, any one of the selective granulation process and the process which comprises granulating the selected granulated product together with the rest of the raw material for sinter for iron manufacturing can be carried out without using burnt lime.

The above-mentioned selective granulation process and the process which comprises granulating the selected granulated product together with the raw material for sinter for iron manufacturing are desirably carried out by using the above-mentioned devices and the like. In the process which comprises granulating the selected granulated product

together with the rest of the rawmaterial for sinter for ironmanufacturing, the same device as that used in the selective granulation process may be used, or a different device may be used. In the respective processes, it is preferable to use one or two or more species of the above-mentioned devices are used in combination.

When the above-mentioned process (2) is contained in the present invention, it is possible to sufficiently provide the above-mentioned functions and effects by using raw material for sinter for iron manufacturing that contain not less than 10 % by mass of inferior ores for granulation in 100 % by mass of the rawmaterial for sinter in the selective granulationprocess, and this mode also forms one of the preferred embodiments. Preferably, the inferior ores for granulation of not less than 50 % by mass, more preferably, not less than 80 % by mass, are contained. One or two or more species of the inferior ores for granulation may be used.

The above-mentioned inferior ores for granulation comprise materials containing not less than 40% of Mara mamba iron ore fines, pellet feed, dust generated in steel works, limestone and fine powder of -1.0 mm (fine powder of not more than 1 mm), and the like. The Mara mamba iron ore fines is a generic term of iron ore produced fromMara mamba iron ore deposit in Australia. It comprises Goethite ($Fe_2O_3 \cdot H_2O$) and Martite ($Fe_2O_3$ having a magnetite structure) as main iron minerals, and West Angelas ore, which is a locality brand name (popular name), is its typical iron ore. This ore contains much fine iron ore fines having a particle size of not more than 0.25 mm and is characterized for having poor pseudo-particle forming property. The pellet feed refers to fine particles of iron ore having a particle size of -0.5 mm.

The above-mentioned dust is a generic term of fine particles generated in each processes for manufacturing iron in steel works. For example, there may be mentioned sintered dust generated in sintering processes, blast-furnace dust generated in blast-furnace processes, converter dust and converter graphite generated in converter processes and acid-washed dust generated in cold rolling factories. Additionally, there may be mentioned coke precipitated breeze, rolled back-water dust, lagoon dust and the like. One or two or more species of these may be used.

In the above-mentioned process (3), the fine particles are preliminarily mixed with 0.3 to 10 % by mass amount of the raw materials for sinter, as measured in the dried state, and then the mixture is added to the rest of the raw materials for sinter to be granulated.

The "mixing process" in the above-mentioned mixing treatment process refers to a preparation process comprising a mixture of fine particles having an average particle size of not more than 200 μm and one portion of the raw materials for sinter. Preferably the fine particles are sufficiently dispersed in the part of the raw materials for sinter. In such mixing process, the raw materials for sinter are mixed so as not to be granulated. For example, with respect to the GI index of the mixture obtained from the mixing process, the GI index of the granulated product having a particle size of not more than 0.25 mm is preferably not more than 80, and more preferably not more than 50.

The term "0.3 to 10 % by mass amount of the raw materials for sinter" in the above-mentioned mixing process refers to 0.3 to 10 % by mass of all the raw materials for sinter to be used in the granulation method of the raw materials for sinter. Preferably the materials contain one portion of iron ore, one portion of fuel, one portion or entire of the flux for iron manufacturing, or combination of these. More preferably, the materials contain the flux and/or the fuel for iron manufacturing.

0.3 to 10 % by mass of the above-mentioned raw materials for sinter refers to a numeric value that all the raw materials for sinter to be used in the granulation method for the raw materials for sinter are assumed to be 100 % by mass. If it is less than 0.3 % by mass, since the amount of the raw materials for sinter for mixing the fine particles is small, the fine particles are not sufficiently dispersed in the entire raw materials for sinter. If it exceeds 10 % by mass, the fine particles are not sufficiently mixed in one portion of the raw materials for sinter, thus functions as the diluent are not sufficiently exerted. Moreover, the dispersing state of the fine particles becomes poor, and the productivity tends to decrease. Preferably, it is not less than 0.4 % by mass and not more than 8 % by mass. More preferably, this value is not less than 0.5 % by mass and not more than 5 % by mass.

As the amount to be used of the fine particles having an average particle size of not more than 200 μm, it is preferably set so that the mass ratio (in the absolute-dry conversion) between the raw materials for sinter and the fine particles to be used in themixingprocess becomes the rawmaterials for sinter : the fine particles = 0.3 : 1 to 50 : 1 in the mixing process. Preferred is 1 : 1 to 20 : 1.

The rawmaterials for sinter in the above-mentioned mixing process are preferably flux for iron manufacturing and/or fuel such as coke and/or return fine. Particularly preferred are limestone, dolomite, serpentine, silica sand, slag, dust, cokes breeze and anthracite.

In the above-mentioned mixing process, the fine particles having an average particle size of not more than 200 μm preferably contain little amount of moisture, and those 0.3 to 10 % by mass amount of the raw materials for sinter to be mixed with the fine particles also preferably contain little amount of moisture. Thereby, the materials become less susceptible to granulation in the mixture prepared in the mixing process. In addition, when the mixture is mixed with the rest of the raw materials for sinter to be granulated, dispersibility of said particles improves, and the effect of said particles as a granulation agent works more efficiently. The moisture content in 100 % by mass of the fine particles having an average particle size of not more than 200 μm is preferably not more than 20 % by mass, and more preferably not more than5 % by mass. Moreover, the moisture content in 100 % by mass of the raw materials for sinter to be mixed with the

fine particles is preferably not more than 20 % by mass. More preferably, it is not more than 12 % by mass, and most preferably not more than 8 % by mass.

Furthermore, the moisture content of the mixture may be adjusted in the mixing process. In the granulation process, water may be or may not be added, but in order to improve the granulation property, water is preferably added. The moisture content in 100 % by mass of the mixture prepared in the mixing process is preferably not less than 0 % by mass and not more than 15 % by mass. More preferably, it is not more than 8 % by mass. When water is added in the granulation process, upon mixing the mixture obtained in the mixing process and a granulation agent, which will be described later, with the rest of the raw materials for sinter, water is preferably added after sufficiently mixing these materials as much as possible even after charging these into a granulator in order to improve dispersibility of the raw materials for sinter having the fine particles mixed therein.

In the above-mentioned process (3), a granulation process is carried out by mixing the mixture obtained by said process with the rest of the raw materials for sinter after completion of the above-mentioned mixing process. That is, among the raw materials for sinter used for the granulation method of the raw materials for sinter according to the present invention, one portion is used for preparing the mixture in the mixing process, and the rest is mixed with the mixture to be granulated. Thereby, the fine particles having an average particle size of not more than 200 μm in the mixture effectively function in the granulation process, the granulation property improves, and consequently sufficient productivity of sintered ore can be achieved.

The mixing in the above-mentioned mixing process is preferably carried out by using a mixer with high speed agitator, roller mill, rod mill, ball mill and the like. Among these, those methods using a mixer with high speed agitator is more preferred. As the granulating method in the granulation process, those devices preferably used in the processes for carrying out the above granulations are preferably used.

Furthermore, in the granulation method of the rawmaterials for sinter for iron manufacturing according to the present invention, the granulation is preferably carried out so that the ratio of particles having a particle size of 1 to 10 μm contained in the entire amount of limestone in the raw materials for sinter to be 3 to 50 % by mass as measured in the dried state. That is, upon granulating the raw materials for sinter for iron manufacturing, limestone contained in the raw materials for sinter for iron manufacturing is preferably adjusted in this manner so as to carry out the granulation. Limestone is a component which is mainly composed of calcium carbonate, and to be contained in the materials for iron manufacturing when those materials are granulated. The granulation may be carried out either after adjusting limestone, or while adjusting limestone contained in the materials for iron manufacturing.

In adjusting limestone mentioned above, when the ratio of the particles having a particle size of 1 to 10 μm is less than 3 % by mass in the entire limestone, the pseudo-particle forming property given by active components of limestone may not be fully exerted to improve air permeability in raw material for sinter filling layers (sintering bed) on a sintering machine and to improve the productivity in the sintering process. On the other hand, if the ratio exceeds 50 % by mass, it becomes difficult to adjust limestone in such manner, thus improvement effect of the pseudo-particle forming property by limestone may not be fully obtained. The ratio is more preferably not less than 4 % by mass and not more than 20 % by mass. It is still more preferably not less than 5 % by mass and not more than 15 % by mass. And it is most preferably not less than 7 % by mass and not more than 13 % by mass. The ratio of the particles having a particle size of 1 to 10 μm in the entire limestone refers to the ratio (% by mass) of the particles having a particle size of 1 to 10 μm when the entire limestone contained in the raw materials for sinter is assumed to be 100 % by mass in granulating the raw materials for sinter.

In the present invention, the ratio of the particles having a particle size of 1 to 10 μm in the entire limestone may be given by values obtained through the following measurements.

(Measurement method of particle size distribution)

Limestone particles are classified through sieves to sizes of not less than 2.8 mm, 1 mm to 2.8 mm, 0.5 mm to 1.0 mm, 0.25 mm to 0.5 mm, and not more than 0.25 mm. The mass is measured for each group to calculate the ratio of each particle size ranges in limestone. MIC-113-0-02 (MARUIN & Co., LTD) is used as a screen shaker to classify about 300 g of limestone in 600 seconds. As sieves, 6.5 meshes, 16 meshes, 30 meshes and 60 meshes with a diameter of ϕ200 mm, are used. The ratio of limestone particles having a particle size of 1 to 10 μm is measured by a Laser diffraction/scattering-type particle size distribution measurement device LA-910 (product of Horiba, Ltd.). The flow-type measurements are conducted at a stirring motor speed of 7, a circulating pump speed of 7, and an ultrasonic-wave operation prior to the measurement of 10 minutes. Distilled water was used as a dispersing solvent, and limestone particles classified to be not more than 0.25 mm through the sieve are measured. From a graph indicating accumulated amounts % through the sieves, the ratio of particles having a particle size of 1 to 10 μm is calculated, and converted to a ratio to the entire limestone.

Moreover, in the present invention, the ratio of particles having a particle size of 1 to 10 μm in limestone of not more than 250 μm is preferably 20 to 100 % by mass. That is, the granulation is preferably carried out in such a manner

that the ratio of particles having a particle size of 1 to 10 μm in limestone of not more than 250 μm to be 20 to 100 % by mass. Thereby, the effect of the present invention can be exerted more sufficiently. More preferably, the ratio of particles having a particle size of 1 to 10 μm in limestone of not more than 250 μm is not less than 25 % by mass and more than 70 % by mass.

The content of limestone in the above-mentioned raw materials for sinter is preferably not less than 10 % by mass and not more than 25 % by mass with respect to 100 % by mass of the raw materials for sinter. If it is less than 10 % by mass, melting assimilation does not proceed by a decrease of calcium components, and the productivity may be lowered due to a decrease of the production yield. On the other hand, if it exceeds 25 % by mass, an amount of byproducts such as slag increases, and also the productivity may be lowered. More preferably, it is not less than 12 % by mass and not more than 20 % by mass.

The method for adjusting the particle size of the limestone mentioned above preferably includes a method which comprises pulverizing limestone, a raw material for sinter, and a method which comprises adding fine powders of limestone to the raw materials for sinter. These methods may also be combinedly carried out. The pulverizing may be carried out by using pulverizers such as a rod mill, a ball mill and the like. The limestone having the above-mentioned particle size distribution may be divided and added in several times.

When the polymer having at least one species of group selected from the group consisting of a carboxyl group, a sulfonic acid group and salts thereof is used as a granulation agent, said granulation agent may be added at any timing. For example, after granulating the raw materials for sinter containing one portion of limestone in the presence of said granulation agent, the rest of the limestone may be added to carry out the mixing process.

Moreover, in the granulation method of the raw materials for sinter for iron manufacturing according to the present invention, it is preferable to carry out the granulation by mixing 5 to 50 % by mass of Mara mamba iron ore fines with respect to the entire mass of the raw materials for sinter (new materials) in which the fuel and return fine has been removed. Thereby, it becomes possible to desirably maintain the product yield and the productivity in the preparation processes for the sintered ore without requiring any preliminary granulation or the like using a special facility when a large amount of Mara mamba iron ore fines that is inexpensive and abundant as resources are used as the raw materials for sinter. If the mixed amount is less than 5 % by mass, it may become impossible to provide the stable supply and economic advantage in the future, which are obtained by using a large amount of Mara mamba iron ore fines that is inexpensive and abundant as resources as the raw materials for sinter. If it exceeds 50 % by mass, the GI index of the pseudo-particles at the time of granulation and the productivity of the sintered ore may not be sufficiently improved. More preferably, it is not less than 10 % by mass and not more than 30 % by mass.

Fig. 1 is a graph showing a relationship between the mixing ratio (% by mass) of Mara mamba iron ore fines to the entire mass of the new materials and GI-0.25 (GI index of pseudo-particles of not more than 0.25 mm) (%), when the granulation is carried out by adding only water, and when the granulation is carried out by adding the granulation agent containing a polymer and water, so as to set the moisture content after the granulation to be 7 % (constant value). Fig. 2 is a graph showing a relationship between the formaulation ratio (% by mass) of Mara mamba iron ore fines to the entire mass of the newmaterials and the productivity (t/day/$m^2$) of the sintered ore, under the same conditions as Fig. 1.

As shown in Fig. 1 and Fig. 2, by the addition of the granulation agent containing a polymer, both of the GI index of the pseudo-particles and the productivity of the sintering machine are remarkably improved as compared with a normal granulation which comprises adding only water. However, if the mixing ratio (% by mass) of the Mara mamba iron ore fines to the entire mass of the new material in the raw materials for sinter exceeds 50 % by mass, both of the GI index of the pseudo-particles and the productivity of the sintering machine decrease as compared with those of the normal granulation which comprises adding only water. Thus, it is preferable to set the mixing ratio (% by mass) of the Mara mamba iron ore fines to the entire mass of the new material in the raw materials for sinter to be not more than 50 % by mass.

Furthermore, as clearly shown by Fig. 1 and Fig. 2, the (% by mass) of the Mara mamba iron ore fines is preferably not more than 30 % by mass, and more preferably not more than20 % by mass in view of improving the GI index of the pseudo-particles and the productivity of the sintered ore. The reduction of the mixing ratio (% by mass) of the Mara mamba iron ore fines to the entire mass of the new material in the raw materials for sinter is desirable in view of improving the GI index of the pseudo-particles and the productivity of the sintered ore. However, on the other hand, it becomes impossible to provide the stable supply and economic advantage in the future, which are obtained by using a large amount of Mara mamba iron ore fines that is inexpensive and abundant as resources as the rawmaterials for sinter. Therefore, the mixing ratio is preferably not less than 5 % by mass, more preferably not less than 10 % by mass, and most preferably not less than 15 % by mass on the basis of the mixing ratio of the Mara mamba iron ore fines which does not inhibit the current sintering operation.

In the present invention, when Mara mamba iron ore fines is mixed in the rawmaterials for sinter and a granulation additive containing a polymer having at least one species of group selected from the group consisting of a carboxyl group, a sulfonic acid group and salts thereof is used, it is preferable to set the addition ratio of the granulation additive to be in a range from 0.001 % by mass to 1 % by mass in the solid conversion, with respect to 100 % by mass of the

entire raw materials for sinter.

Fig. 3 is a graph showing a relationship between the addition ratio of the granulation agent containing a polymer to the entire mass of the raw materials for sinter and GI-0.25 (GI index of pseudo-particles of not more than 0.25 mm) (%), in respective cases of mixing ratios (% by mass) of Mara mamba iron ore fines being 15 % by mass and being 50 % by mass to the entire mass of the new materials in the raw materials for sinter.

Fig. 3 shows that by adding not less than 0.001 % by mass in the solid matter conversion of a granulation agent containing at least a polymer, the GI-0.25 of the pseudo-particles is remarkably improved as compared with a normal granulation which comprises adding only water (GI-0.25 = 80 %, under the condition without any mixture of Mara mamba iron oress). Therefore, it is preferable to set the addition ratio (% by mass) of the granulation agent containing a polymer to the entire mass of the raw materials for sinter to be not less than 0.001 % by mass in the solid matter conversion. Meanwhile, if more than 1 % by mass of the granulation agent is added in the solid matter conversion, as an addition ratio of the granulation agent to the entire mass of the raw materials for sinter, excessive granulation may occur to inhibit formation of appropriate pseudo-particles, thus large lumps of the raw materials for sinter may be generated. As the result, adverse effects such as sintering difficulty of the raw materials for sinter may possibly occur. Therefore, in the present invention, the addition ratio of the granulation agent containing a polymer with respect to the entire mass of the raw materials for sinter is preferably not more than 1 % by mass in the solid matter conversion. More preferably, it is not more than 0.5 % by mass. Additionally, as is clear from Fig. 3, along with the increase of the mixing ratio of Mara mamba iron ore fines to the entire mass of the new material in the raw materials for sinter, the addition ratio of the polymer needs to be increased in order to obtain a desired GI-0.25. It is preferable to adjust the addition ratio of the granulation agent in response to the increase of the mixing ratio of the Mara mamba' iron ore fines in such a manner, for example, when the mixing ratio of Mara mamba iron ore fines to the entire mass of the new material in the raw materials for sinter is 50 % by mass, the addition ratio of the polymer to the entire mass of the raw materials for sinter is set to be not less than 0.01 % by mass. Moreover, as addition amount of the granulation agent may vary depending on factors such as the granulation property of ore in the raw materials for sinter, the addition amount of water, and the granulator to be used. However, it is preferable to make the amount as small as possible in view of economical efficiency.

The above-mentioned new material refers to a material obtained by removing fuel and return fine from the raw materials for sinter, and contains iron ore (iron ore fines); sintered ore fines except for return fine; dust, $SiO_2$-containing flux such as serpentine, quartzite (silica sand) and peridotite; and CaO-containing flux such as limestone, dolomite and converter slag. As the content of iron ore to the entire mass of the new material, it is preferably not less than 5 % by mass and not more than 90 % by mass.

Moreover, in the granulation method of raw materials for sinter for ironmanufacturing according to the present invention, it is preferable to carry out the granulation by preliminarily mixing a part of dust, slag and return fine contained in the raw materials for sinter with at least one species of compound selected from the group consisting of (a) acids, (b) carbon dioxide, (c) a chelating agent having a weight-average molecular weight of not more than 1000, (d) a polymer chelating agent, (e) a polymer having a weight-average molecular weight of not less than 20,000, and (f) a low molecular compound having a molecular weight of less than 500 that is alkali metal salt and/or ammonium salt of acid, and then adding said mixture to the rest of the raw materials for sinter. Said granulation is preferably carried out in the presence of a polymer having at least one species of group selected from the group consisting of a carboxyl group, a sulfonic acid group and salts thereof. Additionally, as the mode for adding the mixture obtained by the mixing process to the rest of the raw materials for sinter, the addition may be carried out at one time, or in several times in a divided manner.

In this manner, by mixing one portion of dust, slag and return fine with the above-mentioned compounds (a) to (f), it becomes possible to prevent the polymer having at least one species of group selected from the group consisting of a carboxyl group, a sulfonic acid group and salts thereof that is used in carrying out the granulation from being deactivated by a component of burnt lime or slaked lime contained in dust, slag and return fine. Thus, the granulation property may be improved by using the polymer. It is considered that the function of the polymer as a granulation agent tends tobe lowered by adsorbing to polyvalent ions such as a calcium ion derived from burnt lime and slaked lime exist on the solid surfaces of dust, slag and return fine. However, by mixing one portion of dust, slag and return fine with the above-mentioned compounds (a) to (f), adsorption of the polymer to the surface of burnt lime and slaked lime contained in dust, slag and return fine is lowered because of the following functions. Thus, even a small amount of the polymer can exhibit an improvement effect of the granulation property.

Moreover, in the present invention, the granulation may be carried out by; after mixing a material containing a burnt lime component and/or a slaked lime component other than dust, slag and return fine with compounds (a) to (f), addingsaidmixture to the rest of the raw materials for sinter in the presence of a polymer having at least one species of group selected from the group consisting of a carboxyl group, a sulfonic acid group and salts thereof. The material containing a burnt lime component and/or a slaked lime component refers to general materials containing a burnt lime component (burnt lime) and/or a slaked lime component except for dust, and are wastes or raw materials having a particle size of coarser than that of dust. Furthermore, these may be wastes formed by crushing or pulverizing large-size wastes. In this manner, it is possible to also use (reuse) materials other than those known as raw materials for

sinter. For example, by using industrial wastes as the material containing a burnt lime component and/or a slaked lime component, it becomes possible to provide an effective solution to the environmental problem. The material containing a burnt lime component and/or a slaked lime component is added to the raw materials for sinter to be granulated as described above in order to minimize the wastes to a level as small as possible so that it may be reused through the granulation.

In the present invention, the content of the material containing dust, slag and return fine in the raw materials for sinter as well as a burnt lime component and/or a slaked lime component in the raw materials for sinter is preferably not more than 40 % by mass in total in view of granulation property.

As the above-mentioned (a) acids, acids having a molecular weight of less than 500 are preferably used. For example, there may be mentioned, as preferable examples, mono-or di- or polyvalent inorganic acids such as hydrochloric acid, sulfuric acid, nitric acid, carbonic acid, boric acid, phosphoric acid, phosphorous acid, hypophosphoric acid and perchloric acid; carboxyl-containing organic acids such as formic acid, acetic acid, propionic acid, acrylic acid, methacrylic acid, maleic acid, fumaric acid, itaconic acid, crotonic acid, glycolic acid, glyoxylic acid, succinic acid and phthalic acid; sulfonic acid-containing organic acids such as styrene sulfonic acid and 2-acrylamide-2-methylpropane sulfonic acid; acid anhydrides such as acetic anhydride, phthalic anhydride, pyromellitic anhydride and diphosphoric acid pentaoxide; acidic gases such as sulfurous acid gas; and other compounds having a molecular weight of less than 500 such as tripolyphosphoric acid. Moreover, acidic waste fluids such as pulp waste fluid may also be used.

In the above-mentioned (a) acids, the number of acid groups in one molecule is preferably not less than 1 and not more than 5. More preferably, it is not more than 3. If it exceeds 5, sufficient granulation property may not be obtained.

Although the functional mechanism of the above-mentioned (a) has not been sufficiently clarified, it is supposed that burnt lime or slaked lime contained in dust, slag, return fine and the like is neutralized so that the solid surface of burnt lime or slaked lime is reduced or eliminated to prevent the polymer frombeing adsorbed onto the solid surface of burnt lime or slaked lime to be deactivated.

The above-mentioned (b) carbon dioxide is a compound capable of using a compound generating an acid by a reaction with water, and pure carbon dioxide may be added. However, in view of cost, preferably used are waste gases containing carbon dioxide, generated in steel works.

Although the functional mechanism of the above-mentioned (b) has not been sufficiently clarified, it is estimated that in addition to the effects of the above-mentioned (a), these compounds react with calcium ions derived from the burnt lime and slaked lime that are present in water and/or on the solid surface of the dust, return fine to form, for example, calcium salt that is insoluble or has a low solubility so that the solid surface of the dust and return fine derived from calcium ions, the burnt lime and slaked lime is deactivated with respect to the polymer having at least one species of group selected from the group consisting of a carboxyl group, a sulfonic acid group and salts thereof. Thus, it is presumed that (b) has the effect of preventing the polymer of the present invention from being adsorbed on the solid surface of the burnt lime or slaked lime and deactivated.

As the above-mentioned (c) chelating agent having a weight-average molecular weight (Mw) of not more than 1000, generally known chelating agents (chelating agents) having a weight-average molecular weight of not more than 1000 may be used, and the chelating agent having Mw of less than 500 is preferred. Morepreferably, it is less than 300,'mostpreferably, to less than 200.

As the weight-average molecular weight becomes higher, the chelate compound comes to allow the raw materials for sinter for iron manufacturing to exert a granulation property, and the granulation property tends to abruptly increase when the weight-average molecular weight becomes virtually not less than 1000. In general, since the amount of burnt lime mixed from the dust or return fine tends to vary, an excessive amount of a dust treatment agent (granulation enhancing agent) that is at least a compoundof the above-mentioned (a) to (f) is preferably added thereto, in order to allow the polymer of the present invention to exert the granulation property sufficiently and to provide stable operations. Here, when an excessive amount of the polymer that serves as the granulating treatment agent is added, an excessive granulation property is exerted to cause large lumps of the granulated product and the granulated product internally including fuel such as cokes, resulting in defective ignition and defective combustion; therefore, the amount of addition of the dust treatment agent is as small as possible. Since the tolerance range of the addition is wide, it has the advantages that the operation is easy.

As the above-mentioned (c) chelating agent, preferable examples thereof comprise polyphosphates, such as sodium pyrophosphate, sodium tri-polyphosphate and aminotri (methylene phosphate); amino carboxylates, such as trisodium nitrotriacetate monohydrate, ethylene diamine tetraacetate and diethylene triaminepentaacetate; organic acids, such as oxalic acid, tartaric acid, citric acid, gluconic acid, o-(carboxymethyl)tartronic acid, o-(carboxymethyl) malic acid, 1,1,1-tris(carboxymethoxymethyl)ethane and carboxymethyloxy succinic acid; cyclocarboxylic acids, such as pyromellitic acid, benzopolycarboxylic acid and 1,2,3,4-cyclopentatetracarboxylic acid; and potassium salts, sodium salts and ammonium salts of these. One or two or more species of these may be used.

Although the functional mechanism of the above-mentioned (c) chelating agent has not been sufficiently clarified, it is presumed that the chelating agent chelates multivalent ions such as calcium ions and magnesium ions so that it is

possible to prevent degradation in the dispersing property of fine particles of the materials for iron manufacturing of the polymer of the present invention having at least one species of group selected from the group consisting of a carboxyl group, a sulfonic acid group and salts thereof.

As the calcium iron capturing capacity (chelating capacity) of the above-mentioned (c) chelating agent, it is preferably not less than 100 mg CaO/g. The function of not less than 100 mg CaO/g makes it possible to prevent deposition of the polymer and adsorption of the polymer onto the burnt lime and slaked lime with a small amount of addition, and consequently to effectively granulate the raw materials for sinter at low costs. The function of less than 100 mg CaO/g causes a reduction in the chelating capacity due to the deposition and the like of the chelating agent at a portion having a high concentration of calcium ions, resulting in a demand for a large amount of the chelating agent. Preferably, it is not less than 130 mg CaO/g, and more preferably not more than160 mg CaO/g. Here, the higher the calcium ion capturing capacity (chelating capacity) of the chelating agent, the smaller the amount of the chelating agent to be used; therefore, it is more preferable, but from the viewpoint of easiness in obtention, chelating agents having a capturing capacity of calcium ions of not more than 600 mg CaO/g are preferably used, and those of not more than 400 mg CaO/g are more preferably used.

Also, as the above-mentioned (c) chelating agent, from the viewpoint of characteristics of the resulting sintered ore, those containing no phosphor atoms are preferably used. Moreover, organic acids are preferably used because of low costs, and among these, citric acid, which is inexpensive and has a superior chelating capacity, is preferably used.

As the above-mentioned (d) polymer chelating agent, those having a weight-average molecular weight (Mw) that exceeds 1000 are preferably used, and examples thereof comprise the following monomers having carboxyl groups and compounds in which a monomer containing acidic phosphate groups is polymerized as an essential component.

Although the function of the above-mentioned (d) polymer chelating agent has not been sufficiently clarified, it is presumed that, in addition to the same chelating effects as the above-mentioned (c) chelating agent, the above-mentioned (d) polymer chelating agent has a characteristic of being adsorbed onburnt lime or slaked lame so that, upon granulating, the polymer having at least one species of group selected from the group consisting of a carboxyl group, a sulfonic acid group and salts thereof of the present invention becomes less susceptible to deactivation. It is presumed that, since a burnt lime or slaked lime component such as dust is preliminarily processed in a concentrative manner, the operation is carried out more efficiently with smaller amount of addition in comparison with a method in which the addition is made upon granulation so that better results are obtained. Moreover, since the above-mentioned (d) polymer chelating agent tends to granulate dust in the treatment of dust, the surface area of the dust becomes smaller upon granulation of the raw materials for sinter, it becomes possible to prevent a reduction in the effects of the polymer having at least one species of group selected from the group consisting of a carboxyl group, a sulfonic acid group and salts thereof, due to the use of dust in combination.

As the above-mentioned (e) polymer, preferable examples thereof comprises water-soluble nonionic polymer such as the polymer having at least one species of group selected from the group consisting of a carboxyl group, a sulfonic acid group and salts thereof, hydroxy ethylcellulose, methylcellulose, polyethylene glycol, polyvinyl alcohol and denatured matters thereof, hydroxyethyl(meth)acrylate-based water-soluble polymers, hydroxypropyl(meth)acrylate-based water-soluble polymers and polyvinyl pyrrolidone; semi-synthetic polymer compounds having acid groups or the salts thereof such as carboxy ethylcellulose, sodium lignin sulfonate.

Although the function of the above-mentioned (e) polymer chelating agent has not been sufficiently clarified, it is presumed that, since it tends to granulate dust in the treatment of dust, the surface area of the dust becomes smaller upon granulation of the raw materials for sinter, it becomes possible to prevent a reduction in the effects of the polymer having at least one species of group selected from the group consisting of a carboxyl group, a sulfonic acid group and salts thereof by the use of dust in combination.

As the above-mentioned (f) alkali metal salt and/or ammonium salt of acid, (a) an alkali metal salt and an ammonium salt are preferably used, and with respect to the alkali metal salt of acid, sodium salts, potassium salts and the like of acid are preferably used. More preferably, since the improving effects of the granulation property are high when used in combination with the polymer, and since sufficient effects are obtained even when the amount of addition is small, the following materials are used; carbonates such as disodium carbonate, ammonium carbonate, sodium carbonate, potassium carbonate, potassium sodium carbonate, dipotassium carbonate, ammonium hydrogencarbonate, potassium hydrogencarbonate and sodium hydrogencarbonate; sulfates such as ammonium sulfate, sodium sulfate and potassium sulfate'; phosphates such as trisodium phosphate, tripotassium phosphate, triammonium phosphate, disodium hydrogenphosphate and sodium dihydrogenphosphate; and borates such as borax and ammonium borate. These may be used either as anhydrites or as hydrates. Among these, carbonates are still more preferably used, and disodium carbonate, sodium carbonate, potassium sodium carbonate, dipotassium carbonate and sodium hydrogencarbonate are particularly preferably used. Here, those except for phosphates are preferably used because impurities remaining in the sintered ore tend to cause adverse effects to the phosphates.

As the low molecular compounds of the above-mentioned (f) alkali metal salt and/or ammonium salt of acid, those having a molecular weight of less than 500 are preferably used, and in the case of the molecular weight of not

less than 500, in order to obtain improving effects for the granulation property when combinedly used with the polymer, a large amount of addition thereof is required. More preferably, it is less than 300, still more preferably, less than 200.

Although the function of the above-mentioned (f) low molecular compound has not been sufficiently clarified, it is presumed that, since it reacts with calcium ions derived from burnt lime and slaked lame present in water and/or on the solid surface of dust and return fine to form, for example, calcium salts that are insoluble or have a low solubility, the solid surface of dust and return fine that is derived from calcium ions, burnt lime and slaked lime, are made deactivated to the polymer having at least one species of group selected from the group consisting of a carboxyl group, a sulfonic acid group and salts thereof, thus, even a small amount of polymer is allowed to exert improving effects for the granulation property.

Also, as the above-mentioned (f) alkali metal salt and/or ammonium salt of acid, when an acid forming the low molecular compound of (f) is used as calcium salt, the compound which has the solubility of the calcium salt to distilled water at 20°C of not more than 500 mg with respect to 100 g of distilled water. When the solubility of the calcium salt of acid is in the above-mentioned range, it becomes possible to suppress (prevent) the calcium salt, generated by bonding between the low molecular compound of (f) and calcium ions derived from burnt lime and slaked lime present in water and/or on the solid surface of the raw materials for sinter such as dust and return fine, from dissolving again in water to be used in the granulation process to form ions. By this effect, it becomes possible to obtain improving effects for the granulation property when combinedly used with the polymer, and also to provide the above-mentioned effects even in the case of a small amount of addition.

In the above-mentioned compounds (a) to (f), carbonic acid, carbon dioxide, sodium carbonate and sodium hydrogencarbonate are preferably used since these materials are less susceptible to residual impurities when burned in the sintering process, and carbonic acid, carbon dioxide and sodium carbonate are more preferably used since these materials are inexpensive.

As the amount of addition of each of the above-mentioned compounds (a) to (f), although not specifically determined since the amount is varied due to the amount of burnt lime, slaked lime or the like contained in dust, slag, return fine and the like and the amount of mixture of these, it is preferable to normally set the amount to 0.02 to 70 % by mass with respect to one portion of the dust, slag, return fines and the like. When the amount is less than 0.02 % by mass, the burnt lime contained in dust or the like tends to cause deactivation of the polymer, resulting in a failure in remarkably improving the granulating effects. In contrast, when the amount exceeds 70 % by mass, impurities contained in the resulting sintered ores tend to increase. More preferably, the amount is 0.2 to 5 % by mass. Also, the amount of addition of each of the compounds (a) to (f) is appropriately set in accordance with the granulation property of the raw material for sinter, the amount of addition of moisture, the granulator to be used and the like, and it is preferable to set the amount to a level as small as possible, and with respect to the total amount of addition of these compounds (a) to (f), it is preferably not less than 0.1 % by mass, and not more than 20 % by mass with respect to 100 % by mass of one portion of the dust, slag and return fine contained in the raw material for sinter.

In the above-mentioned amount of addition, when the compounds to be mixed in one portion of the dust, slag and return fine contained in the raw material for sinter are (a) an acid such as carbonic acid and (b) carbon dioxide, since these compounds are easily released out of the system, the residual amount in the system, that is, the total amount of the reacted amount thereof and the amount thereof dissolved in water is defined as the above-mentioned amount of addition.

Moreover, in the above-mentioned amount of addition, when the compounds to be mixed in (i) one portion of the dust, slag and return fine contained in the raw material for sinter are (ii) (a) acid and/or (b) carbon dioxide, distilled water is added thereto so that the total amount of (i) and (ii) is 30 % by mass; thus, a treatment solution made from (i), (ii) and distilled water is prepared, and the ratio of amounts of addition of (i) and (ii) is preferably determined so that the pH of the treatment solution is not more than 12. More preferably, the pH is not more than 11, and still more preferably not more than 10. When the amount of addition of (i) in the raw materials for sinter is determined, an appropriate amount of addition of (ii) can be determined through the above-mentioned method.

One portion of the dust, slag and return fine that have been treated by the compounds (a) to (f) is added to the rest of the rawmaterial for sinter and a granulationprocess is carried out in the presence of the polymer, with respect to the method for adding the polymer to the raw material for sinter, the following methods are preferably used; a method in which the compound is dispersed before or after the mixing process of the material; a method in which the compound is dispersed upon mixing the material; a method in which the compound is dispersed through a system different from the water adding system upon granulation; and a method in which the compound is mixed in the added water and dispersed.

Moreover, in the method of granulation of raw material for sinter for iron manufacturing of the present invention, the granulating process is preferably carried out in the presence of the following (1) and (2).

(1) Apolymer having at least one species of group selected from the group consisting of a carboxyl group, a sulfonic acid group and salts thereof; and

(2) At least one species of compound selected from the group consisting of acid, carbon dioxide, a chelating agent having a weight-average molecular weight of not more than 1000, sodium hydroxide, potassium hydroxide and a low molecular compound having a molecular weight of less than 500 that is alkali metal salt and/or ammonium salt of acid.

In this manner, it is possible to prevent the above-mentioned (1) polymer from being adsorbed to the raw materials for sinter, and consequently to improve the granulation property exerted by the polymer by granulating the raw material for sinter in the presence of (1) a polymer having at least one species of group selected from the group consisting of a carboxyl group, a sulfonic acid group and salts thereof; and (2) at least one species of compound selected from the group consisting of acid, carbon dioxide, a chelating agent having a weight-average molecular weight of not more than 1000, sodium hydroxide, potassium hydroxide and a low molecular compound having a molecular weight of less than 500 that is alkali metal salt of acid and/or ammonium salt. As the above-mentioned (2) acid, carbon dioxide, a chelating agent having a weight-average molecular weight of not more than 1000, and a low molecular compound having a molecular weight of less than 500 that is alkali metal salt and/or ammonium salt of acid, the same compounds as described above are used.

As the above-mentioned the compound (2), when at least one species of compound selected from the group consisting of acid, carbon dioxide, a chelating agent having a weight-average molecular weight of not more than 1000, and a low molecular compound having a molecular weight of less than 500 that is alkali metal salt and/or ammonium salt of acid is added, the same effects as described above are exerted, and when sodium hydroxide or potassium hydroxide is added, it is possible to increase a minus charge in comparison with a plus charge in the burnt lime or the like by raising the pH thereof, and consequently to reduce adsorption of the polymer.

In the present invention, when the granulating process is carried out by using only the polymer having at least one species of group selected from the group consisting of a carboxyl group, a sulfonic acid group and salts thereof, in addition to the fine particles having an average particle size of not more than 200 μm as the granulation treatment agent, a burnt lime or slaked lime component is mixed in the dust and return fine, and the solid surface of these materials is charged to have a plus charge. Thus, the polymer is adsorbed thereon to be deactivated. It has been known that, in general, as the pH becomes higher (toward the alkali side), the surface potential of powder dispersed in water becomes higher toward the minus side. Therefore, it is considered that, by making the pH higher, the plus potential of the surface of the burnt lime or slaked lime is lowered (raised to the minus side) to reduce the adsorbance of the polymer onto the surface of the burnt lime or slaked lime, thereby making it possible to effectively improve the granulation property.

Moreover, it has been clarified that, by raising the pH, the dispersing property of cokes that serve as the fuel is selectively lowered. Therefore, it is considered that, upon granulation, the granulationpropertyof the cokes is selectively lowered and the cokes become difficult to be taken into the pseudo-particles, and are effectively utilized. This process is also considered to devote to the improvements in the productivity of the sintered ore.

In the present invention, upon adding sodium hydroxide and/or potassium hydroxide, the pH, measured by the following evaluation method, is preferably 10 to 14.0. The pH is more preferably 12 to 14.0, still more preferably, 13 to 14.0.

As the above-mentioned measuring method of the pH, sodium hydroxide, potassium hydroxide and the granulation agent to be added to the raw material for sinter are mixed in water and measured, and in the present invention, (i) sodium hydroxide and potassium hydroxide as well as (ii) the granulation treatment agent in the amounts of addition (parts by weight) per unit amount of raw material for sinter are dissolved in distilled water to form an aqueous solution, and this aqueous solution is diluted with distilledwater so that the total amount of moisture of the aqueous solution in this case is equal to the moisture content (parts by weight) per unit amount of the raw material for sinter after the granulating process, and the pH of the aqueous solution thus prepared is measured.

Moreover, in the case of adjusting the pH to the above-mentioned range, a basic substance selected from the group consisting of (α) amines, (β) ammonia and (γ) at least one species of compound among sodium salt, potassium salt and ammonium salt may be used, and ammonia; amines having 1 to 20 carbon atoms, for example, methyl amine, ethyl amine, propyl amine, triethyl amine, monoethanol amine, diethanol amine and triethanol amine; and basic substances containing sodium salt, potassium salt and ammonium salt, such as sodium methoxide, sodium ethoxide and sodium t-botoxide, are preferably used.

The amount of addition of the above-mentioned compound (2) is preferably not less than 0.001 % by mass, and not more than 2 % by mass with respect to 100 % by mass of the raw materials for sinter. When the amount is less than 0.001 % by mass, the burnt lime contained in dust or the like tends to cause deactivation of the polymer, resulting in a failure in sufficiently improving the granulating effects. In contrast, when the amount exceeds 2 % by mass, impurities contained in the resulting sintered ore tends to increase the amount is more preferably not less than 0.01 % by mass, and not more than 0.5 % by mass. Moreover, the amount of addition of polymer (1) is set in the above-mentioned range.

As the mode in which the above-mentioned compounds (1) and (2) are added to the raw materials for sinter, any mode may be used as long as the granulating process is'carried out in the presence of the compounds (1) and (2), and the following modes are proposed: a mode in which (1) and (2) are mixed and added, a mode in which (1) and (2)

are added in parallel with each other in a separate manner, a mode in which after the addition of (1), (2) is added, and a mode in which after the addition of (2), (1) is added. Moreover, with respect to the addition method, a method in which the compounds (1) and (2) are formed into an aqueous solution, and this is mixed in water to be added to the granulator, and a method in which the compounds are sprayed in the raw material for sinter that is being stirred. By using these methods, the granulation agent can be added easily in a uniform manner, and pseudo-granulated without granular; thus, it becomes possible to further reduce the generation of fine powder. Moreover, prior to the stirring process of the raw material for sinter, these may be sprayed, for example, on a conveyer belt while being transported to a mixer or the like.

The granulated product, obtained through method of granulation of the rawmaterial for sinter for ironmanufacturing of the present invention, is sintered by a sintering machine to be formed into sintered ore. The sintered ore, which is produced from the granulated product obtained by method of the granulation of the raw material for sinter of the present invention, is one of the preferred embodiment of the present invention. The resulting sintered ore is useful product that is manufactured from a granulated product obtained through the methodof granulationof the rawmaterial for sinter of the present invention, that is, the granulated product that makes it possible to improve the dispersing property of fine particles having an average-particle size of not more than 200 μm, to effectively exert the decay preventive effects of the granulated product (pseudo-particles) in the moisture-condensed zone and dried zone of sintering layers by the addition of the fine particles, and consequently to achieve sufficient productivity of the sintered ore.

The productivity of the sintered ores in the present invention can be measured by the product yield and productivity of the sintered ores. For example, the product yield can be evaluated by measuring the rate of particles having a particle size of not less than 5 mm after dropping sintered ores (50 kg) (sintered cakes) on an iron plate for 5 times from a height of 2 m. The productivity can be calculated by the following equation:

Productivity (t/day/$m^2$) = total mass of particles having a particle size of not less than 5 mm in particle diameter after product yield evaluation (t) /sintered time (day)/surface area of a sintering machine (pot) ($m^2$)

In the following, the polymer having at least one species of group selected from the group consisting of a carboxyl group, a sulfonic acid group and salts thereof will be described. In the polymer, a salt of a carboxyl group or a sulfonic acid group refers to a group having a structure in which a hydrogen atom in a carboxyl group or a sulfonic acid group is substituted by a metal atom or the like, which is converted into the salt form.

As the polymer, there may be mentioned any one or two or more species of the following polymers: (1) a polymer having a carboxyl group and/or a salt thereof, (2) a polymer having a sulfonic acid group and/or a salt thereof and (3) a polymer having a carboxyl group and/or a salt thereof as well as a sulfonic acid group and/or a salt thereof. Such polymer is preferably formed by polymerizing a monomer composition which comprises at least one species of monomer selected from the group consisting of a monomer having a carboxyl group, a monomer having a sulfonic acid group and a monomer having a salt thereof. One or two or more species of such monomers may be used. However, more preferred is a polymer obtained by polymerizing a monomer composition containing not less than 10 mole % of a monomer containing a carboxyl group and/or amonomer having a salt thereof with respect to the entire monomer composition of 100 mole %. When the content of a monomer and/or a monomer having a salt thereof is less than 10 mole % in the monomer composition, granulating effects may not sufficiently be obtained. More preferably, the content is not less than 30 mole %, and particularly preferably not less than 50 mole %.

As the above-mentioned (2) polymer having a sulfonic acid group and/or a salt thereof, such a compound obtained by polymerizing a monomer composition having not less than 10 mole % of a monomer having a sulfonic acid group and/or a salt thereof with respect to the entire monomer is preferably used. More preferably, the ratio is not less than 30mole %, and particularly preferably not less than 50 mole %.

As the monomer having a carboxyl group and the monomer having a salt thereof mentioned above, a monomer having carboxyl groups such as (meth) acrylic acid, maleic acid, maleic anhydride, itaconic acid, fumaric acid, crotonic acid and acrylamide glycolic acid and a salt thereof are preferably used. Each of these may be used alone, or two or more of these may be used in combination. Among these, (meth) acrylic acid and/or a salt thereof are preferably used. Thus, as the polymer having a carboxyl group and/or a salt thereof in the present invention, a compound obtained by polymerizing a monomer composition mainly composed of (meth)acrylic acid and/or a salt thereof is preferably used. More preferably, acrylic acid and/or a salt thereof are used. Moreover, as the salt, alkali metal salts such as sodium and potassium; alkaline earth metal salts such as calcium and magnesium; ammonium salts; and organic amine salts such as monoethanol amine and triethanol amine are preferably used. Among these, alkali metal salts such as sodium and potassium, and ammonium salts are preferably used, and sodium salt is more preferably used.

As the monomer having a sulfonic acid group and the monomer having a salt thereof mentioned above, monomers having a sulfonic acid group such as vinyl sulfonate, styrene sulfonate, sulfoethyl(meth)acrylate, and 2-acrylamide-2-methylpropane sulfonate, and salts thereof are preferably used. Each of these may be used alone, or two or more of these may be used in combination.

The above-mentioned polymer may also be formed by copolymerizing the monomer having a carboxyl group, the monomer having a sulfonic acid group and the monomer having a salt of these with one or two or more species of other copolymerizable monomers that are copolymerizable with these monomers.

Preferably, as the other copolymerizable monomers, there may be mentioned monomers having an acidic phosphate group such as 2-(meth)acryloyloxy ethyl acid phosphate, 2-(meth)acryloyloxy propyl acid phosphate, 2-(meth) acryloyloxy-3-chloropropyl acid phosphate, 2- (meth) acryloyloxy ethylphenyl phosphate; monomers having an acid group, for example, carbolic acid monomers such as vinyl phenol, and salts thereof.

Preferred as the other copolymerizable monomers mentioned above, there may also be mentioned monomers having a polyalkylene glycol chain, for example, polyalkylene glycol (meth) acrylates such as polyethylene glycol monomethacrylate, methoxypolyethylene glycol momomethacrylate, methoxypolyethylene glycol monoacrylate; polyalkylene glycol memoalkenyl ether monomer formed by adding ethylene oxide to 3-methyl-3-butene-1-ol; polyethylene glycol monoethenyl ether monomer formed by adding ethylene oxide to allyl alcohol; and maleic acid polyethylene glycol halfester formed by adding polyethylene glycol to maleic anhydride. Among these monomers having a polyalkylene glycol chain, a monomer having a polyalkylene glycol chain having a chain length from not less than 5 moles to not more than 100 moles in the ethylene oxide conversion is easily available, and preferably used in view of improving of the pseudo-particle forming property and polymerization property. More preferred are monomers having a polyalkylene glycol chain with a chain length from not less than 10 moles to not more than 100 moles in the ethylene oxide conversion.

As the other copolymerizable monomers, the following compounds may also be used as well as the above-mentioned compounds.

(Meth) acrylic acid alkyl esters having 1 to 18 carbon atoms such as methyl (meth) acrylate, ethyl (meth) acrylate, hydroxyethyl (meth)acrylate, (N,N-dimethyl aminoethyl)(meth)acrylate, (N,N-diethylaminoethyl)(meth)acrylate and aminoethyl (meth) acrylate; (meth)acrylamides such as (meth)acrylamide, N-methyl(meth)acrylamide, N-ethyl(meth) acrylamide, N-ethyl (meth) acrylamide andN,N-dimethyl (meth) acrylamide, and derivatives thereof; vinyl acetate; (meth) acrylonitrile; base-containing monomers such as N-vinyl-2-pyrrolidone, vinyl pyridine and vinyl imidazole; (meth) acrylamide-based monomers having a crosslinking property such as N-methylol(meth)acrylamide and N-butoxymethyl(meth) acrylamide; silane-based monomers in which a group having hydrolyzability is directly bound to a silicon atom such as vinyl trimethoxysilane, vinyl triethoxysilane, γ-(meth)acryloylpropyl trimethoxysilane, vinyl tris(2-methoxyethoxy) silane, and allyl triethoxy silane; monomers having an epoxy group such as glycidyl (meth) acrylate and glycidyl ether (meth) acrylate; monomers having an oxazoline group such as 2-isopropenyl-2-oxazoline and 2-vinyl-2-oxazoline; monomers having an aziridine group such as 2-aziridinylethyl (meth)acrylate and (meth)acryloyl aziridine; monomers having a halogen group such as vinyl fluoride, vinylidene fluoride, vinyl chloride and vinylidene chloride; polyfunctional (meth) acrylate having a plurality of unsaturated groups in a molecule such as esterified products obtained from (meth)acrylic acid and polyhydric alcohols such as ethylene glycol, diethylene glycol, propylene glycol, 1,3-butylene glycol, neopentyl glycol, 1, 6-hexane diol, trimethylol propane, pentaerythritol and dipentaerythritol; polyfunctional (meth)acrylamide having a plurality of unsaturated groups in a molecule such as methylene bis(meth)acrylamide; polyfunctional allyl compounds having a plurality of unsaturated groups in a molecule such as diallyl phthalate, diallyl maleate and diallyl fumarate; allyl (meth) acrylate; and divinyl benzene.

In (co) polymerizing a monomer that is a material for the polymer, a chain transfer agent may be used to adjust the molecular weight. As the chain transfer agent, those having a high chain transfer coefficient are preferred, for example, compounds having a mercapto group such as mercaptoethanol, mercaptopropionic acid and t-dodecyl mercaptan; tetracarbon chloride; isopropyl alcohol; toluene; hypophosphoric acid, sodium hypophosphate and sodium hydrogen hyposulfate. These maybeusedalone, or two or more of these may be used in combination. As the amount to be used of the chain transfer agent is preferably 0.005 to 0.15 moles per mole of the entire monomer composition.

As the method for obtaining the above polymer, various conventionally known polymerization methods may be used such as oil-in-water emulsion polymerization method, water-in-oil emulsion polymerization method, suspension polymerization method, dispersion polymerization method, precipitation polymerization method, aqueous solution polymerization method and mass polymerization method. Among these, the aqueous solution polymerization method is preferably used in view of reducing polymerization costs (production costs) and safety.

As the polymerization initiator to be used in the above polymerization, any compounds which are decomposed by heat or oxidation-reduction reaction to generate radical molecules may be used. Moreover, when the polymerization is carried out by the aqueous polymerization method, it is preferable to use a polymerization initiator having water-solubility. As preferred compounds as the polymerization initiator, there may be mentioned, persulfates such as sodium persulfate, potassium persulfate and ammoniumpersulfate; water-soluble azo compounds such as 2,2'-azobis-(2-amidinopropane) dihydrochloride and 4,4'-azobis-(4-cyanopentanoic acid); thermally decomposable initiators such as hydrogen peroxide; and redox-type polymerization initiators comprising combination of hydrogen peroxide and ascorbic acid, t-butylhydroperoxide and Rongalite, potassiumpersulfateandmetalsalt, ammoniumpersulfate, sodium hydrogen hyposulfate and the like. These may be used alone or two or more of these may be used in combination. The amount to be used of the polymerization initiator may be appropriately selected according to the monomer composition that is a material for the polymer and polymerization conditions.

The polymerization conditions such as reaction temperature and reaction time in the above polymerization may be appropriately selected according to monomer composition and the species of the polymerization initiator and the like. The reaction temperature is preferably 0 to 150°C, and more preferably 40 to 105°C. The reaction time is preferably 3 to 15 hours. As the method for supplying the monomer to the reaction system in conducting the polymerization by the aqueous solution polymerization method, there may be mentioned a batchwise addition method, portionwise addition method, component dripping method, power feed method, and multistage dripping method. Moreover, the polymerization may be carried out under normal pressure condition, reduced pressure condition, or pressurized condition.

In producing the polymer mentioned above, the concentration of nonvolatile matters inclusive of the polymer contained in an aqueous solution of the polymer which is obtained when the aqueous polymerization method is used, is preferably not more than 70 % by mass. If it exceeds 70 % by mass, the viscosity may become too high.

As the above polymer having a sulfonic acid group and/or a salt thereof, a formalin condensate of β-naphthalene sulfonate, a formalin condensate of melamine sulfonate, an aromatic aminosulfonic acid polymer and a modified product of lignin sulfonic acid are preferred.

The above-mentioned formalin condensate of β-naphthalene sulfonate is preferably obtained by reacting'concentrated sulfuric acid with naphthalene oil, which is a distilled component of coal tar, to be solfonated, and subjecting the resultant to a condensation reaction with formaldehyde. And it is preferable to comprise the structural unit represented by the following general formula (1);

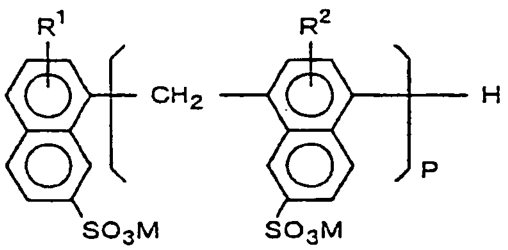

(1)

(in the formula, $R^1$ and $R^2$ may be the same or different and each represents a hydrogen atom, a methyl group or an ethyl group; M represents an alkali metal ion, an alkaline earth metal ion or a nitrogen-containing base; p represents a positive number of 1 to 10000). In most cases, naphthalene oil is composed of a mixture of naphthalene, thio naphthene, methyl naphthalene and the like.

The above formalin condensate of melamine sulfonate is preferably an aqueous polymer obtained by subjecting melamine to condensation reaction with a formaldehyde aqueous solution and sulfonating the resulting product with sodium sulfite. And it is preferable to comprise the structural unit represented by the following formula (2):

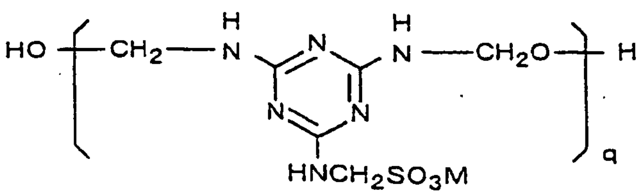

(2)

(in the formula, M represents an alkali metal ion, an alkaline earth metal ion or a nitrogen-containing base; q represents a positive number of 1 to 10000).

The above-mentioned aromatic aminosulfonic acid polymer is preferably an aqueous polymer formed by condensing aminobenzene sulfonic acid prepared by sulfonating aniline and phenol with formaldehyde. And it is preferable'to comprise the structural unit represented by the following formula (3):

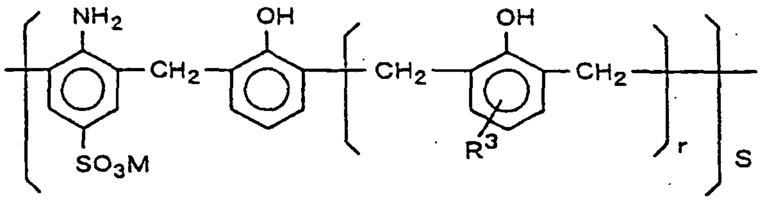

(3)

(in the formula, $R^3$ represents a hydrogen atom or an organic residue; M represents an alkali metal ion, an alkaline earth metal ion or a nitrogen-containing base; r and s each represents a positive number of 1 to 10000).

The above-mentioned modified product of lignin sulfonic acid is preferably a polymer obtained by modifying lignin sulfonic acid prepared by reacting concentrated sulfuric acid with pulp waste water, and subj ecting the resultant to a complex reaction with β-naphthalene sulfonic acid and the like. And it is preferable to comprise the structural unit represented by the following formula (4):

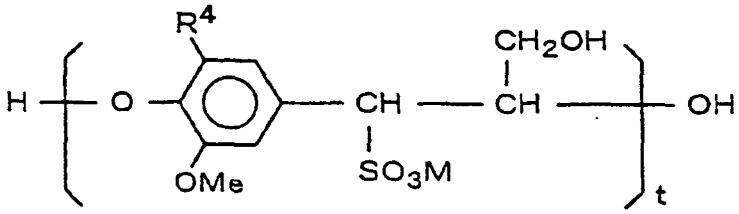

(4)

(in the formula, $R^4$ represents a salt derived from a formalin condensate of β-naphthalene sulfonate or a COOH group; M represents an alkali metal ion, an alkaline earth metal ion or a nitrogen-containing base; t'represents a positive number of 1 to 10000).

In the above general formulae (1) to (4), as the alkali metal ion represented by M, a potassium ion, a sodium ion and the like are preferably used. A calcium ion or the like is preferably used as the alkaline earth metal ion. As the nitrogen-containing base, an ammonium group, an organic amine group (organic ammonium group) and the like are preferably used.

As the above-mentioned formalin condensate of β-naphthalene sulfonate, formalin condensate of melamine sulfonate, aromatic aminosulfonic acid polymer and modified product of lignin sulfonic acid, conventionally known products, for example, commercially available products may also be used. Its production conditions and the like are not particularly limited.

The polymer having at least one species of group selected from the group consisting of a carboxyl group, a sulfonic acid group and acids thereof has a weight average molecular weight of 1,000 to 1, 000, 000. If the weight average molecular weight is less than 1,000, the function as a dispersant may be decreased. If it exceeds 1, 000, 000, the viscosity of the polymer may become too high to sufficiently exhibit the function as a dispersant by causing mixing difficulty. More preferably, it is not less than 3,000 and not more than 100,000. In this description, the weight average molecular weight is a value measured by the following measurement conditions.

(Weight average molecular weight measurement conditions)

Column: Water system GPC column "GF-7MHQ" (brand name, product of Showa Denko K.K.), one column
Carrier solution: Ultrapure water was added to disodium hydrogen phosphate dodecahydrate (34.5 g) and disodium hydrogen phosphate dihydrate (46.2 g) to set the total amount to 5000 g.
Flow rate of aqueous solution: 0.5 ml/min
Pump: "L-7110" (brand name, product of Hitachi, Ltd.) Detector: Ultraviolet (UV) detector "L-7400" (brand name, product of Hitachi, Ltd.), wavelength 214 nm
Molecular weight standard sample: sodium polyacrylate (sodium polyacrylate having a weight average molecular weight of 1,300 to 1, 360, 000, available from Sowa Science Co., Ltd.)

The analysis sample was prepared by diluting with the above-mentioned carrier solution so as to set the solid matter of the polymer to 0.1 % by mass.

However, the following measurement conditions are applied to the compounds that cannot be measured by the above-mentioned measurement conditions.

Machine type: Waters LCM1

Carrier solution: An aqueous solution obtained by adding and dissolving 115.6 g of sodium acetate trihydrate to a mixed solution comprising 10, 999 g of water and 6, 001 g of acetonitrile, and further adding an aqueous solution of 30% sodium hydroxide to pH of 6.0.

Flow rate: 0.8 ml/min
Column: Water system GPC Column "TSKgel Guard Column SWXL + G4000 SWXL + G3000 SWXL + G2000 SWXL" (product of Tosoh Corporation)
Column temperature: 35°C
Detector: Waters 410 Differential refractive detector
Molecular weight standard sample: Polyethylene glycol

The analysis sample was prepared by diluting with the above-mentioned carrier solution so as to set the solid matter of the compound to be 0.1 % by mass.

The above polymer preferably has a dispersion degree of not more than 12. When the dispersion degree exceeds 12, pseudo-particle forming function tends to be lowered due to decrease of dispersing function of the iron ore fines. It is more preferably not more than 10. The dispersion degree is represented by a ratio (Mw/Mn) between the weight average molecular weight (Mw) and the number average molecular weight (Mn), which indicates the molecular weight distribution. The number average molecular weight can be measured by the same method as the weight average molecular weight.

The polymer may be added in the solid state as it is, but more preferably, it is added in the state of an aqueous solution having solid matter concentration of 0.1 to 70%.

BRIEF DESCRIPTION OF THE DRAWINGS

Fig. 1 is a graph showing a relationship between the mixing ratio of Mara mamba iron ore fines relative to the entire mass of new materials (% by mass) and GI-0.25 (GI index of pseudo-particles having a particle size of not more than 0.25 mm) (%).
Fig. 2 is a graph showing a relationship between the mixing ratio of Mara mamba iron ore fines relative to the entire mass of the new materials (% by mass) and the productivity of the sintered ores (t/day/$m^2$).
Fig. 3 is a graph showing a relationship between the addition ratio of a granulation agent containing a polymer relative to the entiremass of rawmaterials for sinter andGI-0.25 (GI index of pseudo-particles having a particle size of not more than 0.25 mm) (%).

BEST MODE FOR CARRYING OUT THE INVENTION

The following examples describe the present invention in further detail. However, the present invention is not limited to these examples. In the following, "part (s)" refer to "part (s) by weight" and "%" refers to "% by mass", unless otherwise specified.

As the raw materials for sinter, those in an absolutely dried state were used.

In these examples, the weight average molecular weight, number average molecular weight, GI index, strength of sintered ores, product yield, productivity, slurry viscosity, average particle size of fine particles were measured by the following methods.

(Weight average molecular weight and number average molecular weight)

Column: Water system GPC column "GF-7MHQ" (brand name, product of Showa Denko K.K.), one column
Carrier solution: Ultrapure water was added to disodium hydrogen phosphate dodecahydrate (34.5 g) and disodium hydrogen phosphate dihydrate (46.2 g) to set the total amount to 5000 g.
Flow rate of aqueous solution: 0.5 ml/min

Pump: "L-7110" (brand name, product of Hitachi, Ltd.)
Detector: Ultraviolet (UV) detector"L-7400" (brandname, product of Hitachi, Ltd.), wavelength 214 nm
Molecular weight standard sample: sodium polyacrylate (sodium polyacrylate having a weight average molecular weight of 1,300 to 1, 360, 000, available from Sowa Science Co., Ltd.)

The analysis sample was prepared by diluting with the above-mentioned carrier solution so as to set the polymer to 0.1 % by mass in the solid matter.
However, the following measurement conditions are applied to the compounds that cannot be measured by the above-mentioned measurement conditions.

Machine type: Waters LCM1

Carrier solution: An aqueous solution obtained by adding and dissolving 115. 6 g of sodium acetate trihydrate to a mixed solution comprising 10, 999 g of water and 6, 001 g of acetonitrile, and further adding an aqueous solution of 30% sodium hydroxide to pH of 6.0.

Flow rate: 0.8 ml/min
Column: Water system GPC Column "TSKgel Guard Column SWXL + G4000 SWXL + G3000 SWXL + G2000 SWXL" (product of Tosoh Corporation)
Column temperature: 35°C
Detector: Waters 410 Differential refractive detector
Molecular weight standard sample: Polyethylene glycol

The analysis sample was prepared by diluting with the above-mentioned carrier solution so as to set the solid matter of the compound to be 0.1 % by mass.

(GI Index)

The GI index is measured as follows. Pseudo-particles obtained through granulation are dried at 80°C in an oven for one hour, and classified by using sieves to determine the particle size (pseudo-particle size) and the average particle size. And in accordance with a method described in Seitetsu Kenkyu No. 288 (1976), page 9, calculations are carried out based upon the following equation to find the corresponding value. In each of the measurements, the GI index of pseudo-particles having a particle size of not more than 0.25 mm after the granulation was obtained.

$$\text{GI index} = \{(\text{ratio of materials of not more than 0.25 mm prior to the granulation} - \text{ratio of materials of not more than 0.25 mm after the granulation}) / (\text{ratio of materials of not more than 0.25 mm prior to the granulation})\} \times 100$$

(Strength of sintered ores)

The strength of sintered ores was measured in accordance with the following strength measuring method (SI: Shutter Index) . This measuring method comprises sampling 10 kg of sintered ores (particles having a particle size of not less than 5 mm) after evaluating the product yield as described below in a manner so as not to change the particle size distribution, and dropping the sample onto an iron plate for four times from a height of 2 m to evaluate the rate of the particles having a particle size of not less than 10 mm.

(Product yield and productivity)

The product yield was evaluated by measuring the ratio of particles having a particle size of not less than 5 mm after dropping 50 kg of sintered ores (sintered cakes) on an iron plate for 5 times from a height of 2 m in a sintering pot test.
The productivity was calculated by the following equation:

Productivity (t/day/$m^2$) = total mass of particles having a particle size of not less than 5 mm in particle diameter after product yield evaluation (t) /sintered time (day)/surface area of sintering machine (pot) ($m^2$)

(Slurry viscosity)

After a slurry was prepared, the viscosity was measured by using a BROOK FIELD viscometer (Model DV-I+, product of BROOK FIELD Co., Ltd.) after the lapse of 3 minutes.

(Average particle size of fine particles)

By using deionized water as a solvent, measurements were carried out by using a scattering type particle size distribution measuring device LA-910W (product of Horiba, Ltd.). However, ethanol was used as a solvent for calcium hydroxide alone.

Example 1

A separable flask (SUS316 made) (capacity 5 L) equipped with a stirrer and a condenser was charged with 805.5 parts of deionized water and 40.1 parts of 45% sodium hypophosphite monohydrate aqueous solution as a chain transfer agent, and the mixture was heated to a boiling point of the system (100°C) while stirring. Successively, into the above separable flask, 2126.1 parts of 80% acrylic acid aqueous solution as a carboxyl-group-containing monomer, 112.4 parts of 15% sodium persulfate aqueous solution as a polymerization initiator and 160.2 parts of 45% sodium hypophosphite monohydrate aqueous solution were dripped. The 80% acrylic acid aqueous solution, 15% sodium persulfate aqueous solution, and 45% sodium hypophosphite monohydrate aqueous solution were dripped through respectively different dripping inlets. The 80% acrylic acid aqueous solution was dripped in 180 minutes. The 15% sodium persulfate aqueous solution was dripped in 185 minutes. The 45% sodium hypophosphite monohydrate aqueous solution was dripped in 180 minutes. During the dripping,' the reaction temperature was maintained at the boiling point of the system. After completion of the dripping, the mixture was maintained at the same temperature for 5 minutes, and 1889.0 parts of 48% sodium hydroxide aqueous solution as a neutralizer was dripped therein in 60 minutes to obtain a polymer aqueous solution (A). The weight average molecular weight of the polymer (polymer (A)) in the polymer aqueous solution (A) thus obtained was 6,200.

Next, the above-mentioned polymer aqueous solution (A) was sampled for 70 parts in the solid matter conversion, and this was diluted with deionized water to be 2460 parts. Successively, while stirring this polymer aqueous solution by a homomixer at 2000 rpm, fine particles (granulating binder) (2800 parts) "Super SS" (product of Maruo Calcium Co., Ltd., heavy calcium carbonate, average particle size 7.6 μm) were added to the polymer aqueous solution in approximately 30 minutes. The mixture was further maintained at 3000 rpm for 5 minutes so that a slurry (1) as a granulation agent for ironmanufacturing according to the present invention was obtained. The viscosity of the slurry (1) was $60 \times 10^{-3}$ Pa·s (60 cP).

Meanwhile, raw materials for sinter (materials for iron manufacturing) having the composition shown in Table 2 were prepared. The composition of the raw materials for sinter was indicated by % by mass in the absolute dry conversion, and was adjusted so that the moisture content was to be 5.5% as a whole after the mixing process.

Table 2

| Composition of raw materials for sinter | Mixing ratio (% by mass) |
|---|---|
| Mt. Newman iron ores | 20. 5 |
| Robe River iron ores | 16.5 |
| Carajas iron ores | 13.0 |
| Hamersley iron ores | 11.5 |
| Kudremuk PF | 10.0 |

(continued)

| Composition of raw materials for sinter | Mixing ratio (% by mass) |
|---|---|
| Rio Doce iron ores | 3. 5 |
| Sintered ore fine | 5.0 |
| Serpentine | 2.0 |
| Silica sand | 1.0 |
| Limestone | 17.0 |
| Total of new raw materials for sinter | 100.0 |
| Return fine | 15.0 (externally added) |
| Cokes breeze | 4.0 (externally added) |

The above-mentioned raw materials for sinter (74074 parts) were charged into a drum mixer, and preliminarily stirred at a rotational speed of 24 $min^{-1}$ for one minute. Thereafter, while stirring the raw materials for sinter at the same rotational speed, 2630 parts of the above-mentioned slurry (1) preliminarily prepared was sprayed thereon by using an atomizer in approximately 1.5 minutes. The ratio of the above-mentioned polymer (A) to the raw material for sinter was 0.05%. After the atomization, the resulting raw materials for sinter were further stirred at the same rotational speed for 3 minutes to carry out granulation.

The moisture content of the obtained pseudo-particles was measured, and after drying in an oven at 80°C for one hour, the pseudo-particles were classified by using sieves so that the GI index of the pseudo-particles was found. The results are collectively shown in Table 3.

Example 2

The polymer aqueous solution (A) obtained in Example 1 was sampled for 70 parts in the solid matter conversion, and this was diluted with deionized water to be 2460 parts. Successively, while stirring this polymer aqueous solution by a homomixer at 2000 rpm, fine particles (granulating binder) (2800 parts), "Alfa Coat" (product of ECC international incorporated, kaolin clay, average particle size 2.7 μm), were mixed with the polymer aqueous solution in approximately 30 minutes. Then, the mixture was further maintained at 3000 rpm for 5 minutes so that a slurry (2) as a granulation agent for iron manufacturing according to the present invention was obtained. The viscosity of the slurry (2) was 4400 $\times 10^{-3}$ Pa· s (4400 cP).

Thereafter, granulation was carried out in the same manner as Example 1 by using the above-mentioned slurry (2) instead of the slurry (1). The moisture content of the obtained pseudo-particles was measured, and after drying in an oven at 80°C for one hour, the pseudo-particles were classified by using sieves so that the GI index of the pseudo-particles was found. The results are collectively shown in Table 3.

Example 3

A separable flask (SUS316 made) (capacity 5 L) equipped with a stirrer and a condenser was charged with 805.5 parts of deionized water, and the mixture was heated to a boiling point of the system (100°C). Successively, into the separable flask, 2126.1 parts of 80% acrylic acid aqueous solution as a carboxyl-containing monomer, 112.4 parts of 15% sodium persulfate aqueous solution as a polymerization initiator and 88.5 parts of 45% sodium hypophosphite monohydrate aqueous solution as a chain transfer agent were dripped. The 80% acrylic acid aqueous solution, 15% sodium persulfate aqueous solution and 45% sodium hypophosphite monohydrate aqueous solution were dripped through respectively different dripping inlets. The 80% acrylic acid aqueous solution was dripped in 180 minutes. The 15% sodium persulfate aqueous solution was dripped in 185 minutes. The 45% sodium hypophosphite monohydrate aqueous solution was dripped in 180 minutes. During the dripping, the reaction temperature was maintained at the boiling point of the system. After completion of the dripping, the mixture was maintained at the same temperature for 5 minutes, and 1889.0 parts of 48% sodium hydroxide aqueous solution as a neutralizer was dripped therein in 60 minutes so that a polymer aqueous solution (B) was obtained. The weight average molecular weight of the polymer (polymer (B)) in the polymer aqueous solution (B) thus obtained was 12,200.

Next, the above-mentioned polymer aqueous solution (B) was sampled for 70 parts in the solid matter conversion, and this was diluted with deionized water to be 2460 parts. Successively, while stirring this polymer aqueous solution by a homomixer at 2000 rpm, fine particles (granulating binder) (2800 parts) "Alfa Coat" (product of ECC Inc.,

kaolin clay, average particle size 2.7 μm) were mixed with the polymer aqueous solution in approximately 30 minutes. The mixture was further maintained at 3000 rpm for 5 minutes so that a slurry (3) as a granulation agent for iron manufacturing according to the present invention was obtained. The viscosity of the slurry (3) was 4100 × $10^{-3}$ Pa·s (4100 cP).

Thereafter, granulation was carried out in the same manner as Example 1 by using the above-mentioned slurry (3) instead of the slurry (1). The moisture content of the obtained pseudo-particles was measured, and after drying in an oven at 80°C for one hour, the pseudo-particles were classified by using sieves so that the GI index of the pseudo-particles was found. The results are collectively shown in Table 3.

Example 4

A separable flask (SUS316 made) (capacity 5 L) equipped with a stirrer and a condenser was charged with 805.5 parts of deionized water, and 40.1 parts of 45% sodium hypophosphite monohydrate aqueous solution as a chain transfer agent, and the mixture was heated to a boiling point of the system (100°C). Successively, into the separable flask, 2126.1 parts of 80% methacrylic acid aqueous solution as a carboxyl-containing monomer, 112.4 parts of 15% sodium persulfate aqueous solution as a polymerization initiator and 160.2 parts of 45% sodium hypophosphite monohydrate aqueous solution were dripped. The 80% methacrylic acid aqueous solution, 15% sodium persulfate aqueous solution and 45% sodium hypophosphite monohydrate aqueous solution were dripped through respectively different dripping inlets. The 80% acrylic acid aqueous solution was dripped in 180 minutes. The 15% sodium persulfate aqueous solution was dripped in 185 minutes. The 45% sodium hypophosphite monohydrate aqueous solution was dripped in 180 minutes. During the dripping, the reaction temperature was maintained at the boiling point of the system. After completion of the dripping, the mixture was maintained at the same temperature for 10 minutes, and 1595.1 parts of 48% sodium hydroxide aqueous solution as a neutralizer was then dripped therein in 60 minutes so that a polymer aqueous solution (C) was obtained. The weight average molecular weight of the polymer (polymer (C)) in the polymer aqueous solution (C) thus obtained was 6,300.

Next, the above-mentioned polymer aqueous solution (C) was sampled for 70 parts in the solid matter conversion, and this was diluted with deionized water to be 2460 parts. Successively, while stirring this polymer aqueous solution by a homomixer at 2000 rpm, fine particles (granulating binder) (2800 parts) "Super SS" (product of Maruo Calcium Co., Ltd., heavy calcium carbonate, average particle size 7.6 μm) were added to the polymer aqueous solution in approximately 30 minutes, and the mixture was further maintained at 3000 rpm for 5 minutes so that a slurry (4) as a granulation agent for iron manufacturing according to the present invention was obtained. The viscosity of the slurry (4) was 55 × $10^{-3}$ Pa·s (55 cP).

Thereafter, granulation was carried out in the same manner as Example 1 by using the above-mentioned slurry (4) instead of the slurry (1). The moisture content of the obtained pseudo-particles was measured, and after drying in an oven at 80°C for one hour, the pseudo-particles were classified by using sieves so that the GI index of the pseudo-particles was found. The results are collectively shown in Table 3.

Example 5

A separable flask (SUS316 made) (capacity 1 L) equipped with a stirrer and a condenser was charged with 355 parts of deionized water and 98 parts of maleic anhydride as a carboxyl-containing monomer and 80 parts of sodium hydroxide as a neutralizer so as to neutralize the mixture, and the mixture was heated to aboilingpoint of the system (100°C) while stirring. Successively, into the separable flask, 180 parts of 40% acrylic acid aqueous solution as a carboxyl-containingmonomer, 100 parts of 10% sodium persulfate aqueous solution as a polymerization initiator and 100 parts of 14% hydrogenperoxide aqueous solution were dripped. The 40% acrylic acid aqueous solution, the 10% sodiumpersulfate aqueous solution and the 14% hydrogen peroxide aqueous solution were dripped through respectively different dripping inlets in 4 hours. During the dripping, the reaction temperature was maintained at the boiling point of the system. After completion of the dripping, the mixture was maintained at the same temperature for 60 minutes, and 57 parts of 49% sodium hydroxide aqueous solution as a neutralizer was dripped therein in 60 minutes so that a polymer aqueous solution (D) was obtained. The weight average molecular weight of the polymer (polymer (D)) in the polymer aqueous solution (D) thus obtained was 5,900.

Next, the above-mentioned polymer aqueous solution (D) was sampled for 70 parts in the solid matter conversion, and this was diluted with deionized water to be 2460 parts.
Successively, while stirring this polymer aqueous solution by a homomixer at 2000 rpm, fine particles (granulating binder) (2800 parts), "Brilliant 1500" (product of Shiroishi-kougiyou Co., Ltd., light calcium carbonate, average particle size 1.1 μm), were mixed with the polymer aqueous solution in approximately 30 minutes. The mixture was further maintained at 3000 rpm for 5 minutes so that a slurry (5) as a granulation agent for iron manufacturing according to the present invention was obtained. The viscosity of the slurry (5) was 120 × $10^{-3}$ Pa·s (120 cP).

Thereafter, granulation was carried out in the same manner as Example 1 by using the above-mentioned slurry (5) instead of the slurry (1). The moisture content of the obtained pseudo-particles was measured, and after drying in an oven at 80°C for one hour, the pseudo-particles were classified by using sieves so that the GI index of the pseudo-particles was found. The results are collectively shown in Table 3.

Example 6

A separable flask (SUS316 made) (capacity 1 L) equipped with a stirrer and a condenser was charged with 1400 parts of deionized water, and heated to a boiling point of the system (100°C). Successively, into the separable flask, 578.5 parts of 80% acrylic acid aqueous solution as a carboxyl-containing monomer and 62.5 parts of 15% sodium persulfate aqueous solution were dripped as a polymerization initiator through respectively different dripping inlets in 2 hours. During the dripping, the reaction temperature was maintained at the boiling point of the system. After completion of the dripping, the mixture was maintained at the same temperature for 120 minutes, and 353 parts of 48% sodium hydroxide aqueous solution as a neutralizer was dripped therein in 60 minutes so that a polymer aqueous solution (E) was obtained. The weight average molecular weight of the polymer (polymer (E)) in the polymer aqueous solution (E) thus obtained was 48,200.

Next, the above-mentioned polymer aqueous solution (E) was sampled for 70 parts in the solid matter conversion, and this was diluted with deionized water to be 2460 parts. Successively, while stirring this polymer aqueous solution by a homomixer at 2000 rpm, fine particles (granulating binder) (2800 parts) "Super SS" (product of Maruo Calcium Co., Ltd., heavy calcium carbonate, average particle size 7.6 μm) were added to the polymer aqueous solution in approximately 30 minutes. The mixture was further maintained at 3000 rpm for 5 minutes so that a slurry (6) as a granulation agent for ironmanufacturing according to the present invention was obtained. The viscosity of the slurry (6) was $55 \times 10^{-3}$ Pa·s (55 cP).

Thereafter, granulation was carried out in the same manner as Example 1 by using the above-mentioned slurry (6) instead of the slurry (1). The moisture content of the obtained pseudo-particles was measured, and after drying in an oven at 80°C for one hour, the pseudo-particles were classified by using sieves so that the GI index of the pseudo-particles was found. The results are collectively shown in Table 3.

Example 7

A reaction vessel made of glass, and equipped with a thermometer, stirrer, dropping funnel, nitrogen-introducing tube and reflux condenser was charged with 1698 parts of deionized water. Inside of the reaction vessel was substituted by nitrogen while stirring, and heated to 80°C in nitrogen atmosphere.

Meanwhile, 1668 parts of methoxypolyethylene glycol monomethacrylate (average addition number of moles of ethylene oxide = 25) as a polyalkylene glycol chain-containing monomer, 332 parts of methacrylic acid as an acid group-containing monomer and 500 parts of deionized water were mixed. 16.7 parts of mercaptopropionic acid as a chain transfer agent was further mixed with this mixture uniformly so that a monomer mixture aqueous solution was prepared.

Next, this monomer mixture aqueous solution and a 10% ammonium persulfate aqueous solution as a polymerization initiator were respectively put into dropping funnels, and the monomer mixture aqueous solution and 184 parts of the 10% ammonium persulfate aqueous solution were dripped into the deionizedwater in the reaction vessel in 4 hours. After completion of the dripping, 46 parts of the 10% ammonium persulfate aqueous solution was further dripped into the reaction solution in the reaction vessel in one hour. Thereafter, the reaction solution in the reaction vessel was continuously maintained at 80°C for one hour so that the polymerization reactionwas completed. Then, this reaction solution was neutralized with a 30% sodium hydroxide aqueous solution so that a polymer aqueous solution (F) having a concentration of 43.2% in nonvolatile matters. The weight average molecular weight of the polymer (polymer (F)) in the polymer aqueous solution (F) thus obtained was 23,800.

Next, the above-mentioned polymer aqueous solution (F) was sampled for 140 parts in the solid matter conversion, and this was diluted with deionized water to be 2530 parts. Successively, while stirring this polymer aqueous solution by a homomixer at 2000 rpm, fine particles (granulating binder) (2800 parts), "Brilliant 1500" (product of Shiroishi-kougiyou Co., Ltd., light calcium carbonate, average particle size 1.1 μm), were added to the polymer aqueous solution in approximately 30 minutes. The mixture was further maintained at 3000 rpm for 5 minutes so that a slurry (7) as a granulation agent for iron manufacturing according to the present invention was obtained. The viscosity of the slurry (7) was $45 \times 10^{-3}$ Pa·s (45 cP).

Thereafter, granulation was carried out in the same manner as Example 1 by using 2665 parts of the above-mentioned slurry (7) instead of 2630 parts of the slurry (1). The moisture content of the obtained pseudo-particles was measured, and after drying in an oven at 80°C for one hour, the pseudo-particles were classified by using sieves so that the GI index of the pseudo-particles was found. The results are collectively shown in Table 3.

Example 8

A reaction vessel made of glass, and equipped with a thermometer, stirrer, dropping funnel, nitrogen-introducing tube and reflux condenser was charged with 1291 parts of deionized water, 1812 parts of a polyalkylene glycol monoalkenyl ether monomer as a polyalkylene glycol chain-containing monomer that is formed by adding 50 moles in average of ethylene oxide to 3-methyl-3-butene-1-ol, and 188 parts of maleic anhydride as an acid group-containing monomer so that a reaction solution was prepared. Then, this reaction solution was heated to 60°C.

Successively, to this reaction solution, 50 parts of a 15% aqueous solution of "NC-32W" (brand name; product of Nippoh Chemicals Co., Ltd., 2,2'-azobis-2 methylpropion amidine hydrochloride having a concentration of 87%) as a polymerization initiator was added and the mixture was stirred for 7 hours. Furthermore, the mixture was heated to 80°C, and then stirred for one hour so that the polymerization reaction was completed.

Thereafter, this reaction solution was neutralized in a 30% sodium hydroxide aqueous solution so that polymer aqueous solution (G) having a concentration of nonvolatile matters of 55.1%. The weight average molecular weight of the polymer (polymer (G)) in the polymer aqueous solution (G) thus obtained was 26,200.

Next, the above-mentioned polymer aqueous solution (G) was sampled for 140 parts in the solid matter conversion, and this was diluted with deionized water to be 2460 parts. Successively, while stirring this polymer aqueous solution by a homomixer at 3000 rpm, 2800 g of calcium hydroxide (product of Wako Pure Chemical Industries, Ltd., average particle size 14.8 μm was added to the polymer aqueous solution as fine particles (granulating binder) in approximately 30 minutes. This mixture was further maintained at 5000 rpm for 5 minutes so that a slurry (8) as a granulation agent for iron manufacturing according to the present invention was obtained. The viscosity of the slurry (8) was $65 \times 10^{-3}$ Pa·s (65 cP).

Thereafter, granulation was carried out in the same manner as Example 1 by using 2665 parts of the above slurry (8) instead of 2630 parts of the slurry (1). The moisture content of the obtained pseudo-particles was measured, and after drying in an oven at 80°C for one hour, the pseudo-particles were classified by using sieves so that the GI index of the pseudo-particles was found. The results are collectively shown in Table 3.

Example 9

While stirring deionized water (2390 parts) by a homomixer at 3000 rpm, 2800 parts of "Super SS" (product of Maruo Calcium Co., Ltd., heavy calcium carbonate, average particle size 7.6 μm) as fine particles were mixed with the deionized water in approximately 30 minutes. The mixture was further maintained at 3000 rpm for 5 minutes so that a slurry (9) as a granulation agent for iron manufacturing according to the present invention was obtained. The viscosity of the slurry (9) was $48.6 \times 10^{-2}$ Pa·s (486 cP).

Thereafter, granulation was carried out in the same manner as Example 1 except that 2695 parts of the above-mentioned slurry (9) was used instead of 2630 parts of the slurry (1). Themoisture content of the obtained pseudo-particles was measured, and after drying in an oven at 80°C for one hour, the pseudo-particles were classified by using sieves so that the GI index of the pseudo-particles was found. The results are collectively shown in Table 3.

Comparative Example 1

Granulation was carried out in the same manner as Example 1 except that 1195 parts of water and 1400 parts of "Super SS" (product of Maruo Calcium Co., Ltd., heavy calcium carbonate, average particle size 7.6 μm) were used as fine particles (granulating binder) instead of 2630 parts of the slurry (1). The moisture content of the obtained pseudo-particles was measured, and after drying in an oven at 80°C for one hour, the pseudo-particles were classified by using sieves so that the GI index of the pseudo-particles was found. The results are collectively shown in Table 3.

Comparative Example 2

Granulation was carried out in the same manner as Example 1 except that 1195 parts of water and 1400 parts of "Alfa Coat" (product of ECC Inc., kaolin clay, average particle size 2.7 μm) were used as fine particles (granulating binder) instead of 2630 parts of the slurry (1). The moisture content of the obtained pseudo-particles was measured, and after drying in an oven at 80°C for one hour, the pseudo-particles were classified by using sieves so that the GI index of the pseudo-particles was found. The results are collectively shown in Table 3.

Comparative Example 3

Granulation was carried out in the same manner as Example 1 except that 1195 parts of water and 1400 parts of "Brilliant 1500" (product of Shiroishi-kougiyou Co., Ltd., light calcium carbonate, average particle size 1.1 μm) were

used as fine particles (granulating binder) instead of 2630 parts of the slurry (1). The moisture content of the obtained pseudo-particles was measured, and after drying in an oven at 80°C for one hour, the pseudo-particles were classified by using sieves so that the GI index of the pseudo-particles was found. The results are collectively shown in Table 3.

Comparative Example 4

Granulation was carried out in the same manner as Example 1 except that 1195 parts of water and 1400 parts of calcium hydroxide (product of Wako Pure Chemical Industries, Ltd., average particle size 14.8 μm) were used as fine particles (granulating binder) instead of 2630 parts of the slurry (1). The moisture content of the obtained pseudo-particles was measured, and after drying in an oven at 80°C for one hour, the pseudo-particles were classified by using sieves so that the GI index of the pseudo-particles was found. The results are collectively shown in Table 3.

Comparative Example 5

Granulation was carried out in the same manner as Example 1 except that 1195 parts of water was used instead of 2630 parts of the slurry (1). The moisture content of the obtained pseudo-particles was measured, and after drying in an oven at 80°C for one hour, the pseudo-particles were classified by using sieves so that the GI index of the pseudo-particles was found. The results are collectively shown in Table 3.

Reference Example 1

The above-mentioned polymer (C) was sampled for 6 parts in the solid matter conversion, and this was diluted with deionized water to be 2530 parts. Successively, while stirring this polymer aqueous solution by a homomixer at 2000 rpm, 3795 parts of "Brilliant 1500" (product of Shiroishi-kougiyou Co., Ltd., precipitated calcium carbonate, average particle size 1.1 μm) were added as fine particles (granulating binder) to the polymer aqueous solution in approximately 30 minutes. The mixture was further maintained at 3000 rpm for 5 minutes so that a reference slurry was obtained. The viscosity of this slurry was 16 Pa·s (16000 cP). Thereafter, the same processes as in Example 1 were carried out except that 3163 parts of the reference slurry was used instead of 2630 parts of the slurry (1). The GI index of the pseudo-particles was found to be 77.1.

Table 3

| | Fine particles | Average particle size of fine particles (μm) | GI index | Moisture content (%) |
|---|---|---|---|---|
| Example 1 | Heavy calcium carbonate | 7.6 | 97.1 | 6.8 |
| Example 2 | Kaolin clay | 2. 7 | 96. 8 | 6. 9 |
| Example 3 | Kaolin clay | 2. 7 | 97. 3 | 6. 9 |
| Example 4 | Heavy calcium carbonate | 7. 6 | 96. 4 | 6. 9 |
| Example 5 | Light calcium carbonate | 1.1 | 96.5 | 6.8 |
| Example 6 | Heavy calcium carbonate | 7.6 | 94.7 | 6.9 |
| Example 7 | Light calcium carbonate | 1. 1 | 95. 8 | 6. 8 |
| Example 8 | Calcium hydroxide | 14. 8 | 96. 1 | 6. 9 |
| Example 9 | Heavy calcium carbonate | 7. 6 | 79. 4 | 6. 9 |
| Comparative Ex. 1 | Heavy calcium carbonate | 7. 6 | 76. 5 | 6. 9 |
| Comparative Ex. 2 | Kaolin clay | 2. 7 | 80. 1 | 6. 9 |
| Comparative Ex. 3 | Light calcium carbonate | 1. 1 | 75. 2 | 6. 9 |
| Comparative Ex. 4 | Calcium hydroxide | 14. 8 | 71. 5 | 6. 8 |
| Comparative Ex. 5 | None | - | 69. 4 | 7. 0 |

The results shown in Table 3 indicate that the present invention makes it possible to remarkably increase the GI index by adding the above slurry of fine particles to carry out granulation. Therefore, the granulation method of

materials for iron manufacturing in accordance with the present invention exhibits superior effects in pseudo-granulating raw materials for sinter.

Example 10

The same processes as in Example 1 were carried out to obtain pseudo-particles. The obtained pseudo-particles were sintered in the pot test with a scale of 50 kg to obtain sintered ores. As the test conditions, the sintering pot had a size of 300 mm in diameter and 600 mm in height with a layer thickness of 550mm, and the suctionnegativepressurewas 9.8 kPa (constant). The productivity, product yield and strength of sintered ores of the resulting sintered ores were measured. The results are collectively shown in Table 4.

Comparative Example 6

The same processes as in Comparative Example 1 were carried out except that 840 parts of burnt lime was used instead of 1400 parts of super SS195 and that 1545 parts of water was used instead of 1195 parts of water in Comparative Example 1 to obtain pseudo-particles. The same measuring processes as in Example 10 were carried out to determine the productivity, product yield and strength of sintered ores. The results are collectively shown in Table 4.

Reference Example 2

The same processes as in Comparative Example 1 were carried out to obtain pseudo-particles. The same measuring processes as in Example 10 were carried out to determine the productivity, product yield and strength of sintered ores. The results are collectively shown in Table 4.

Table 4

| | Example 10 | Comparative Example 6 | Reference Example 2 |
|---|---|---|---|
| Granulation additive | Polymer aqueous solution (A)/Heavy calcium carbonate (slurry) | Burnt lime | Polymer aqueous solution (A)/Heavy calcium carbonate (powder) |
| Sintering time (minute) | 30. 8 | 34. 9 | 31. 8 |
| Productivity (t/day/$m^2$) | 30. 4 | 26. 6 | 29. 2 |
| Product yield (%) | 76. 5 | 76.0 | 75. 9 |
| Strength of sintered ore (%) | 83. 3 | 82. 0 | 81. 7 |

The results shown in Table 4 indicate that the granulation property of the materials for iron manufacturing can be improved by using the above slurry of fine particles as a granulating binder. Thereby, it becomes possible to improve the productivity of the sintering machine, product yield and strength of the sintered ores formed by sintering the pseudo-particles. Since sintered ores having weak sintered ore strength tend to generate fine particles, return fines increase, and the product yield and the production efficiency become decreased.

Example 11

Particles of not more than 0.25 mm contained in limestone A shown in Table 5 were pulverized by a ball mill to prepare limestone A-1 having a ratio of particles of 1 to 10 μm as shown in Table 5.

Moreover, raw materials for sinter (materials for iron manufacturing) having a composition shown in Table 2 were prepared. The composition of the raw materials for sinter was indicated by% by mass in the absolute dry conversion, and adjusted so that the moisture content was to be 5.5% as a whole after the mixing. Limestone A-1 shown in Table 5 was used as the limestone.

Meanwhile, the polymer (G) shown in Example 8 was sampled for 140 parts in the solidmatter conversion, and this was diluted with deionized water to be 2460 parts. Successively, while stirring this polymer aqueous solution by a homomixer at 2000 rpm, fly ash (average particle size 17 μm) (1050 parts), which serves as fine particles of the present invention, was added to the polymer aqueous solution in approximately 30 minutes. The mixture was further maintained at 3000 rpm for 5 minutes to obtain a slurry (10) as a granulation agent for iron manufacturing according to the present invention. The viscosity of the slurry (10) was 0.052 Pa·s (52 cP).

The above-mentioned rawmaterials for sinter (74074 parts) were charged into a drum mixer, and preliminarily stirred at a rotational speed of 24 $min^{-1}$ for one minute. Thereafter, while stirring the raw materials for sinter at the same rotational speed, 1755 parts of the above-mentioned slurry (10) preliminarily prepared was added thereto by using an atomizer in approximately 1.5 minutes. The ratio of the above-mentioned polymer (G) to the raw materials for sinter was 0.1%. After the atomization, the resulting raw materials for sinter were further stirred at the same rotational speed for 3 minutes to carry out granulation. The resulting pseudo-particles were sintered in the pot test with a scale of 50 kg to obtain sintered ores. As the test conditions, the sintering pot had a size of 300 mm in diameter and 600 mm in height with a layer thickness of 550 mm, and the suction negative pressure was 9.8 kPa (constant). The productivity, product yield and strength of sintered ores of the resulting sintered ores were measured. The results are collectively shown in Table 6.

Example 12

Particles of not more than 0.25 mm contained in limestone B shown in Table 5 were pulverized by a ball mill to prepare limestone B-1 having a ratio of particles of 1 to 10 μm as shown in Table 5. The same processes as in Example 11 were carried out except that limestone B-1 was used as the limestone instead of limestone A-1 shown in Table 5, and the productivity, product yield and strength of sintered ores were measured. The results are collectively shown in Table 6.

Example 13

As the particle portion (16.4%) of not more than 0.25 mm in limestone B, a portion corresponding to 6.4% is replaced by heavy calcium carbonate, Nanox #30 (brand name, product of Maruo Calcium Co., Ltd.), which had a ratio of portion corresponding to a particle-size range from 1 to 10 μm of 97%. That is, in the entire limestone, the ratio derived from the portion of not more than 0.25 mm of limestone B was 10.0%, and the ratio derived from Nanox #30 was 6.4% (limestone B-2).

The same processes as in Example 11 were carried out except that with respect to the limestone, limestone B-2 was used instead of limestone A-1 shown in Table 5, and the productivity, product yield and strength of sintered ores were measured. The results are collectively shown in Table 6.

Reference Example 3

The same processes as in Example 11 were carried out except that limestone A was used instead of limestone A-1 shown in Table 5, and the productivity, product yield and strength of sintered ores were measured. The results are collectively shown in Table 6.

Reference Example 4

The same processes as in Example 11 were carried out except that limestone B was used instead of limestone A-1 shown in Table 5, and the productivity, product yield and strength of sintered ores were measured. The results are collectively shown in Table 6.

Table 5

| | Not less than 2. 8 mm | 1 ~ 2. 8 mm | 0.5~ 1 mm | 0. 25~ 0.5 mm | Not more than 0. 25 mm | Ratio of particles of 1 to 10 μ m to the entire limestone (contained in particles of not more than 0.25 mm) |
|---|---|---|---|---|---|---|
| Limestone A | 8. 6 | 41. 0 | 19. 6 | 13.6 | 17. 2 | 2. 1 |
| Limestone B | 25. 0 | 40. 5 | 11. 2 | 6. 9 | 16. 4 | 2. 6 |
| Limestone A-1 | 8.6 | 41. 0 | 19. 6 | 13. 6 | 17.2 | 5. 0 |

(continued)

| | Not less than 2. 8 mm | 1 ~ 2. 8 mm | 0.5~ 1 mm | 0. 25~ 0.5 mm | Not more than 0. 25 mm | Ratio of particles of 1 to 10 μ m to the entire limestone (contained in particles of not more than 0.25 mm) |
|---|---|---|---|---|---|---|
| Limestone B-1 | 25. 0 | 40.5 | 11. 2 | 6.9 | 16.4 | 4. 1 |
| Limestone B-2 | 25. 0 | 40.5 | 11. 2 | 6.9 | 16.4 | 7.8 |

Table 6

| | Ratio of particles of 1 to 10 μm to the entire limestone (%) | Ratio of particles of 1 to 10 μm to particle portion of not more than 0.25mm (%) | Sintering time (min) | Productivity (t/day/$m^2$) | Product yield (%) | Strength of sintered ore (%) |
|---|---|---|---|---|---|---|
| Example 11 | 5. 0 | 29. 1 | 31. 5 | 30. 8 | 77. 1 | 83. 8 |
| Example 12 | 4. 1 | 25. 0 | 32. 1 | 30. 3 | 77. 4 | 82. 4 |
| Example 13 | 7. 8 | 47. 6 | 31. 5 | 31. 0 | 77. 8 | 83. 5 |
| Reference Example 3 | 2. 1 | 12. 2 | 32. 4 | 29. 6 | 76. 2 | 82. 2 |
| Reference Example 4 | 2. 6 | 15. 9 | 32. 7 | 29. 4 | 76. 4 | 81. 0 |

Example 14

Raw materials for sinter (materials for iron manufacturing) (70000 parts) having a composition shown in formulation 1 of Table 7 were prepared. That is, 14113 parts of formulation 1-A and 55887 parts of formulation 1-B were prepared. Moreover, water was added to formulation 1-A and formulation 1-B to adjust to be 15509 parts (moisture content 9 % by mass) and 59454 parts (moisture content 6 % by mass), respectively.

Table 7

| Formulation | | Formulation 1 (20.2% selected) | | Formulation 2 (13.8% selected) | | Formulation 3 (40.3% selected) | | Formulation 4 (0% selected) |
|---|---|---|---|---|---|---|---|---|
| | | Formulation 1-A | Formulation 1-B | Formulation 2-A | Formulation 2-B | Formulation 3-A | Formulation 3-B | |
| Robe River iron ores | Above sieve | - | 3.14 | - | 3.14 | - | 3.14 | 3.14 |
| | Below sieve | 12.58 | - | 12.58 | _ | 12.58 | - | 12.58 |
| Carajas iron ores | | - | 12.38 | - | 12.38 | - | 12.38 | 12.38 |
| Hamersley iron ores | Above sieve | - | 7.33 | - | 7.33 | - | 7.33 | 7.33 |
| | Below sieve | - | 23.14 | - | 23.14 | 23.14 | - | 23.14 |
| MBRPF | | 11.24 | 1.62 | 3.71 | 9.15 | 11.90 | 0.96 | 12.86 |
| Sintered ore fine | | - | 4.29 | - | 4.29 | - | 4.29 | 4.29 |
| Serpentinite | | - | 1.90 | - | 1.90 | - | 1.90 | 1.90 |
| Silica sand | | - | 1.43 | - | 1.43 | - | 1.43 | 1.43 |
| Limestone | | - | 16.19 | - | 16.19 | - | 16.19 | 16.19 |
| Dust | | | 4.76 | | 4.76 | | 4.76 | 4.76 |
| Total of new materials for sinter (100%) | | 23.82 | 76.18 | 16.29 | 83.71 | 47.62 | 52.38 | 100 |
| External additives | Return fine | - | 14.29 | - | 14.29 | - | 14.29 | 14.29 |
| | Cokes breeze | - | 3.81 | - | 3.81 | - | 3.81 | 3.81 |

In Table 7, "MBRPF" refers to a pellet feed supplied from MBR Co., Ltd of Brazil mines.

A high-speed stirring mixer (Eirich Mixer R05T, product of Nippon Eirich Co., Ltd.) having a rotary pan section and an agitator section was charged with 15509 parts of the above-mentioned raw materials for sinter 1-A (moisture content 9 % by mass) and 350 parts of heavy calcium carbonate having an average particle size of 7 μm. The composition (rawmaterials for sinter) was sprayed (added) with 181 parts of sodium polyacrylate aqueous solution with a weight average molecular weight of 6000 that had been preliminarily adjusted to nonvolatile matters of 4.8% in approximately 40 seconds by using an atomizer as a polymer having a carboxyl group and/or a salt thereof, and a selective granulation product was obtained. At this time, the rotational speed of the pan was 30 $min^{-1}$, and the rotational speed of the agitator was 450 $min^{-1}$. Thereafter, a drum mixer was charged with 16040 parts of the selective granulated product, 59454 parts of raw materials for sinter 1-B (moisture content 6 % by mass) and 350 parts of burnt lime, and after preliminarily stirring for one minute at a rotational speed of 24 $min^{-1}$, to this was sprayed (added) with 500 parts of water in 1.5 minutes. After the atomization, the mixture was further stirred at the same rotational speed for 3 minutes to carry out granulation (pseudo-particle formation).

The ratio of sodium polyacrylate to the raw materials for sinter was 0.0125%. Moreover, the resulting pseudo-particles were sintered in the pot test with a scale of 50 kg to obtain sintered ores. As the test conditions, the sintering pot had a size of 300 mm in diameter and 600 mm in height with a layer thickness of 550 mm, and the suction negative pressure was 9.8 kPa (constant). The productivity of the resulting sintered ores was measured. The results are collectively shown in Table 8.

Example 15

The same processes as in Example 14 were carried out except that 700 parts of heavy calcium carbonate having an average particle size of 7 μm was used instead of 350 parts of heavy calcium carbonate having an average particle size of 7 μm. Then, the productivity of the resulting sintered ores was measured. The results are collectively shown in Table 8.

Reference Example 5

The same processes as in Example 14 were carried out except that heavy calcium carbonate (350 parts) having an average particle size of 7 μm was not used. Then, the productivity of the resulting sintered ores was measured. The results are collectively shown in Table 8.

Example 16

The same processes as in Example 14 were carried out except that 350 parts of heavy calcium carbonate having an average particle size of 25 μm was used instead of 350 parts of heavy calcium carbonate having an average particle size of 7 μm. Then, the productivity of the resulting sintered ores was measured. The results are collectively shown in Table 8.

Example 17

The same processes as in Example 14 were carried out except that 350 parts of fly ash having an average particle size of 17 μm was used instead of 350 parts of heavy calcium carbonate having an average particle size of 7 μm. Then, the productivity of the resulting sintered ores was measured. The results are collectively shown in Table 8.

Example 18

The same processes as in Example 14 were carried out except that 176 parts of sodium polyacrylate aqueous solution with a weight average molecular weight of 6000 that had been preliminarily adjusted to the nonvolatile matters of 2.0% was used instead of 181 parts of sodiumpolyacrylate aqueous solution with a weight average molecular weight of 6000 that had been preliminarily adjusted to the nonvolatile matters of 4.8%. Then, the productivity of the resulting sintered ores was measured. That is, the ratio of sodium polyacrylate to the raw materials for sinter was 0.005%. The results are collectively shown in Table 8.

Example 19

The same processes as in Example 14 were carried out except that 172 parts of water was used instead of 181 parts of sodium polyacrylate aqueous solution with a weight average molecular weight of 6000 that had been

preliminarily adjusted to the nonvolatile matters of 4.8%. Then, the productivity of the resulting sintered ores was measured. The results are collectively shown in Table 8.

Reference Example 6

The same processes as in Example 19 were carried out except that 350 parts of limestone having an average particle size of 280 μm was used instead of 350 parts of heavy calcium carbonate having an average particle size of 7 μm. Then, the productivity of the resulting sintered ores was measured, and found to be 22.2t/day/$m^2$.

Example 20

The same processes as in Example 19 were carried out except that 350 parts of limestone was not added and 168 parts of an aqueous solution of sodium polyacrylate with a weight average molecular weight of 6000 that had been preliminarily adjusted to the nonvolatile matters of 20.8% was sprayed (added) in 1.5 minutes instead of 500 parts of water to be sprayed (added) in 1.5 minutes. Then, the productivity of the resulting sintered ores was measured. The results are collectively shown in Table 8.

Example 21

The same processes as in Example 19 were carried out except that 350 parts of heavy calcium carbonate having an average particle size of 25 μm was used instead of 350 parts of calcium carbonate having an average particle size of 7 μm, 350 parts of heavy calcium carbonate having an average particle size of 7 μm was used instead of 350 parts of burnt lime, and 168 parts of an aqueous solution of sodium polyacrylate with a weight average molecular weight of 6000 that had been preliminarily adjusted to the nonvolatile matters of 20.8% was sprayed (added) in 1.5 minutes instead of 500 parts of water to be sprayed (added) in 1.5 minutes. Then, the productivity of the resulting sintered ores was measured. The results are collectively shown in Table 8.

Example 22

Raw materials for sinter (materials for iron manufacturing) (70000 parts) having a composition shown in formulation 2 of Table 7 were prepared. That is, 9655 parts of formulation 2-A and 60345 parts of formulation 2-B were prepared. Moreover, water was added to formulation 2-A and formulation 2-B to adjust to be 9305 parts (moisture content 9 % by mass) and 65810 parts (moisture content 6.5 % by mass), respectively.

A high-speed stirring mixer (Eirich Mixer R05T, product of Nippon Eirich Co., Ltd.) having a rotary pan section and an agitator section was charged with 10610 parts of the above-mentioned raw materials for sinter 2-A (moisture content 9 % by mass) and 350 parts of heavy calcium carbonate having an average particle size of 7 μm. The composition (rawmaterials for sinter) was sprayed (added) with 78 parts of a sodium polyacrylate aqueous solution with a weight average molecular weight of 6000 that had been preliminarily adjusted to the nonvolatile matters of 11.3% in approximately 40 seconds by using an atomizer, as the polymer having a carboxyl group and/or a salt thereof, to obtain a selective granulated product. At this time, the rotational speed of the pan was 30 $min^{-1}$, and the rotational speed of the agitator was 450 $min^{-1}$. Thereafter, a drum mixer was charged with 9768 parts of the selective granulated product, 64540 parts of raw materials for sinter 2-B (moisture content 6.5 % by mass) and 350 parts of burnt lime, and after preliminarily stirring for one minute at a rotational speed of 24 $min^{-1}$, to this was sprayed (added) with 450 parts of water in 1.5 minutes. After the atomization, the mixture was further stirred at the same rotational speed for 3 minutes to carry out granulation (pseudo-particle formation).

The ratio of sodium polyacrylate to the raw materials for sinter was 0.0125%. Moreover, the resulting pseudo-particles were sintered in the pot test with a scale of 50 kg to obtain sintered ores. As the test conditions, the sintering pot had a size of 300 mm in diameter and 600 mm in height with a layer thickness of 550 mm, and the suction negative pressure was 9.8 kPa (constant). The productivity of the resulting sintered ores was measured. The results are collectively shown in Table 8.

Example 23

Raw materials for sinter (materials for iron manufacturing)(70000 parts) having a composition shown in formulation 3 of Table 7 were prepared. That is, 28226 parts of formulation 3-A and 41774 parts of formulation 3-B were prepared. Moreover, water was added to formulation 3-A and formulation 3-B to adjust to be 31018 parts (moisture content 9 % by mass) and 44440 parts (moisture content 6 % by mass), respectively.

A high-speed stirring mixer (Eirich Mixer R05T, product of Nippon Eirich Co., Ltd.) having a rotary pan section

and an agitator section was charged with 31018 parts of the above-mentioned raw materials for sinter 3-A (moisture content 9 % by mass) and 350 parts of heavy calcium carbonate having an average particle size of 7 μm, The composition (raw materials for sinter) was sprayed (added) with 188.82 parts of a sodium polyacrylate aqueous solution with a weight average molecular weight of 6000 that had been preliminarily adjusted to the nonvolatile matters of 9.8% in approximately 40 seconds by using an atomizer, as the polymer having a carboxyl group and/or a salt thereof, to obtain a selective granulated product. At this time, the rotational speed of the pan was 30 $min^{-1}$, and the rotational speed of the agitator was 450 $min^{-1}$. Thereafter, a drum mixer was charged with 31548 parts of the selective granulated product, 44440 parts of raw materials for sinter 3-B (moisture content 6 % by mass) and 350 parts of burnt lime, and after preliminarily stirring for one minute at a rotational speed of 24 $min^{-1}$, to this was sprayed (added) with 50 parts of water in 1.5 minutes. After the atomization, the mixture was further stirred at the same rotational speed for 3 minutes to carry out granulation (pseudo-particle formation).

The ratio of sodium polyacrylate to the raw materials for sinter was 0.0264%. Moreover, the resulting pseudo-particles were sintered in the pot test with a scale of 50 kg to obtain sintered ores. As the test conditions, the sintering pot had a size of 300 mm in diameter and 600 mm in height with a layer thickness of 550 mm, and the suction negative pressure was 9.8 kPa (constant). The productivity of the resulting sintered ores was measured. The results are collectively shown in Table 8.

Comparative Example 7

The same processes as in Reference Example 5 were carried out except that 172 parts of water was used instead of sodium polyacrylate aqueous solution with a weight average molecular weight of 6000 that had been preliminarily adjusted to the nonvolatile matters of 4.8%, and 840 parts of burnt lime was used instead of 350 parts of burnt lime, and 700 parts of water was used instead of 500 parts of water. Then, the productivity of the resulting sintered ores was measured. The results are collectively shown in Table 8.

Comparative Example 8

Raw materials for sinter (materials for iron manufacturing) having a composition shown as formulation 4 in Table 7 were prepared.

Water was added to 70000 parts of the above raw materials for sinter for adjusting to 74866 parts (moisture content 6,5%). This mixture was charged into a drummixer, and was sprayed (added) with 438 parts of sodium polyacrylate aqueous solution with a weight average molecular weight of 6000 that had been preliminarily adjusted to the nonvolatile matters of 8% in approximately 1.5 minutes as a dispersant. The ratio of sodium polyacrylate to the raw materials for sinter was 0.05%. After the atomization, the above composition added with a dispersant (final composition for granulation) was further stirred at a rotational speed of 24 $min^{-1}$ for 3 minutes to carry out granulation (pseudo-particle formation). Moreover, the resulting pseudo-particles were sintered in the pot test with a scale of 50 kg to obtain sintered ores. As the test conditions, the sintering pot had a size of 300 mm in diameter and 600 mm in height with a layer thickness of 550 mm, and the suction negative pressure was 9.8 kPa (constant). The productivity of the resulting sintered ores was measured. The results are collectively shown in Table 8.

Example 24

The same processes as in Example 14 were carried out except that 181 parts of sodium polystyrene sulfonate (available from Sowa Science Co., Ltd.) with a weight average molecular weight of 7000 (catalog value) that had been preliminarily adjusted to the nonvolatile matters of 4.8% was used instead of 181 parts of sodium polyacrylate aqueous solution with a weight average molecular weight of 6000 that had been preliminarily adjusted to the nonvolatile matters of 4.8%, as the polymer having a sulfonic acid group and/or a salt thereof. Then, the productivity of the resulting sintered ores was measured. The results are collectively shown in Table 8.

Table 8

| | Ratio of selected raw materials for sinter | Heavy calcium carbonate having an average particle size of 7 μm (% by mass) | Heavy calcium carbonate having an average particle size of 25 μm (% by mass) | Fly ash (% by mass) | Burnt lime1) (% by mass) | Addition amount of polymer (% by mass) | Productivity of sintered ore (t/day/$m^2$) |
|---|---|---|---|---|---|---|---|
| Example 14 | 20.2 | 0.5 | - | - | 0.5 | 0.0125 | 30.4 |
| Example 15 | 20.2 | 1.0 | - | - | 0.5 | 0.0125 | 30.7 |
| Example 16 | 20.2 | - | 0.5 | - | 0.5 | 0.0125 | 29.6 |
| Example 17 | 20.2 | - | - | 0.5 | 0.5 | 0.0125 | 30.3 |
| Example 18 | 20.2 | 0.5 | - | - | 0.5 | 0.005 | 28.1 |
| Example 19 | 20.2 | 0.5 | - | - | 0.5 | - | 27.7 |
| Example 20 | 20.2 | 0.5 | - | - | - | 0.051) | 27.4 |
| Example 21 | 20.2 | 0.51) | 0.5 | - | - | 0.051) | 29.5 |
| Example 22 | 13.8 | 0.5 | - | - | 0.5 | 0.0125 | 28.8 |
| Example 23 | 40.3 | 0.5 | - | - | 0.5 | 0.0264 | 31.0 |
| Example 24 | 20.2 | 0.5 | - | - | 0.5 | 0.0125 | 28.6 |
| Reference Ex. 5 | 20.2 | - | - | - | 0.5 | 0.0125 | 28.4 |
| Comparative Ex. 7 | 20.2 | - | - | - | 1.2 | - | 25.1 |
| Comparative Ex. 8 | - | 0.5 | - | - | - | 0.05 1) | 22.6 |

In Table 8, with respect to the materials other than the selected raw materials for sinter, "% by mass" indicates % by mass to the materials for iron manufacturing. As the materials with "1)"), the addition thereof was carried out by using a drum mixer.

Reference Example 7

Raw materials for sinter (materials for iron manufacturing) (70000 parts) having a composition shown in formulation 5 of Table 9 were prepared. That is, 63000 parts of formulation 5-Aand 7000 parts of formulation 5-B were prepared. Moreover, water was added to formulation 5-A to adjust to 68108 parts (moisture content 7.5 % by mass).

Table 9

| Brand name | | Formulation 5 (90% selected) | |
|---|---|---|---|
| | | Formulation 5-A | Formulation 5-B |
| Robe river iron ores | Above sieve | 3.14 | - |
| | Below sieve | 12.58 | - |
| Carajas iron ores | | 12.38 | - |
| Hamersley ion ores | Above sieve | 7.33 | - |
| | Below sieve | 23.14 | - |
| MBRPF | | 12.86 | - |

(continued)

| Brand name | | Formulation 5 (90% selected) | |
|---|---|---|---|
| | | Formulation 5-A | Formulation 5-B |
| Sintered ore fine | | 4.29 | - |
| Serpentine | | - | 1.90 |
| Silica sand | | - | 1.43 |
| Limestone | | 16.19 | - |
| Dust | | 4.76 | - |
| Total of new materials for sinter (100%) | | 96.67 | 3.33 |
| External additives | Return fine | 9.62 | 4.67 |
| | Cokes breeze | - | 3.81 |

A high-speed stirring mixer having a rotary pan section and an agitator section was charged with 68108 parts of the above-mentioned raw materials for sinter 5-A (moisture content 7.5 % by mass) and 350 parts of heavy calcium carbonate having an average particle size of 7 μm. The composition (rawmaterials for sinter) was sprayed (added) with 245.9 parts of sodium polyacrylate aqueous solution with a weight average molecular weight of 6000 that had been preliminarily adjusted to the nonvolatile matters of 4.8% in approximately 40 seconds by using an atomizer, as the polymer having a carboxyl group and/or a salt thereof, to obtain a selective granulated product. At this time, the rotational speed of the pan was 30 $min^{-1}$, and the rotational speed of the agitator was 450 $min^{-1}$. Thereafter, a drum mixer was charged with 68354 parts of the selective granulated product, 7000 parts of raw materials for sinter 5-B (moisture content 0 % by mass) and 350 parts of burnt lime, and after preliminarily stirring for one minute at a rotational speed of 24 $min^{-1}$, to this was sprayed (added) with 200 parts of water in 1.5 minutes. After the atomization, the mixture was further stirred at the same rotational speed for 3 minutes to carry out granulation (pseudo-particle formation).

The ratio of sodium polyacrylate to the raw materials for sinter was 0.05%. Moreover, the resulting pseudo-particles were sintered in the pot test with a scale of 50 kg to obtain sintered ores. As the test conditions, the sintering pot had a size of 300 mm in diameter and 600 mm in height with a layer thickness of 550 mm, and the suction negative pressure was 9.8 kPa (constant). The productivity of the resulting sintered ores was measured, and found to be 23.81/day/$m^2$.

Example 25

Raw materials for sinter (materials for iron manufacturing) (70000 parts) having a composition shown in formulation 6 of Table 10 were prepared. That is, 14113 parts of formulation 6-A and 55887 parts of formulation 6-B were prepared. Moreover, water was added to formulation 6-A and formulation 6-B to adjust to be 15509 parts (moisture content 9 % by mass) and 59454 parts (moisture content 6 % by mass), respectively.

Table 10

| | | Formulation 6 | | Formulation 7 | |
|---|---|---|---|---|---|
| | | Formulation 6-A | Formulation 6-B | Formulation 7-A | Formulation 7-B |
| Mara mamba iron ores | | 15.0 | - | 15.0 | 47.35 |
| Carajas iron ores | | - | 13.33 | - | - |
| Hamersley iron ores | Above sieve | - | 7.33 | - | - |
| | Below sieve | - | 23.14 | - | - |
| MBRPF | | 8.81 | 3.35 | 8.81 | - |
| Sintered ore fine | | - | 4.29 | - | 4.29 |
| Serpentine | | - | 1.9 | - | 1.9 |
| Silica sand | | - | 1.9 | - | 1.7 |
| Limestone | | - | 16.19 | - | 16.19 |

(continued)

| | | Formulation 6 | | Formulation 7 | |
|---|---|---|---|---|---|
| | | Formulation 6-A | Formulation 6-B | Formulation 7-A | Formulation 7-B |
| Dust | | | 4.76 | | 4.76 |
| Total of new materials for sinter (100%) | | 23.81 | 76.19 | 23.81 | 76.19 |
| External additives | Return fine | - | 14.29 | - | 14.29 |
| | Cokes breeze | - | 3.81 | - | 3.81 |

In Table 10, "MBRPF" refers to a pellet feed supplied from MBR Co., Ltd of Brazil mines.

A high-speed stirring mixer (Eirich Mixer R05T, product of Nippon Eirich Co., Ltd.) having a rotary pan section and an agitator section was charged with 15509 parts of the above-mentioned rawmaterials for sinter (6-A) (moisture content 9 % by mass) and 350 parts of blast-furnace slag pulverized to an average particle size of 10 μm. The composition (rawmaterials for sinter) was sprayed (added) with 181 parts of sodium polyacrylate aqueous solution (granulation agent a) withaweight average molecular weight of 6000 that had been preliminarily adjusted to the nonvolatile matters of 4.8% in approximately 40 seconds by using an atomizer,' as the polymer having a carboxyl group and/or a salt thereof, to obtain a selective granulated product. At this time, the rotational speed of the pan was 30 $min^{-1}$, and the rotational speed of the agitator was 450 $min^{-1}$. Thereafter, a drum mixer was charged with 16040 parts of the selective granulated product, 59454 parts of raw materials for sinter (formulation 6-B) (moisture content 6 % by mass) and 350 parts of burnt lime, and after preliminarily stirring for one minute at a rotational speed of 24 $min^{-1}$, to this was sprayed (added) with 500 parts of water in 1.5 minutes. After the atomization, the mixture was further stirred at the same rotational speed for 3 minutes to carry out granulation (pseudo-particle formation).

The ratio of sodium polyacrylate to the raw materials for sinter was 0.0125%. Moreover, the resulting pseudo-particles were sintered in the pot test with a scale of 50 kg to obtain sintered ores. As the test conditions, the sintering pot had a size of 300 mm in diameter and 600 mm in height with a layer thickness of 550 mm, and the suction negative pressure was 9.8 kPa (constant). The productivity of the resulting sintered ores was measured. The results are collectively shown in Table 11.

Example 26

The same processes as in Example 25 were carried out except that 350 parts of ordinary portland cement pulverized to an average particle size of 13 μm was used instead of 350 parts of blast-furnace slag pulverized to an average particle size of 10 μm, and 199 parts of an aqueous solution (granulation agent b) formed by preliminarily adjusting "Mighty 150" (brand name; product of Kao Corporation, nonvolatile matter 40.1%) that is a formalin condensate of β-naphthalene sulfonic acid to the nonvolatile matters of 13.2% was used instead of 181 parts of sodium polyacrylate aqueous solution with a weight average molecular weight of 6000 that had been preliminarily adjusted to the nonvolatile matters of 4.8%. Then, the productivity of the resulting sintered ores was measured. The results are collectively shown in Table 11.

Example 27

The same processes as in Example 25 were carried out except that 350 parts of imagio toner type-7 (color: black, product of Ricoh Co., Ltd.) was used instead of 350 parts of blast-furnace slag pulverized to an average particle size of 10 μm, and 199 parts of an aqueous solution (granulation agent c) formed by preliminarily adjusting "Mighty 150" (brand name; product of Kao Corporation, nonvolatile matter 40.1%) that is a formalin condensate of β-naphthalene sulfonic acid to the nonvolatile matters of 13.2% was used instead of 181 parts of sodium polyacrylate aqueous solution with a weight average molecular weight of 6000 that had been preliminarily adjusted to the nonvolatile matters of 4.8. Then, the productivity of the resulting sintered ores was measured. The results are collectively shown in Table 11.

Comparative Example 9

The same processes as in Example 25 were carried out except that 350 parts of blast-furnace slag pulverized to an average particle size of 10 μm was not used, 172 parts of water was used instead of 181 parts of sodium polyacrylate aqueous solution with a weight average molecular weight of 6000 that had been preliminarily adjusted to the nonvolatile matters of 4.8%, and 840 parts of burnt lime was used instead of 350 parts of burnt lime, and 700 parts of water was

used instead of 500 parts of water. Then, the productivity of the resulting sintered ores was measured. The results are collectively shown in Table 11.

Table 11

| | Granulation agent | Addition amount of granulation agent (solid conversion) (% by mass) | Fine particles | Addition amount of fine particles (% by mass) | Addition amount of quicklime (% by mass) | Productivity of sintered ore (t/day/$m^2$) |
|---|---|---|---|---|---|---|
| Example 25 | Granulation agent a | 0.0125 | Blast-furnace slag | 0.5 | 0.5 | 28.0 |
| Example 26 | Granulation agent b | 0.0375 | Portland cement | 0.5 | 0.5 | 26.9 |
| Example 27 | Granulation agent c | 0.0375 | Toner | 0.5 | 0.5 | 26.2 |
| Comparative Ex.9 | - | - | - | - | 1.2 | 22.6 |

Reference Example 8

The same processes as in Example 25 were carried out except that formulation 7 (in which the mixing ratio of Mara mamba iron ores to the entire mass of the new raw material for sinter (% by mass) was 62.4%) was used instead of formulation 6. Then, the productivity of the sintered ores was measured and found to be 24.4 t/day/$m^2$.

Comparative Example 10

The same processes as in Reference Example 8 were carried out except that 350 parts of dust having an average particle size of 245 μm were used instead of 350 parts of blast-furnace slag pulverized to an average particle size of 10 μm, and 199 parts of pulp waste solution (comparative granulation agent) that had been preliminarily adjusted to the nonvolatile matters of 13.2% was used instead of 181 parts of the granulation agent a, with dust and pulp waste solution being mixed with each other prior to the addition being added in a slurry state. Then, the productivity of the sintered ores was measured and found to be 17.6 t/day/$m^2$.

Example 28

A mixer with high speed agitator was charged with dust (Mix dust A containing 0.2% of active burnt lime) as a material for iron manufacturing and heavy calcium carbonate having an average particle size of 7 μm as fine particles of the present invention in a mass ratio of 3 : 0.5 (in the absolute dry conversion), and the resultant was mixed for 60 seconds. Then, the mixture was adjusted to have the moisture content of 10% after the mixing so that a fine particles mixture 1 was obtained. Meanwhile, raw materials for sinter having a composition shown as formulation A in Table 12 (materials for iron manufacturing) were prepared. The quantity determination method for active burnt lime contained in dust will be described later.

Water was added to 69650 parts (in the absolute dry conversion) of the above raw materials for sinter to adjust them to 74492 parts (moisture content 6.5%). 74492 parts of said raw materials for sinter (moisture content 6.5%) and 2722 parts of the fine particle mixture 1 were charged into a drum mixer. While mixing the mixture at a rotational speed of 24 $min^{-1}$, 336 parts of an aqueous solution of sodium polyacrylate with a weight average molecular weight of 6000 and had been preliminarily adjusted to the nonvolatile matter of 6.3% was sprayed (added) to said composition (raw materials for sinter) as a granulation agent for iron manufacturing by using an atomizer in approximately 1.5 minutes. The ratio of sodium polyacrylate relative to the raw materials for sinter was 0.03%. After the atomization, the above-mentioned composition (final composition for granulation), which had been added with a dispersant, was further stirred at a rotational speed of 24 $min^{-1}$ for 3 minutes to carry out granulation (pseudo-particle formation). Moreover, the resulting pseudo-particles were sintered in the pot test with a scale of 50 kg to obtain sintered ores. As the test conditions, the sintering pot had a size of 300 mm in diameter and 600 mm in height with a layer thickness of 550mm, and the suction negative pressure was 9.8 kPa (constant). Then, the productivity of the obtained sintered ores was measured. The

results are collectively shown in Table 13.

Example 29

A mixer with high speed agitator was charged with dust (Mix dust A containing 0.2% of active burnt lime) as a material for iron manufacturing and heavy calcium carbonate having an average particle size of 7 μm as fine particles of the present invention in a mass ratio of 3 : 0.5 (in the absolute dry conversion), and the resultant was mixed for 60 seconds. Then, the mixture was adjusted to have the moisture content of 10% after the mixing so that a fine particles mixture 1 was obtained. Meanwhile, raw materials for sinter having a composition shown as formulation A in Table 12 (materials for iron manufacturing) were prepared. Water was added to 69790 parts (in the absolute dry conversion) of the above-mentioned materials to adjust them to 74642 parts (moisture content 6.5%).

The same processes as in Example 28 were carried out except that 74642 parts of formulation B (moisture content 6.5%) was used instead of 74492 parts of formulation A (moisture content 6.5%), 2567 parts of the fine particle mixture 2 was used instead of 2722 parts of the fine particle mixture 1, and 341 parts of an aqueous solution of sodium polyacrylate with a weight average molecular weight of 6000 and had been preliminarily adjusted to the nonvolatile matters of 6.2% was used instead of 336 parts of an aqueous solution of sodium polyacrylate with a weight average molecular weight of 6000 and had been preliminarily adjusted to the nonvolatile matters of 6.3%. Then, the productivity of the resulting sintered ores was measured. The results are collectively shown in Table 13.

Example 30

A mixer with high speed agitator was charged with dust (Mix dust A containing 0.2% of active burnt lime) as a material for iron manufacturing and fly ash having an average particle size of 17 μm as fine particles of the present invention in a mass ratio of 3 : 0.3 (in the absolute dry conversion), and the resultant was mixed for 60 seconds. Then, the mixture was adjusted to have the moisture content of 10% after the mixing so that a fine particles mixture 3 was obtained. Meanwhile, raw materials for sinter having a composition shown as formulation C in Table 12 (materials for iron manufacturing) were prepared. Water was added to 69880 parts (in the absolute dry conversion) of the above-mentioned materials to adjust them to 74738 parts (moisture content 6.5%).

74738 parts of said raw materials for sinter (moisture content 6.5%) and 2567 parts of the fine particle mixture 3 were charged into a drum mixer. While mixing the mixture at a rotational speed of 24 $min^{-1}$, 341 parts of an aqueous solution of sodium polyacrylate with a weight average molecular weight of 6000 and had been preliminarily adjusted to the nonvolatile matter of 6.2% was sprayed (added) to said composition (raw materials for sinter) as a granulation agent for iron manufacturing by using an atomizer in approximately 1.5 minutes. The ratio of sodium polyacrylate relative to the raw materials for sinter was 0.03%. After the atomization, the above-mentioned composition (final composition for granulation), which hadbeen added with a dispersant, was further stirred at a rotational speed of 24 $min^{-1}$ for 3 minutes to carry out granulation (pseudo-particle formation). Successively, the productivity of the sintered ores was measured in the same manner as Example 28. The results are collectively shown in Table 13.

Example 31

A mixer with high speed agitator was charged with cokes breeze as a material for iron manufacturing and heavy calcium carbonate having an average particle size of 7 μm as fineparticles of the present invention in a mass ratio of 0.5 : 0.5 (in the absolute dry conversion), and the resultant was mixed for 60 seconds. Then, the mixture was adjusted to have the moisture content of 7% after the mixing so that a fine particles mixture 4 was obtained. Meanwhile, raw materials for sinter having a composition shown as formulation D in Table 12 (materials for iron manufacturing) were prepared. Water was added to 71400 parts (in the absolute dry conversion) of the above-mentioned materials to adjust them to 76364 parts (moisture content 6.5%).

76364 parts of said raw materials for sinter (moisture content 6.5%) and 753 parts of the fine particle mixture 4 were charged into a drum mixer. While mixing the mixture at a rotational speed of 24 $min^{-1}$, 433 parts of an aqueous solution of sodium polyacrylate with a weight average molecular weight of 6000 and had been preliminarily adjusted to the nonvolatile matter of 4.8% was sprayed (added) to said composition (raw materials for sinter) as a granulation agent for iron manufacturing by using an atomizer in approximately 1.5 minutes. The ratio of sodium polyacrylate relative to the raw materials for sinter was 0.03%. After the atomization, the above-mentioned composition (final composition for granulation), which had been added with a dispersant, was further stirred at a rotational speed of 24 $min^{-1}$ for 3 minutes to carry out granulation (pseudo-particle formation). Successively, the productivity of the sintered ores was measured in the same manner as Example 28. The results are collectively shown in Table 13.

Example 32

A mixer with high speed agitator was charged with return fines as a material for iron manufacturing and heavy calcium carbonate having an average particle size of 7 μm as fine particles of the present invention in a mass ratio of 3 : 0.5 (in the absolute dry conversion), and the resultant was mixed for 60 seconds. Then, the mixture was adjusted to have the moisture content of 7% after the mixing so that a fine particles mixture 5 was obtained. Meanwhile, raw materials for sinter having a composition shown as formulation E in Table 12 (materials for iron manufacturing) were prepared. Water was added to 69650 parts (in the absolute dry conversion) of the above-mentioned materials E to adjust them to 74492 parts (moisture content 6.5%).

74492 parts of said raw materials for sinter (moisture content 6.5%) and 2634 parts of the fine particle mixture 5 were charged into a drum mixer. While mixing the mixture at a rotational speed of 24 $min^{-1}$, 425 parts of an aqueous solution of sodium polyacrylate with a weight average molecular weight of 6000 and had been preliminarily adjusted to the nonvolatile matter of 4.9% was sprayed (added) to said composition (raw materials for sinter) as a granulation agent for iron manufacturing by using an atomizer in approximately 1.5 minutes. The ratio of sodium polyacrylate relative to the raw materials for sinter was 0.03%. After the atomization, the above-mentioned composition (final composition for granulation), which had been added with a dispersant, was further stirred at a rotational speed of 24 $min^{-1}$ for 3 minutes to carry out granulation (pseudo-particle formation). Successively, the productivity of the sintered ores was measured in the same manner as Example 28. The results are collectively shown in Table 13.

Comparative Example 11

Raw materials for sinter (materials for iron manufacturing) having a composition shown as formulation F in Table 12 were prepared. To 71750 parts (in the absolute dry conversion) of the above-mentioned raw materials for sinter F, water was added to adjust them to 76738 parts (moisture content 6.5%). 76738 parts of said raw materials for sinter (moisture content 6.5%) and 350 parts of heavy calcium carbonate having an average particle size of 7 μm was charged into a drum mixer. Then, 462 parts of an aqueous solution of sodium polyacrylate with a weight average molecular weight of 6000 and had been preliminarily adjusted to the'nonvolatile matter of 4.5% was sprayed (added) to said composition (raw materials for sinter) by using an atomizer in approximately 1.5 minutes. The ratio of sodium polyacrylate relative to the raw materials for sinter was 0.03%. After the atomization, the above-mentioned composition (final composition for granulation), which had been added with a dispersant, was further stirred at a rotational speed of 24 $min^{-1}$ for 3 minutes to carry out granulation (pseudo-particle formation). Successively, the productivity of the sintered ores was measured in the same manner as Example 28. The results are collectively shown in Table 13.

Reference Example 9

A mixer with high speed agitator was charged with dust (Mix dust A containing 0.2% of active burnt lime) as a material for iron manufacturing and heavy calcium carbonate having an average particle size of 7 μm as fine particles of the present invention in a mass ratio of 0.1 : 0.5 (in the absolute dry conversion), and the resultant was mixed for 60 seconds. Then, the mixture was adjusted to have the moisture content of 10% after the mixing so that a fine particles mixture 1a was obtained. Meanwhile, raw materials for sinter having a composition shown as formulationA-1 in Table 12 (materials for ironmanufacturing) were prepared.

Water was added to 71680 parts (in the absolute dry conversion) of the above-mentioned raw materials for sinter to adjust them to 76663 parts (moisture content 6.5%). 76663 parts of said raw materials for sinter (moisture content 6.5%) and 467 parts of the fine particle mixture 1a were charged into a drum mixer. While mixing the mixture at a rotational speed of 24 $min^{-1}$, 336 parts of an aqueous solution of sodium polyacrylate with a weight average molecular weight of 6000 and had been preliminarily adjusted to the nonvolatile matter of 6.3% was sprayed (added) to said composition (raw materials for sinter) as a granulation agent for iron manufacturing by using an atomizer in approximately 1.5 minutes. The ratio of sodium polyacrylate relative to the raw materials for sinter was 0.03%. After the atomization, the above-mentioned composition (final composition for granulation), which had been added with a dispersant, was further stirred at a rotational speed of 24 $min^{-1}$ for 3 minutes to carry out granulation (pseudo-particle formation). Successively, the productivity of the sintered ores was measured in the same manner as Example 28. The results are collectively shown in Table 13.

Table 12

| Brand Name | | Example 28 | Example 29 | Example 30 | Example 31 | Example 32 | Comparative Ex. 11 | Reference Ex. 9 |
|---|---|---|---|---|---|---|---|---|
| | | Formulation A | Formulation B | Formulation C | Formulation D | Formulation E | Formulation F | Formulation A-1 |
| Mt. Newman iron ores | | 12059 | 12059 | 12059 | 12059 | 12059 | 12059 | 12059 |
| Robe River iron ores | | 9706 | 9706 | 9706 | 9706 | 9706 | 9706 | 9706 |
| Carajas iron ores | | 7647 | 7647 | 7647 | 7647 | 7647 | 7647 | 7647 |
| Hamersley iron ores | | 6765 | 6765 | 6765 | 6765 | 6765 | 6765 | 6765 |
| Kudremukh PF | | 5882 | 5882 | 5882 | 5882 | 5882 | 5882 | 5882 |
| Rio Doce iron ores | | 2059 | 2059 | 2059 | 2059 | 2059 | 2059 | 2059 |
| Sintered ore fine | | 2941 | 2941 | 2941 | 2941 | 2941 | 2941 | 2941 |
| Serpentine | | 1176 | 1176 | 1176 | 1176 | 1176 | 1176 | 1176 |
| Silica sand | | 588 | 588 | 468 | 588 | 588 | 588 | 588 |
| Limestone | | 9650 | 9790 | 10000 | 9650 | 9650 | 9650 | 9650 |
| Return fine | | 8824 | 8824 | 8824 | 8824 | 6724 | 8824 | 8824 |
| Cokes breeze | | 2353 | 2353 | 2353 | 2003 | 2353 | 2353 | 2353 |
| Mix dust A | | - | -- | - | 2100 | 2100 | 2100 | 2030 |
| Total of mixing except for materials for fine-powder mixture | | 69650 | 69790 | 69880 | 71400 | 69650 | 71750 | 71680 |
| Material for fine-powder mixture | | Fine particle mixture 1 | Fine particle mixture 2 | Fine particle mixture 3 | Fine particle mixture 4 | Fine' particle mixture 5 | Non-mixed product | Fine particle mixture 1a |
| Raw materials for sinter for iron manufacturing | Mix dust A | 2100 | 2100 | 2100 | - | - | - | 70 |
| | Cokes breeze | - | - | - | 350 | - | - | - |
| | Return fine | - | - | - | - | 2100 | - | - |
| Fine particles | Cal. carbonate | 350 | 210 | - | 350 | 350 | 350[1)] | 350 |
| | Fly ash | - | - | 210 | - | - | - | - |

Table 13

| | Example 28 | Example 29 | Example 30 | Example 31 | Example 32 | Comparative Ex. 11 | Reference Ex. 9 |
|---|---|---|---|---|---|---|---|
| Fine-particle mixture | Fine-particle mixture 1 | Fine-particle mixture 2 | Fine-particle mixture 3 | Fine-particle mixture 4 | Fine-particle mixture 5 | - | Fine-particle mixture 1a |
| Composition of fine particle mixture | Dust/ Cal. carbonate | Dust/ Cal. Carbonate | Dust/Fly ash Dust/Fly ash | Cokes breeze /Cal. Carbonate | Return fine/ Cal. Carbonate | - | Dust/ Cal. carbonate |
| Mixing ratio of fine particles (Dust, etc./Fine particles) | 3/0.5 | 3/0.3 | 3/0.3 | 0.5/0.5 | 3/0.5 | - | 0.1/0.5 |
| Addition amount of fine particle mixture (to the entire raw materials for sinter for iron manufacturing) (%) | 3.5 | 3.3 | 3.3 | 1.0 | 3.5 | - | 0.6 |
| Ratio of raw materials for sinter for iron manufacturing mixed with fine particles (to the entire raw materials for sinter for iron manufacturing) (%) | 2.9 | 2.9 | 2.9 | 0.49 | 2.9 | - | 0.1 |
| Productivity (t/day/$m^2$) | 29.2 | 28.5 | 28.7 | 29.7 | 29.5 | 25.9 | 26.2 |

In Tables 12 and 13, "Cal. carbonate" refers to heavy calcium carbonate. The unit of the respective values in Table 12 is "parts by weight", and "1)" refers to being added without mixing. In Table 13, the unit of the "addition amount of fine particle mixture" is "% by mass".

Examples 33 to 40

In Examples 33 to 40, Mix dust B (containing 5.2% of active burnt lime) was used instead of Mix dust A (containing 0.2% of active burnt lime). Active burnt lime does not indicate so-called calcium content, but an amount of burnt lime capable of existing as slaked lime in the presence of water. In the present invention, the amount is determined by the method shown in Examples.

[Determination method of active burnt lime contained in dust]

Dust and 300 g of distilled water are put into a polypropylene cup with a cover, and after vigorously shaking for several minutes, the mixture is allowed to stand for 30 minutes. At this time, the amount of dust to be taken is adjusted in such a manner that eluted calcium hydrate is not to be saturated. After the standing, supernatant liquid is filtered through a 42 μm-filter. Then, the quantity is determined by titrating with 0.1 N hydrochloric acid for use in volumetric

analysis.

Example 33

To 2100 parts of Mix dust B (moisture content 9%), 200 parts of water was added. While sufficientlymixing the mixture, carbon dioxide was sprayed thereon to obtain processed dust. The addition amount of carbon dioxide calculated based on the solid matter increase was 91 parts relative to 2100 parts of MixdustB (moisture content 9%). Then, by adjusting the moisture content of the above-mentioned processed dust which had been sprayed with carbon dioxide to 9%, the finally processed Mix dust B(I) was obtained.

Meanwhile, a mixer with high speed agitator was charged with cokes breeze as a material for iron manufacturing and heavy calcium carbonate having an average particle size of 7 μm as fine particles of the present invention in a mass ratio of 0.5 : 0.5 (in the absolute dry conversion), and the resultant was mixed for 60 seconds. Then, the mixture was adjusted to have the moisture content of 7% after the mixing so that a fine particles mixture 6 was obtained. Furthermore, raw materials for sinter having a composition shown as formulation G in Table 14 (materials for iron manufacturing) were prepared. Water was added to 69300 parts (in the absolute dry conversion) of the above-mentioned raw materials for sinter to adjust them to 74118 parts (moisture content 6.5%).

74118 parts of said raw materials for sinter (moisture content 6.5%), 2159 parts of processed Mix dust B(I), and 753 parts of the fine particle mixture 6 (moisture content 7%) were charged into a drum mixer. While mixing the mixture at a rotational speed of 24 $min^{-1}$, 433 parts of an aqueous solution of sodium polyacrylate with a weight average molecular weight of 6000 and had been preliminarily adjusted to the nonvolatile matter of 4.8% was sprayed (added) to said composition (raw materials for sinter) as a granulation agent for iron manufacturing by using an atomizer in approximately 1.5 minutes. The ratio of sodium polyacrylate relative to the raw materials for sinter was 0.03%. Furthermore, 0.13% of (b) carbon dioxide (molecular weight 44) as a compound (granulation auxiliary agent) generating an acid by reacting with water according to the present invention was used in combination. After the atomization, the above-mentioned composition (final composition for granulation), which hadbeen added wi th a dispersant, was further stirred at a rotational speed of 24 $min^{-1}$ for 3 minutes to carry out granulation (pseudo-particle formation). Successively, the productivity of the sintered ores was measured in the same manner as Example 1. The results are collectively shown in Table 16.

Example 34

To 2100 parts of Mix dust B (moisture content 9%), 140 parts of maleic acid was added, and the resultant was mixed by a mixer with high speed agitator for 60 seconds to obtain processed Mix dust B(II).

Meanwhile, a mixer with high speed agitator was charged with cokes breeze as a material for iron manufacturing and fly ash having an average particle size of 17 μm as fine particles of the present invention in a mass ratio of 0.5 : 0.3 (in the absolute dry conversion), and the resultant was mixed for 60 seconds. Then, the mixture was adjusted to have the moisture content of 7% after the mixing so that a fine particles mixture 7 was obtained. Furthermore, raw materials for sinter having a composition shown as formulation H in Table 14 (materials for iron manufacturing) were prepared. Water was added to 69530 parts (in the absolute dry conversion) of the above raw materials for sinter to adjust them to 74364 parts (moisture content 6.5%) .

74364 parts of said raw materials for sinter (moisture content 6.5%), 2240 parts of processed Mix dust B(II) and 602 parts of the fine particle mixture 7 (moisture content 7%) were charged into a drum mixer. While mixing the mixture at a rotational speed of 24 $min^{-1}$, 433 parts of an aqueous solution of sodium polyacrylate with a weight average molecular weight of 6000 and had been preliminarily adjusted to the nonvolatile matter of 4.8% was sprayed (added) to said composition (raw materials for sinter) as a granulation agent for iron manufacturing by using an atomizer in approximately 1. 5 minutes. Thus, the ratio of sodium polyacrylate relative to the raw materials for sinter was 0.03%, and 0.2% of maleic acid (molecular weight 116) as (a) an acid (granulation auxiliary agent) of the present invention was further used in combination. After the atomization, the above-mentioned composition (final composition for granulation),'which had been added with a dispersant, was further stirred at a rotational speed of 24 $min^{-1}$ for 3 minutes to carry out granulation (pseudo-particle formation). Successively, the productivity of the sintered ores was measured in the same manner as Example 1. The results are collectively shown in Table 16.

Example 35

To 2100 parts of Mix dust B (moisture content 9%), 70 parts of sodium carbonate (anhydride) was added, and the resultant was mixed by a mixer with high speed agitator for 60 seconds to obtain processed Mix dust B(III).

Meanwhile, a mixer with high speed agitator was charged with cokes breeze as a material for iron manufacturing and red iron oxide having an average particle size of 3 μm as fine particles of the present invention in a mass ratio of

0.5 : 0.5 (in the absolute dry conversion), and the resultant was mixed for 60 seconds. Then, the mixture was adjusted to have the moisture content of 7% after the mixing so that a fine particles mixture 8 was obtained. Furthermore, raw materials for sinter having a composition shown as formulation I in Table 14 (materials for iron manufacturing) were prepared. Water was added to 69300 parts (in the absolute dry conversion) of the above rawmaterials for sinter to adjust them to 74118 parts (moisture content 6.5%).

74118 parts of said raw materials for sinter (moisture content 6.5%), 2170 parts of processed Mix dust B (III), and 753 parts of the fine particle mixture 8 (moisture content 7%) were charged into a drum mixer. While mixing the mixture at a rotational speed of 24 $min^{-1}$, 433 parts of an aqueous solution of sodium polyacrylate with a weight average molecular weight of 6000 and had been preliminarily adjusted to the nonvolatile matter of 4.8% was sprayed (added) to said composition (raw materials for sinter) as a granulation agent for iron manufacturing by using an atomizer in approximately 1.5 minutes. Thus, the ratio of sodium polyacrylate relative to the raw materials for sinter was 0.03%, and 0.1% of maleic acid (anhydride, molecular weight 106) as (f) a sodium salt of an acid (granulation auxiliary agent) of the present invention was further used in combination. After the atomization, the above-mentioned composition (final composition for granulation), which had been added with a dispersant, was further stirred at a rotational speed of 24 $min^{-1}$ for 3 minutes to carry out granulation (pseudo-particle formation). Successively, the productivity of the sintered ores was measured in the same manner as Example 1. The results are collectively shown in Table 16. The solubility of calcium carbonate, which is a calcium salt of the above sodium carbonate (anhydride), to distilled water at 20°C was 1.5 mg/ 100 g of distilled water.

Example 36

A pot (SUS316 made) equipped with a stirrer and a condenser was charged with 355 parts of deionized water and 98 parts of maleic anhydride as a monomer having a carboxyl group and 80 parts of sodium hydroxide as a neutralizer to neutralize the mixture. Then, the mixture was heated to a boiling point of the system (100°C). Successively, to the above separable flask, 180 parts of 40% acrylic acid aqueous solution as a carboxyl-containing monomer, 100 parts of 10% sodiumpersulfate aqueous solution as a polymerization initiator and 100 parts of 14% hydrogen peroxide aqueous solution were dripped.

The 40% acrylic acid aqueous solution, the 10% sodium persulfate aqueous solution and the 14% hydrogenperoxide aqueous solution were dripped through respectively different dripping inlets for 4 hours. During the dripping, the reaction temperature was maintained at the boiling point of the system. After completion of the dripping, the mixture was maintained at the same temperature for 60 minutes, and 57 parts of 49% sodium hydroxide aqueous solution was then dripped therein as a neutralizer for 60 minutes so that a polymer aqueous solution (H) was obtained. The weight average molecular weight of the polymer (H) (polymer (H)) in the polymer aqueous solution was found to be 5, 900, and the concentration of nonvolatile matters was 37.0%.

To 2100 parts of Mix dust B (moisture content 9%), 76 parts of two-fold diluted product (solid matter 18.5%) of the above-mentioned polymer aqueous solution (H) was added, and the resultant was mixed by a rod mill for 60 seconds to obtain processed Mix dust B(IV).

Meanwhile, a mixer with high speed agitator was charged with cokes breeze as a material for iron manufacturing and talc having an average particle size of 20 μm as fine particles of the present invention in a mass ratio of 0.5 : 0.5 (in the absolute dry conversion), and the resultant was mixed for 60 seconds. Then, the mixture was adjusted to have the moisture content of 7% after the mixing so that a fine particles mixture 9 was obtained. Water was added to 69300 parts of (in the absolute dry conversion) of the above-mentioned raw materials for sinter to adjust them to 74118 parts (moisture content 6.5%).

74118 parts of said raw materials for sinter (moisture content 6.5%), 2159 parts of processed Mix dust B(IV), and 753 parts of the fine particle mixture 9 (moisture content 7%) were charged into a drum mixer. While mixing the mixture at a rotational speed of 24 $min^{-1}$, 433 parts of an aqueous solution of sodium polyacrylate with a weight average molecular weight of 6000 and had been preliminarily adjusted to the nonvolatile matter of 4.8% was sprayed (added) to said composition (raw materials for sinter) as a granulation agent for iron manufacturing by using an atomizer in approximately 1.5 minutes. Thus, the ratio of sodium polyacrylate relative to the raw materials for sinter was 0.03%. Furthermore, 0.02% of (d) a polymer chelating reagent (granulation auxiliary agent) of the present invention was used in combination. After the atomization, the above-mentioned composition (final composition for granulation), which had been added with a dispersant, was further stirred at a rotational speed of 24 $min^{-1}$ for 3 minutes to carry out granulation (pseudo-particle formation). Successively, the productivity of the sintered ores was measured in the same manner as Example 1. The results are collectively shown in Table 16.

Example 37

To 2100 parts of Mix dust B (moisture content 9%), 14 parts of polyethylene glycol having a weight average

molecular weight of 1, 00, 000 was added, and the resultant was mixed by a rod.mill for 60 seconds to obtain processed Mix dust B(V).

Meanwhile, a mixer with high speed agitator was charged with cokes breeze as a material for iron manufacturing, and serpentine pulverized to an average particle size of 8 μm as fine particles of the present invention in a mass ratio of 0.5 : 0. 5 (in the absolute dry conversion), and the resultant was mixed for 60 seconds. Then, the mixture was adjusted to have the moisture content of 7% after the mixing so that a fine particles mixture 10 was obtained. Furthermore, raw materials for sinter having a composition shown as formulation K in Table 14 (materials for iron manufacturing) were prepared. To 69300 parts (in the absolute dry conversion) of said raw materials for sinter (materials for iron manufacturing), water was added to adjust them to 74118 parts (moisture content 6.5%).

74118 parts of said raw materials for sinter (moisture content 6.5%), 2240 parts of processed Mix dust B(V) and 753 parts of the fine particle mixture 10 (moisture content 7%) were charged into a drum mixer. While mixing the mixture at a rotational speed of 24 $min^{-1}$, 433 parts of an sodium polystyrene sulfonate with a weight average molecular weight of 5000 and had been preliminarily adjusted to the nonvolatile matters of 4.8% was sprayed (added) to said composition (raw materials for sinter) as a granulation agent for iron manufacturing by using an atomizer in approximately 1.5 minutes. Thus, the ratio of sodium polystyrene sulfonate relative to the raw materials for sinter is 0.03%, and 0.02% of polyethylene glycol as (e) a polymer having a weight average molecular weight of 20, 000 or more was further used in combination. After the atomization, the above-mentioned composition (final composition for granulation), which had been added with a dispersant, was further stirred at a rotational speed of 24 $min^{-1}$ for 3 minutes to carry out granulation (pseudo-particle formation). Successively, the productivity of the sintered ores was measured in the same manner as Example 1. The results are collectively shown in Table 16.

Example 38

By the method shown in Example 33, a fine particle mixture 6 was obtained. Meanwhile, raw materials for sinter (materials for ironmanufacturing) having a composition shown as formulation L in Table 15 were prepared. Water was added to 69300 parts (in the absolute dry condition) of said raw materials for sinter (materials for iron manufacturing) to adjust them to 74118 parts (moisture content 6.5%).

74118 parts of the raw materials for sinter (moisture content 6.5%) and 2100 parts of processed Mix dust B and 753 parts of the fine particle mixture 6 (moisture content 7%) were charged into a drum mixer. While mixing the mixture at a rotational speed of 24 $min^{-1}$, 503 parts of an aqueous solution dissolving 70 parts of sodium hydroxide (anhydride) and 21 parts of sodium polyacrylate having a weight average molecular weight of 6000 in 412 parts of water as a granulation agent for iron manufacturing was sprayed (added) to said composition (raw material for sinter) by using an atomizer in approximately 1.5 minutes. Thus, the ratio of sodium polyacrylate relative to the raw materials for sinter was 0.03%, and 0.1% of sodium carbonate (anhydride, molecular weight 106) as (f) a sodium salt of an acid (granulation auxiliary agent) of the present invention was further used in combination. After the atomization, the above-mentioned composition (final composition for granulation) , which had been added with a dispersant, was further stirred at a rotational speed of 24 $min^{-1}$ for 3 minutes to carry out granulation (pseudo-particle formation). Successively, the productivity of the sintered ores was measured in the same manner as Example 1. The results are collectively shown in Table 17. The solubility of calcium carbonate, which is a calcium salt of the above sodium carbonate (anhydride), to distilled water at 20°C was 1.5 mg/ 100 g of distilled water.

Example 39

By the method shown in Example 35, a fine particle mixture 8 was obtained. Meanwhile, raw materials for sinter (materials for ironmanufacturing) having a composition shown as formulation M in Table 15 were prepared. Water was added to 69300 parts (in the absolute dry condition) of said raw materials for sinter (materials for ironmanufacturing) to adjust them to 74118 parts (moisture content 6.5%).

74118 parts of the raw materials for sinter (moisture content 6.5%) and 2100 parts of processed Mix dust B and 753 parts of the fine particle mixture 8 (moisture content 7%) were charged into a drum mixer. While mixing the mixture at a rotational speed of 24 $min^{-1}$, 503 parts of an aqueous solution dissolving 70 parts of sodium hydroxide and 21 parts of sodium polyacrylate having a weight average molecular weight of 6000 in 412 parts of water as a granulation agent for ironmanufacturing was sprayed (added) to said composition (rawmaterial for sinter) by using an atomizer in approximately 1.5 minutes. Thus, the ratio of sodium polyacrylate relative to the raw materials for sinter was 0.03%, and further 0.1% of sodium hydroxide was used in combination. After the atomization, the above-mentioned composition (final composition for granulation), which had been added with a dispersant, was further stirred at a rotational speed of 24 $min^{-1}$ for 3 minutes to carry out granulation (pseudo-particle formation). Successively, the productivity of the sintered ores was measured in the same manner as Example 1. The results are collectively shown in Table 17.

Example 40

By the method shown in Example 36, a fine particle mixture 9 was obtained. Meanwhile, raw materials for sinter (materials for ironmanufacturing) having a composition shown as formulation N in Table 15 were prepared. Water was added to 68675 parts (in the absolute dry condition) of said raw materials for sinter (materials for iron manufacturing) to adjust them to 73449 parts (moisture content 6.5%).

73449 parts of the raw materials for sinter (moisture content 6.5%), 2100 parts of processed Mix dust B and 753 parts of the fine particle mixture 9 (moisture content 7%), 1.2% of burnt lime and 350 parts of sodium citrate (product of Wako Pure Chemical Industries, Ltd., molecular weight 258) as (c) a chelating reagent (granulation auxiliary agent) having a weight average molecular weight of not more than 1000 in accordance with the present invention were charged into a drummixer. While mixing the mixture at a rotational speed of 24 $min^{-1}$, 462 parts of an aqueous solution of sodium polyacrylate with a weight average molecular weight of 6000 and had been preliminarily adjusted to the nonvolatile matter of 4.5% was sprayed (added) to said composition (raw materials for sinter) as a granulation agent for iron manufacturing by using an atomizer in approximately 1.5 minutes. The ratio of sodium polyacrylate relative to the rawmaterials for sinter was 0.03%. Furthermore, 0.5% of (c) a chelating agent (granulation auxiliary agent) having a weight average molecular weight of not more than 1000 in accordance with the present invention was used in combination. After the atomization, the above-mentioned composition (final composition for granulation), which had been added with a dispersant, was further stirred at a rotational speed of 24 $min^{-1}$ for 3 minutes to carry out granulation (pseudo-particle formation). Successively, the productivity of the sintered ores was measured in the same manner as Example 1. The results are collectively shown in Table 17.

Comparative Example 12

Raw materials for sinter (materials for iron manufacturing) having a composition shown as formulation O in Table 15 were prepared. Water was added to 69650 parts (in the absolute dry condition) of said raw materials for sinter (materials for iron manufacturing) to adjust them to 74492 parts (moisture content 6.5%). 74492 parts of the raw materials for sinter (moisture content 6.5%), 2100 parts of processed Mix dust B and 350 parts of heavy calcium carbonate having an average particle size of 7 μm were charged into a drum mixer. While mixing the mixture at a rotational speed of 24 $min^{-1}$, 462 parts of an aqueous solution of sodium polyacrylate with a weight average molecular weight of 6000 and had been preliminarily adjusted to the nonvolatile matter of 4.5% was sprayed (added) to said composition (raw materials for sinter) as a granulation agent for iron manufacturing by using an atomizer in approximately 1.5 minutes. The ratio of sodium polyacrylate relative to the raw materials for sinter was 0.03%. After the atomization, the above-mentioned composition (final composition for granulation), which had been added with a dispersant, was further stirred at a rotational speed of 24 $min^{-1}$ for 3 minutes to carry out granulation (pseudo-particle formation). Successively, the productivity of the sintered ores was measured in the same manner as Example 1. The results are collectively shown in Table 17.

Reference Example 10

The same processes as in Example 40 were carried out except that 350 parts of sodium citrate (product of Wako Pure Chemical Industries, Ltd., molecular weight 258) as (c) the chelating agent (granulation auxiliary agent) having a weight average molecular weight of not more than 1000 in accordance with the present invention was not used, and 400 parts of an aqueous solution of sodium polyacrylate with a weight average molecular weight of 6000 which had been adjusted to the nonvolatile matters of 5.2% was used as the granulation agent for iron manufacturing, and76partsof2-folddilutedproduct (18.5%) of the above polymer aqueous solution (H) was used as the polymer chelating reagent having a weight average molecular weight of greater than 1, 000 in combination, instead of 462 parts of an aqueous solution of sodium polyacrylate with a weight average molecular weight of 6, 000 which had been preliminarily adjusted to the nonvolatile matters of 4.5% as the granulation agent for iron manufacturing. Then, the productivity of the sintered ores was measured. Thus, the ratio of sodium polyacrylate relative to the raw materials for sinter was 0.03%, and 0.5% of a chelating reagent having a weight average molecular weight of more than 1, 000 was further used in combination. The results are collectively shown in Table 17.

Table 14

| Brand Name | Example 33 | Example 34 | Example 35 | Example 36 | Example 37 |
|---|---|---|---|---|---|
| | Formulation G | Formulation H | Formulation I | Formulation J | Formulation K |
| Mt. Newman iron ores | 12059 | 12059 | 12059 | 12059 | 12059 |

(continued)

| Brand Name | | Example 33 | Example 34 | Example 35 | Example 36 | Example 37 |
|---|---|---|---|---|---|---|
| | | Formulation G | Formulation H | Formulation I | Formulation J | Formulation K |
| Robe River iron ores | | 9706 | 9706 | 9706 | 9706 | 9706 |
| Carajas iron ores | | 7647 | 7647 | 7297 | 7647 | 7647 |
| Hamersley iron ores | | 6765 | 6765 | 6765 | 6765 | 6765 |
| Kudremukh PF | | 5882 | 5882 | 5882 | 5882 | 5882 |
| Rio Doce iron ores | | 2059 | 2059 | 2059 | 2059 | 2059 |
| Sintered ore fine | | 2941 | 2941 | 2941 | 2941 | 2941 |
| Serpentine | | 1176 | 1176 | 1176 | 826 | 826 |
| Silica sand | | 588 | 468 | 588 | 588 | 588 |
| Limestone | | 9650 | 10000 | 10000 | 10000 | 10000 |
| Return fine | | 8824 | 8824 | 8824 | 8824 | 8824 |
| Cokes breeze | | 2003 | 2003 | 2003 | 2003 | 2003 |
| Total of mixing | | 69300 | 69530 | 69300 | 69300 | 69300 |
| Dust | | Processed Mix dust B (I) | Processed Mix dust B (II) | Processed Mix dust B (III) | Processed Mix dust B (IV) | Mix dust B (V) |
| Materials for fine particle mixture | | Fine-particle mixture 6 | Fine-particle mixture 7 | Fine-particle mixture 8 | Fine-particle mixture 9 | Fine-particle mixture 10 |
| Raw materials for sinter for iron manufacturing | Cokes breeze | 350 | 350 | 350 | 350 | 350 |
| Fine particles | Cal. carbonate | 350 | - | - | - | - |
| | Fly ash | - | 210 | - | - | - |
| | Red iron oxide | - | - | 350 | - | - |
| | Talc | - | - | - | 350 | - |
| | Pulverized serpentinite | - | - | - | - | 350 |

Table 15

| Brand Name | Example 38 | Example 39 | Example 40 | Comparative Ex. 12 | Reference Ex. 10 |
|---|---|---|---|---|---|
| | Formulation L | Formulation M | Formulation N | Formulation O | Formulation N |
| Mt. Newman iron ores | 12059 | 12059 | 12059 | 12059 | 12059 |
| Robe River iron ores | 9706 | 9706 | 9706 | 9706 | 9706 |
| Carajas iron ores | 7647 | 7297 | 7297 | 7647 | 7297 |
| Hamersley iron ores | 6765 | 6765 | 6765 | 6765 | 6765 |

(continued)

| Brand Name | | Example 38 | Example 39 | Example 40 | Comparative Ex. 12 | Reference Ex. 10 |
|---|---|---|---|---|---|---|
| | | Formulation L | Formulation M | Formulation N | Formulation O | Formulation N |
| Kudremukh PF | | 5882 | 5882 | 5882 | 5882 | 5882 |
| Rio Doce iron ores | | 2059 | 2059 | 2059 | 2059 | 2059 |
| Sintered ore fine | | 2941 | 2941 | 2941 | 2941 | 2941 |
| Serpentine | | 826 | 1176 | 1176 | 1176 | 1176 |
| Silica and | | 588 | 588 | 588 | 588 | 588 |
| Limestone | | 10000 | 10000 | 9375 | 9650 | 9375 |
| Return fine | | 8824 | 8824 | 8824 | 8824 | 8824 |
| Cokes breeze | | 2003 | 2003 | 2003 | 2353 | 2003 |
| Total of mixing | | 69300 | 69300 | 68675 | 69650 | 68675 |
| Dust | | Mix dust B | Mix dust B | Mix dust B | Mix dust B | Mix dust B |
| Materials for fine particle mixture | | Fine particle mixture 6 | Fine particle mixture 8 | Fine particle mixture 9 | Non-mixed product | Fine particle mixture 9 |
| Raw materials for sinter for iron manufacturing | Cokes breeze | 350 | 350 | 350 | - | 350 |
| Fine particles | Cal. carbonate | 350 | - | - | 350 | - |
| | Red iron oxide | - | 350 | - | - | - |
| | Talc | - | - | 350 | - | 350 |
| Burnt lime | | - | - | 350 | - | 350 |

Table 16

| Brand Name | Example 33 | Example 34 | Example 35 | Example 36 | Example 37 |
|---|---|---|---|---|---|
| Fine-particle mixture | Fine particle mixture 6 | Fine particle mixture 7 | Fine particle mixture 8 | Fine particle mixture 9 | Fine particle mixture 10 |
| Composition of fine particle mixture | Cokes breeze /Calcium carbonate | Cokes breeze /Fly ash | Cokes breeze /Red iron oxide | Cokes breeze/ Tale | Cokes breeze /Pulverized serpentinite |
| Mixing ratio of fine particles (Cokes breeze/ Fine particles) | 0.5/0.5 | 0.5/0.3 | 0.5/0.5 | 0.5/0.5 | 0.5/0.5 |

(continued)

| Brand Name | Example 33 | Example 34 | Example 35 | Example 36 | Example 37 |
|---|---|---|---|---|---|
| Addition amount of fine particle mixture (to the entire raw materials for sinter for iron manufacturing) (%) | 1.0 | 0.8 | 1.0 | 1.0 | 1.0 |
| Ratio of raw materials for sinter for iron manufacturing mixed with fine particles (to the entire raw materials for sinter for iron manufacturing) (%) | 0.49 | 0.49 | 0.49 | 0.49 | 0.49 |
| Dust treating agent/ Addiction amount (%) (to the entire raw materials for sinter for iron manufacturing) | Carbon dioxide /0.13% | Maleic acid/0.2% | Sodium carbonate /0,1% | Polymer(H) /0.02°k | Polyethylene glycol/0.02% |
| Productivity (t/day/$m^2$) | 29.9 | 28.5 | 29.7 | 28.6 | 28.0 |

Table 17

| Brand Name | Example 38 | Example 39 | Example 40 | Comparative Ex. 12 | Reference Ex. 10 |
|---|---|---|---|---|---|
| Fine-particle mixture | Fine particle mixture 6 | Fine particle mixture 8 | Fine particle mixture 9 | - | Fine particle mixture 9 |
| Composition of fine particle mixture | Cokes breeze /Cal. carbonate | Cokes breeze /Red iron oxide | Cokes breeze/ Talc | - | Cokes breeze/ Talc |
| Mixing ratio of fine particles (Cokes breeze/ Fine particles) | 0.5/0.5 | 0.5/0.3 | 0.5/0.5 | - | 0.5/0.5 |

(continued)

| Brand Name | Example 38 | Example 39 | Example 40 | Comparative Ex. 12 | Reference Ex. 10 |
|---|---|---|---|---|---|
| Addition amount of fine particle mixture (to the entire raw materials for sinter for iron manufacturing) (%) | 1.0 | 0.8 | 1.0 | - | 1.0 |
| Ratio of raw materials for sinter for iron manufacturing mixed with fine particles (to the entire raw materials for sinter for iron manufacturing) (%) | 0.49 | 0.49 | 0.49 | - | 0.49 |
| Burnt lime | - | - | - | - | - |
| Dust treating agent/ Addition amount (%) (to the entire raw materials for sinter for iron manufacturing) | Sodium carbonate/0.1 | Sodium hydroxide/0.1% | Sodium citrate/ 0.5% | - | Polymer (H) /0.02% |
| Productivity (t/day/$m^2$) | 29.5 | 29.7 | 28.5 | 26.4 | 27.2 |

INDUSTRIAL APPLICABILITY

The granulation method of raw materials for sinter for iron manufacturing according to the present invention, which has the constitution mentioned above, is effectively used for granulating raw material for sinter for iron manufacturing such as iron ore fines, in manufacturing sintered ore that form raw materials for a blast furnace charge in a pig ironmakingprocess, and makes it possible to sufficiently improve the productivity of a sintering machine.

## Claims

**1.** A method of granulation of a sintering material for iron manufacturing containing powder iron ore comprising a process for carrying out granulation by preliminary diluting fine particles having an average particle size of not more than 200 μm to one portion of a solvent or a sintering material and adding the resulting material to the rest of the sintering material,
wherein said method of granulation further comprises the addition of a polymer having a weight average molecular weight of 1,000 to 100.000 and having at least one species of group selected from the group consisting of a carboxyl group a sulfonic acid group and salts thereof, and
wherein said granulation is at least one process selected from the group consisting of the following (1), (2) and (3):

(1) a process for carrying out granulation which comprises mixing said fine particles and water so as to form a slurry having a viscosity of 0.005 to 10 Pa·s, and then adding the slurry to the sintering material,

(2) a process for carrying out granulation which comprises preliminarily granulating said fine particles with 13 to 60 % by mass amount of a sintering material comprising iron ore as an essential component as measured in the dried state, and then adding said granulated product to the rest of the sintering material, and
(3) a process for carrying out granulation which comprises preliminary mixing said fine particles with 0.3 to 10 % by mass amount of the sintering material as measured in the dried state.

**2.** The method of granulation of a sintering material for iron manufacturing according to claim 1,
which comprises the addition of 0.05 to 80 % by mass of the fine particles having an average particle size of not more than 200 μm with respect to the sintering material.

**3.** The method of granulation of a sintering material for iron manufacturing according to claim 1 or 2,
which comprises the addition of 0.001 to 2 % by mass of the polymer with respect to the sintering material.

**4.** The method of granulation of a sintering material for iron manufacturing according to claim 1, 2 or 3,
wherein the polymer having at least one species of group selected from the group consisting of a carboxyl group, a sulfonic acid group and salts thereof is formed by polymerizing a monomer composition which comprises at least one species of monomer selected from the group consisting of a monomer having a carboxyl group, a monomer having a sulfonic acid group and a monomer having a salt thereof.

**5.** The method of granulation of a sintering material for iron manufacturing according to claim 1, 2, 3 or 4,
wherein the granulation is carried out in the state that the ratio of particles having a particle size of 1 to 10 μm contained in the entire amount of limestone in the sintering material is 3 to 50 % by mass as measured in the dried state.

**6.** The method of granulation of a sintering material for iron manufacturing according to claim 1, 2, 3, 4 or 5,
wherein the granulation is carried out by mixing 5 to 50 % by mass of Mara mamba powder iron ore with respect to the entire mass of a material (new material) in which fuel and return ore have been removed from the sintering material.

**7.** The method of granulation of a sintering material for iron manufacturing according to claim 1, 2, 3, 4, 5 or 6,
wherein the granulation is carried out by further preliminarily mixing one portion of dust, slag and return ore contained in the sintering material with at least one species of compound selected from the group consisting of (a) an acid, (b) carbon dioxide, (c) a chelating agent having a weight-average molecular weight of not more than 1000, (d) a polymer chelating agent, (e) a polymer having a weight-average molecular weight of not less than 20, 000, and (f) a low molecular compound having a molecular weight of less than 500 that is an alkali metal salt and/or an ammonium salt of acid, and then adding said mixture to the rest of the sintering material.

**8.** The method of granulation of a sintering material for iron manufacturing according to claim 1, 2, 3, 4, 5, 6 or 7,
wherein the granulation is further carried out in the presence of at least one species of compound selected from the group consisting of: an acid, carbon dioxide, a chelating agent having a weight-average molecular weight of not more than 1,000, sodium hydroxide, potassium hydroxide, and a low molecular compound having a molecular weight of less than 500 that is an alkali metal salt and/or an ammonium salt of acid.

## Patentansprüche

**1.** Granulierverfahren eines Sintermaterials zur Eisenherstellung, welches Eisenerzpulver enthält, umfassend ein Verfahren zur Ausführung von Granulieren durch Vorverdünnen von Feinpartikeln mit einer durchschnittlichen Partikelgröße von nicht mehr als 200 μm zu einem Teil eines Lösungsmittels oder eines Sintermaterials und Zugeben des resultierenden Materials zum Rest des Sintermaterials,
wobei das Granulierverfahren ferner die Zugabe eines Polymers umfaßt, mit einem Durchschnittsmolekulargewicht von 1.000 bis 100.000 und wenigstens einer Spezies einer Gruppe, die aus der aus einer Carboxylgruppe, einer Sulfonsäuregruppe und Salzen davon bestehenden Gruppe gewählt ist, und
wobei das Granulieren wenigstens ein Verfahren ist, das aus der aus den folgenden (1), (2) und (3) bestehenden Gruppe gewählt ist:

(1) ein Verfahren zur Ausführung von Granulieren, welches Mischen der Feinpartikel und Wasser umfaßt, um eine Suspension mit einer Viskosität von 0,005 bis 10 Pa.s zu bilden, und dann Zugeben der Suspension zu dem Sintermaterial,
(2) ein Verfahren zur Ausführung von Granulieren, welches Vorgranulieren der Feinpartikel mit einer wie im

Trockenzustand gemessenen Menge von 13 bis 60 Masse-% eines Sintermaterials umfaßt, welches Eisenerz als einen wesentlichen Bestandteil umfaßt, und dann Zugeben des granulierten Produktes zum Rest des Sintermaterials, und
(3) ein Verfahren zur Ausführung von Granulieren, welches Vormischen der Feinpartikel mit einer wie im Trockenzustand gemessenen Menge von 0,3 bis 10 Masse-% des Sintermaterials umfaßt.

**2.** Granulierverfahren eines Sintermaterials zur Eisenherstellung nach Anspruch 1,
welches die Zugabe von 0,05 bis 80 Masse-% der Feinpartikel mit einer durchschnittlichen Partikelgröße von nicht mehr als 200 μm bezüglich des Sintermaterials umfaßt.

**3.** Granulierverfahren eines Sintermaterials zur Eisenherstellung nach Anspruch 1 oder 2,
welches die Zugabe von 0,001 bis 2 Masse-% des Polymers bezüglich des Sintermaterials umfaßt.

**4.** Granulierverfahren eines Sintermaterials zur Eisenherstellung nach Anspruch 1, 2 oder 3,
wobei das Polymer mit wenigstens einer Spezies einer Gruppe, die aus der aus einer Carboxylgruppe, einer Sulfonsäuregruppe und Salzen davon bestehenden Gruppe gewählt ist, gebildet ist durch Polymerisieren einer Monomerzusammensetzung, welche wenigstens eine Monomerspezies umfaßt, die aus der aus einem Monomer mit einer Carboxylgruppe, einem Monomer mit einer Sulfonsäuregruppe und einem Monomer mit einem Salz davon bestehenden Gruppe gewählt ist.

**5.** Granulierverfahren eines Sintermaterials zur Eisenherstellung nach Anspruch 1, 2, 3 oder 4,
wobei das Granulieren in dem Zustand ausgeführt wird, in dem das Verhältnis von Partikeln mit einer Partikelgröße von 1 bis 10 μm, welche in der Gesamtmenge von Kalkstein im Sintermaterial enthalten sind, wie im Trockenzustand gemessen, 3 bis 50 Masse-% beträgt.

**6.** Granulierverfahren eines Sintermaterials zur Eisenherstellung nach Anspruch 1, 2, 3, 4 oder 5,
wobei das Granulieren ausgeführt wird durch Mischen von 5 bis 50 Masse-% Marra-Mamba-Pulver-Eisenerz bezüglich der Gesamtmasse eines Materials (neues Material), in welchem Brennstoff und rückgeführtes Erz aus dem Sintermaterial entfernt worden sind.

**7.** Granulierverfahren eines Sintermaterials zur Eisenherstellung nach Anspruch 1, 2, 3, 4, 5 oder 6,
wobei das Granulieren ausgeführt wird durch weiteres Vormischen eines in dem Sintermaterial enthaltenen Teils Staub, Schlacke und rückgeführten Erzes mit wenigstens einer Verbindungsspezies, die aus der Gruppe gewählt ist, die besteht aus (a) einer Säure, (b) Kohlendioxid, (c) einem Chelatierungsmittel mit einem durchschnittlichen Molekulargewicht von nicht mehr als 1.000, (d) einem Polymerchelatierungsmittel, (e) einem Polymer mit einem durchschnittlichen Molekulargewicht von nicht mehr als 20.000 und (f) einer niedermolekularen Verbindung mit einem Molekulargewicht von weniger als 500, welche ein Alkalimetallsalz und/oder ein Ammoniumsalz einer Säure ist, und dann Zugeben des Gemisches zum Rest des Sintermaterials.

**8.** Granulierverfahren eines Sintermaterials zur Eisenherstellung nach Anspruch 1, 2, 3, 4, 5, 6 oder 7,
wobei das Granulieren ferner ausgeführt wird in Gegenwart wenigstens einer Verbindungsspezies, die aus der Gruppe ist gewählt, die besteht aus: einer Säure, Kohlendioxid, einem Chelatierungsmittel mit einem durchschnittlichen Molekulargewicht von nicht mehr als 1.000, Natriumhydroxid, Kaliumhydroxid und einer niedermolekularen Verbindung mit einem Molekulargewicht von weniger als 500, welche ein Alkalimetallsalz und/oder ein Ammoniumsalz einer Säure ist.

## Revendications

**1.** Procédé de granulation d'un matériau de frittage pour la fabrication du fer, contenant du minerai de fer en poudre, comprenant un procédé pour réaliser la granulation en diluant au préalable de fines particules ayant une taille particulaire moyenne non supérieure à 200 μm à une partie d'un solvant ou un matériau de frittage et en ajoutant le matériau résultant au reste du matériau de frittage,
dans lequel ledit procédé de granulation comprend en outre l'étape consistant à ajouter un polymère ayant un poids moléculaire moyen de 1 000 à 100 000 et ayant au moins une espèce du groupe choisi dans le groupe comprenant un groupe carboxyle, un groupe d'acide sulfonique et leurs sels, et
dans lequel ladite granulation est au moins un procédé choisi dans le groupe comprenant les procédés (1), (2) et (3) suivants :

(1) un procédé pour réaliser la granulation qui comprend les étapes consistant à mélanger lesdites particules fines et de l'eau afin de former une pâte ayant une viscosité de l'ordre de 0,005 à 10 Pa.s, et ajouter ensuite la pâte au matériau de frittage ;
(2) un procédé pour réaliser la granulation qui comprend les étapes consistant à granuler au préalable lesdites fines particules avec une quantité de 13 à 60 % en poids d'un matériau de frittage comprenant du minerai de fer en tant que composant essentiel, tel que mesuré à l'état séché, et ajouter ensuite ledit produit granulé au reste du matériau de frittage ; et
(3) un procédé pour réaliser la granulation qui comprend l'étape consistant à mélanger au préalable les fines particules avec une quantité de l'ordre de 0,3 à 10 % en masse du matériau de frittage, telle que mesurée à l'état séché.

**2.** Procédé de granulation d'un matériau de frittage pour la fabrication du fer selon la revendication 1, qui comprend l'étape consistant à ajouter de 0,05 à 80 % en poids de fines particules ayant une taille particulaire moyenne non supérieure à 200 μm par rapport au matériau de frittage.

**3.** Procédé de granulation d'un matériau de frittage pour la fabrication du fer selon la revendication 1 ou 2, qui comprend l'étape consistant à ajouter de 0,001 à 2 % en poids du polymère par rapport au matériau de frittage.

**4.** Procédé de granulation d'un matériau de frittage pour la fabrication du fer selon la revendication 1, 2 ou 3, dans lequel le polymère ayant au moins une espèce du groupe choisi parmi le groupe comprenant un groupe carboxyle, un groupe d'acide sulfonique et leurs sels est formé en polymérisant une composition monomère qui comprend au moins une espèce de monomère choisie dans le groupe comprenant un monomère ayant un groupe carboxyle, un monomère ayant un groupe d'acide sulfonique et un monomère ayant son sel.

**5.** Procédé de granulation d'un matériau de frittage pour la fabrication du fer selon la revendication 1, 2, 3 ou 4, dans lequel la granulation est réalisée dans l'état dans lequel le rapport des particules ayant une taille particulaire de 1 à 10 μm contenues dans toute la quantité de castine dans le matériau de frittage est de l'ordre de 3 à 50 % en poids, comme mesuré à l'état séché.

**6.** Procédé de granulation d'un matériau de frittage pour la fabrication du fer selon la revendication 1, 2, 3, 4 ou 5, dans lequel la granulation est réalisée en mélangeant de 5 à 50 % en poids de minerai de fer en poudre Mara mamba par rapport au poids total d'un matériau (nouveau matériau), dans lequel le combustible et le minerai de retour ont été retirés du matériau de frittage.

**7.** Procédé de granulation d'un matériau de frittage pour la fabrication du fer selon la revendication 1, 2, 3, 4, 5 ou 6, dans lequel la granulation est réalisée en mélangeant en outre au préalable une partie de poussière, de laitier et de minerai de retour contenus dans le matériau de frittage avec au moins des espèces de composés choisies dans le groupe comprenant (a) un acide, (b) du dioxyde de carbone, (c) un agent chélatant ayant un poids moléculaire moyen non supérieur à 1 000, (d) un agent chélatant polymère, (e) un polymère ayant un poids moléculaire moyen non inférieur à 20 000, et (f) un composé à faible poids moléculaire ayant un poids moléculaire inférieur à 500 qui est un sel de métal alcalin et/ou un sel d'ammonium d'acide, et ensuite en ajoutant ledit mélange au reste du matériau de frittage.

**8.** Procédé de granulation d'un matériau de frittage pour la fabrication du fer selon la revendication 1, 2, 3, 4, 5, 6 ou 7, dans lequel la granulation est en outre réalisée en présence d'au moins une espèce de composé choisie dans le groupe comprenant : un acide, un dioxyde de carbone, un agent chélatant ayant un poids moléculaire moyen non supérieur à 1 000, de l'hydroxyde de sodium, de l'hydroxyde de potassium et un composé à faible poids moléculaire ayant un poids moléculaire inférieur à 500 qui est un sel de métal alcalin et/ou un sel d'ammonium d'acide.

Fig.1

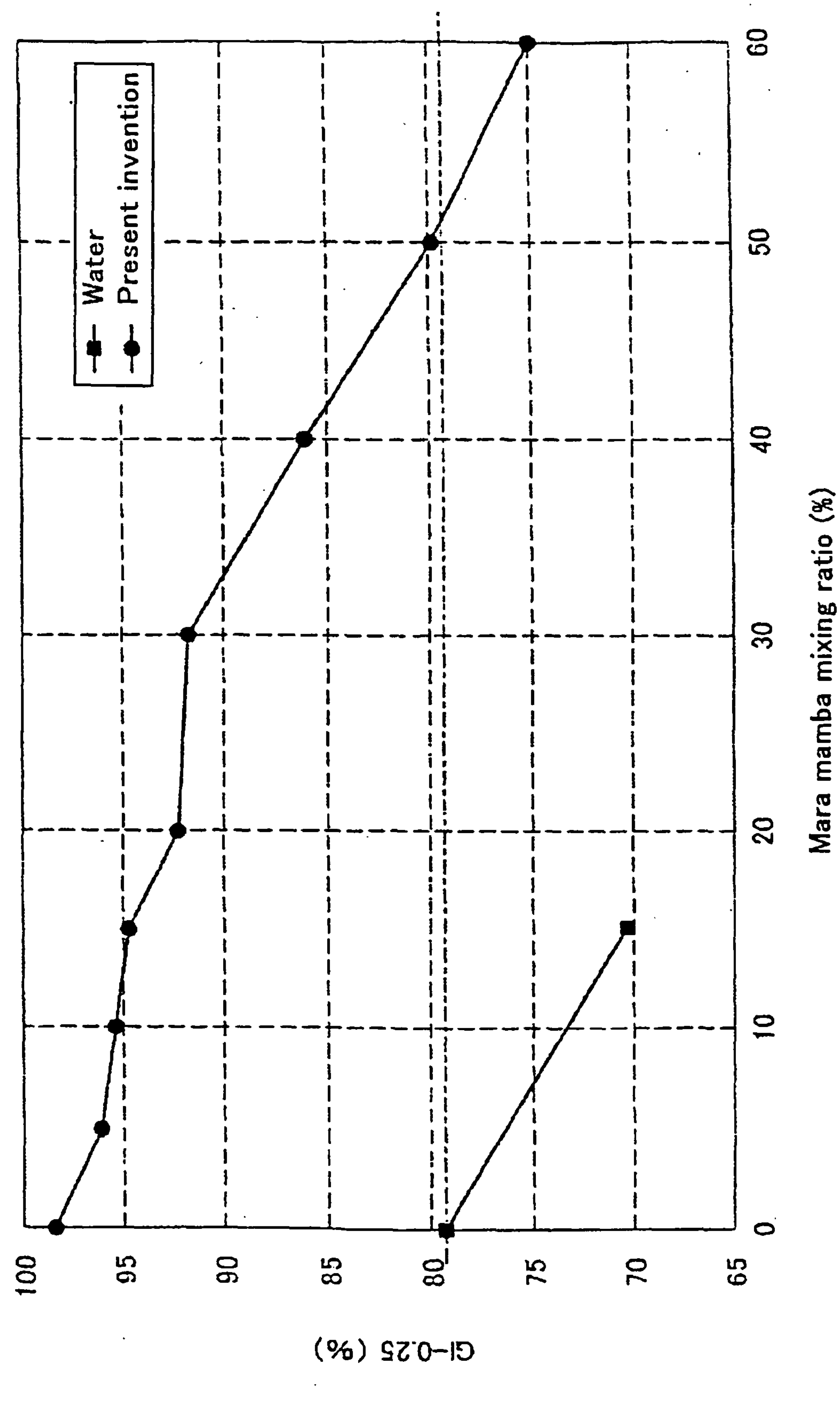
Water
Present invention
Mara mamba mixing ratio (%)
GI-0.25 (%)
0
10
20
30
40
50
60
100
95
90
85
80
75
70
65

Fig. 2

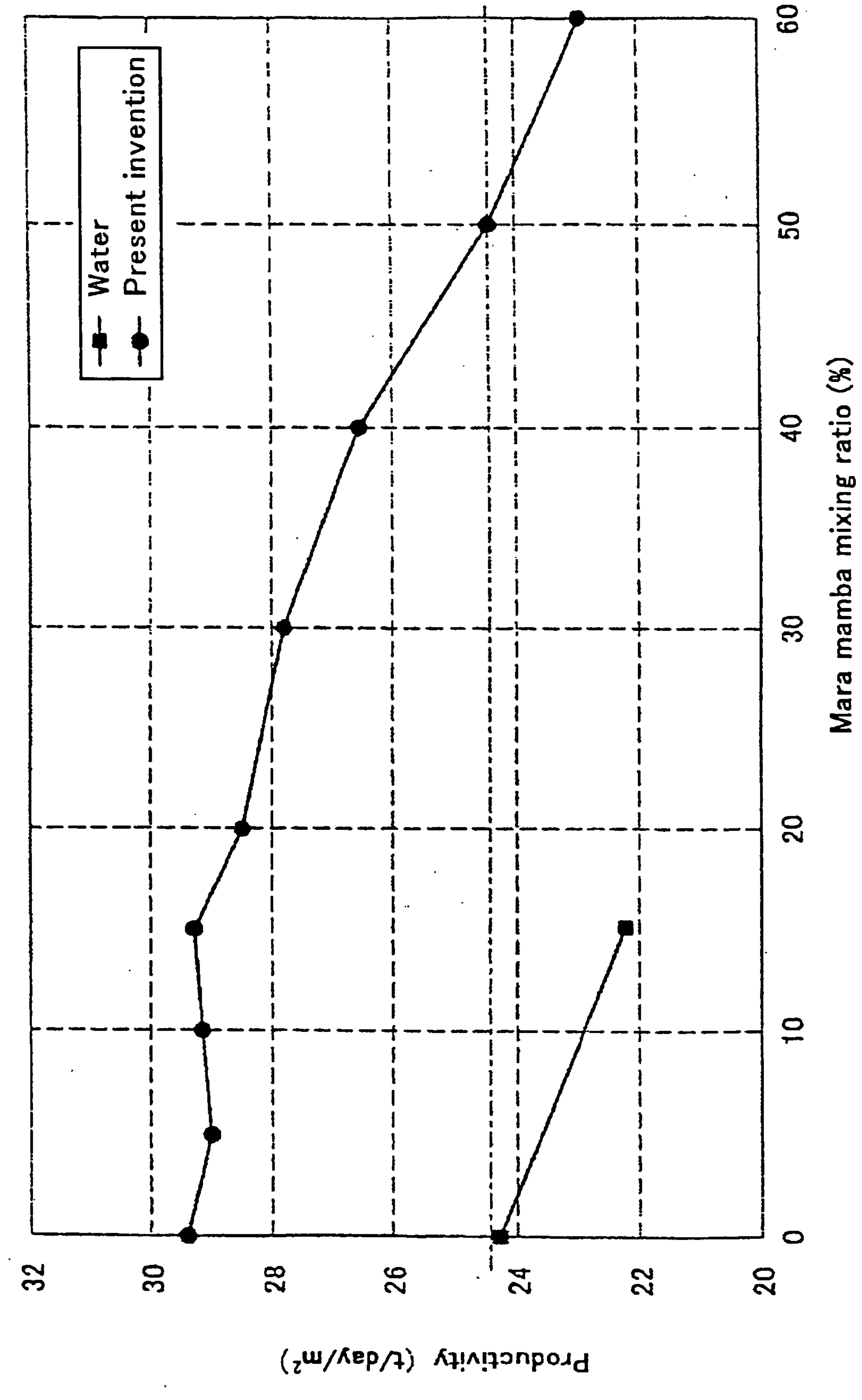
Water
Present invention
Mara mamba mixing ratio (%)
Productivity (t/day/m2)
0
10
20
30
40
50
60
32
30
28
26
24
22
20

Fig.3

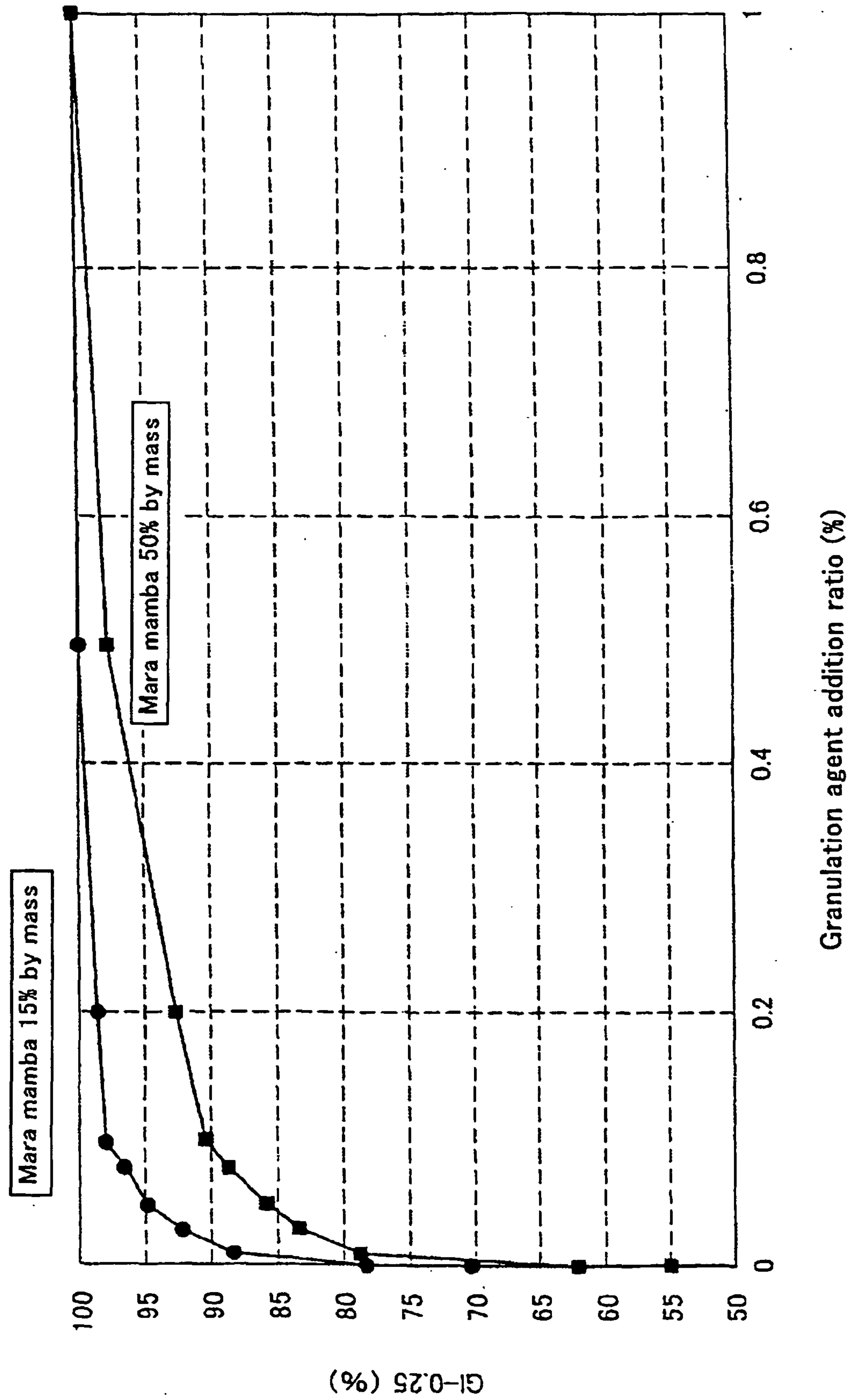
Mara mamba 15% by mass
Mara mamba 50% by mass
Granulation agent addition ratio (%)
0
0.2
0.4
0.6
0.8
1
GI-0.25 (%)
100
95
90
85
80
75
70
65
60
55
50

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP SHO6320288 B
- JP 3058015 B
- JP SHO5950129 B
- JP SHO6161630 B
- JP HEI10502417 B
- WO 02066688 A
- JP SHO52117820 B
- JP HEI3183729 B
- JP HEI525556 B
- JP SHO5725622 B
- JP SHO5249905 B
- JP SHO5249906 B
- JP KOKAISHO5249906 A
- JP HEI59601 B
- JP SHO6314933 B
- JP SHO63149334 B
- JP SHO63149336 B
- JP 2000178662 A
- US 6384126 B
- JP 10317069 A


### Non-patent literature cited in the description


- Tetsu-to-Hagane. *Fukuyama,* 1987, vol. 73, 62